# EUROPEAN PATENT SPECIFICATION

(11) **EP 3 275 971 B1**
(45) Date of publication and mention of the grant of the patent: **19.12.2018**
(21) Application number: 17181768.7
(22) Date of filing: 18.07.2017
(51) Int. Cl.: C09K 19/30, C09K 19/32, C09K 19/34, C09K 19/04

(54) **LIQUID CRYSTAL COMPOUND HAVING DIFLUOROMETHYLENEOXY GROUP, LIQUID CRYSTAL COMPOSITION, AND LIQUID CRYSTAL DISPLAY DEVICE**
FLÜSSIGKRISTALLVERBINDUNG MIT DIFLUORMETHYLENOXYGRUPPE, FLÜSSIGKRISTALLZUSAMMENSETZUNG UND FLÜSSIGKRISTALLANZEIGEVORRICHTUNG
COMPOSÉ À CRISTAUX LIQUIDES AYANT UN COMPOSÉ TERCYCLOHEXYLE, COMPOSITION À CRISTAUX LIQUIDES ET AFFICHEUR À CRISTAUX LIQUIDES

(30) Priority: 27.07.2016 JP 2016147367
(43) Date of publication of application: 31.01.2018
(73) Proprietor: JNC Corporation, Chiyoda-ku Tokyo 100-8105 (JP); JNC Petrochemical Corporation, Tokyo 100-0004 (JP)
(72) Inventor: TAKATA, Akihiro, Chiba, Chiba 290-8551 (JP)
(74) Representative: Thurston, Joanna

(56) References cited:
- EP-A1- 0 786 509
- EP-A1- 0 844 229
- EP-A1- 2 116 522
- DE-A1- 19 943 359

## Description

### Technical Field

The invention relates to a liquid crystal compound, a liquid crystal composition and a liquid crystal display device. More specifically, the invention relates to a liquid crystal compound having a difluoromethyleneoxy group, a liquid crystal composition containing the compound and having a nematic phase, and a liquid crystal display device including the composition.

### Background Art

A liquid crystal display device has been widely utilized in a display of a personal computer, a television or the like. The device utilizes physical properties such as optical anisotropy and dielectric anisotropy of a liquid crystal compound. As an operating mode of the liquid crystal display device, such a mode is known as a phase change (PC) mode, a twisted nematic (TN) mode, a super twisted nematic (STN) mode, a bistable twisted nematic (BTN) mode, an electrically controlled birefringence (ECB) mode, an optically compensated bend (OCB) mode, an in-plane switching (IPS) mode, a vertical alignment (VA) mode, a fringe field switching (FFS) mode and a polymer sustained alignment (PSA) mode. In the device having the PSA mode, a liquid crystal composition containing a polymer is used. In the composition, alignment of liquid crystal molecules can be controlled by the polymer.

In such a liquid crystal display device, a liquid crystal composition having suitable physical properties is used. In order to further improve characteristics of the device, the liquid crystal compound contained in the composition preferably has physical properties described in (1) to (9) below. (1) High stability to heat, light and so forth, (2) a high clearing point, (3) low minimum temperature of a liquid crystal phase, (4) small viscosity (η), (5) suitable optical anisotropy (Δn), (6) large dielectric anisotropy (Δε), (7) a suitable elastic constant (K), (8) excellent compatibility with other liquid crystal compounds, and (9) a large dielectric constant (ε⊥) in a minor axis direction.

An effect of the physical properties of the liquid crystal compound on the characteristics of the device is as described below. A compound having the high stability to heat, light and so forth as described in (1) increases a voltage holding ratio of the device. Therefore, a service life of the device becomes long. A compound having the high clearing point as described in (2) extends a temperature range in which the device can be used. A compound having the low minimum temperature of the liquid crystal phase such as the nematic phase and a smectic phase, as described in (3), in particular, a compound having the low minimum temperature of the nematic phase, also extends the temperature range in which the device can be used. A compound having the small viscosity as described in (4) shortens a response time of the device.

A compound having the suitable optical anisotropy as described in (5), namely the compound having large optical anisotropy or small optical anisotropy is required according to a design of the device. When the response time is shortened by decreasing a cell gap of the device, the compound having the large optical anisotropy is suitable. A compound having the large dielectric anisotropy as described in (6) decreases a threshold voltage of the device. Thus, an electric power consumption of the device is decreased. On the other hand, a compound having small dielectric anisotropy shortens the response time of the device by decreasing viscosity of the composition. The compound extends the temperature range in which the device can be used by increasing the maximum temperature of the nematic phase.

With regard to (7), a compound having a large elastic constant shortens the response time of the device. A compound having a small elastic constant decreases the threshold voltage of the device. Therefore, the suitable elastic constant is required according to the characteristics to be desirably improved. A compound having the excellent compatibility with other liquid crystal compounds as described in (8) is preferred. The reason is that the physical properties of the composition are adjusted by mixing liquid crystal compounds having different physical properties.

Further, an improvement of a transmittance in the liquid crystal composition has been strongly required in connection with a demand for achieving a low power consumption and a high definition in the liquid crystal display device in recent years. Above all, the transmittance in the liquid crystal composition used for an FFS mode liquid crystal display device is known to be correlated with the dielectric constant (ε⊥) in the minor axis direction of the liquid crystal composition, and therefore a liquid crystal compound having the large dielectric constant in the minor axis direction as described in (9) is preferred.

A variety of liquid crystal compounds each having the large dielectric anisotropy have so far been synthesized. A variety of liquid crystal compounds each having the large optical anisotropy have also so far been synthesized because good physical properties that are not found in the conventional compounds are expected for a new compound, or because the new product provides at least two physical properties with a suitable balance in the composition in several cases. Under such circumstances, desire has been expressed a compound having excellent physical properties and the suitable balance regarding the physical properties (1) to (9) described above.

Patent literature No. 3 describes, in the paragraph 0118, the compound described below. 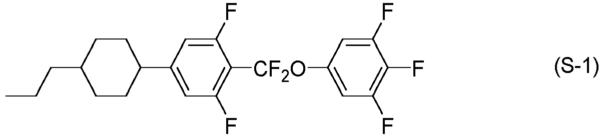 Patent literature No. 4 describes, in the examples, compounds such as 3O1-HB(F,F)CF₂OB(F,F)-C.

### Citation List

### Patent Literature

Patent literature No. 1: WO 1996/011897 A.
Patent literature No. 2: JP H10-204016 A.
Patent literature No. 3: JP H10-251186 A.
Patent literature No. 4: DE 199 43 359 A1.

### Summary of Invention

### Technical Problem

A first object is to provide a liquid crystal compound satisfying at least one of physical properties such as high stability to heat and light, a high clearing point (or high maximum temperature of a nematic phase), low minimum temperature of a liquid crystal phase, small viscosity, suitable optical anisotropy, large dielectric anisotropy, a large dielectric constant in a minor axis direction, a suitable elastic constant and excellent compatibility with other liquid crystal compounds. The object is to provide a compound having both particularly large dielectric anisotropy and the large dielectric constant in the minor axis direction. A second object is to provide a liquid crystal composition that contains the compound and satisfies at least one of physical properties such as high stability to heat and light, high maximum temperature of the nematic phase, low minimum temperature of the nematic phase, small viscosity, suitable optical anisotropy, large dielectric anisotropy, a large dielectric constant in a minor axis direction, large specific resistance and a suitable elastic constant. The object is to provide a liquid crystal composition having a suitable balance regarding at least two of the physical properties. A third object is to provide a liquid crystal display device including the composition and having a wide temperature range in which the device can be used, a short response time, a large voltage holding ratio, low threshold voltage, a large contrast ratio, a small flicker rate and a long service life.

### Solution to Problem

The invention relates to a compound represented by formula (1), a liquid crystal composition containing the compound, and a liquid crystal display device including the composition.

A compound, represented by formula (1) : 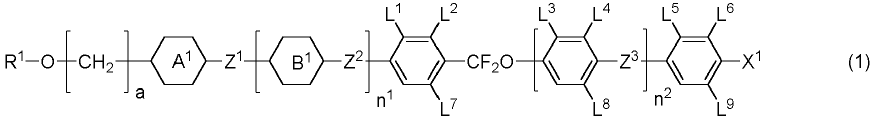 wherein, in formula (1),
R¹ is alkyl having 1 to 12 carbons, and in the alkyl, at least one piece of -CH₂- may be replaced by -O-, in which a case where two pieces of -O- are adjacent is excluded, at least one piece of -CH₂CH₂- may be replaced by -CH=CH- or -C≡C-, and in the groups, at least one hydrogen may be replaced by halogen;
ring A¹ is 1,4-cyclohexylene or 1,4-cyclohexenylene;
ring B¹ is 1,4-cyclohexylene, 1,4-cyclohexenylene, 1,4-phenylene, or 1,4-phenylene in which at least one hydrogen is replaced by halogen, and at least one hydrogen directly bonded to the rings may be replaced by halogen;
Z¹, Z² and Z³ are independently a single bond, -CH₂CH₂-, -C≡C-, -CH=CH-, -CF=CF-, -CF₂O-, -OCF₂-, -CH₂O- or -OCH₂-;
L¹, L², L³, L⁴, L⁵, L⁶, L⁷, L⁸ and L⁹ are independently hydrogen or halogen;
X¹ is fluorine, chlorine, -CF₃, -CHF₂, -CH₂F, -OCHF₂, -OCH₂F or -OCF₃;
a is 1, 2 or 3; and
n¹ is 0 or 1, n² is 0 or 1, and a sum of n¹ and n² is 0 or 1.

### Advantageous Effects of Invention

A first advantage is to provide a liquid crystal compound satisfying at least one of physical properties such as high stability to heat and light, a high clearing point (or high maximum temperature of a nematic phase), low minimum temperature of a liquid crystal phase, small viscosity, suitable optical anisotropy, large dielectric anisotropy, a large dielectric constant in a minor axis direction, a suitable elastic constant and excellent compatibility with other liquid crystal compounds. The advantage is to provide a compound having both particularly large dielectric anisotropy and the large dielectric constant in the minor axis direction (see Comparative Example 1 or Comparative Example 2). A second advantage is to provide a liquid crystal composition that contains the compound and satisfies at least one of physical properties such as high stability to heat and light, high maximum temperature of the nematic phase, low minimum temperature of the nematic phase, small viscosity, suitable optical anisotropy, large dielectric anisotropy, a large dielectric constant in a minor axis direction, large specific resistance and a suitable elastic constant. The advantage is to provide a liquid crystal composition having a suitable balance regarding at least two of the physical properties. A third advantage is to provide a liquid crystal display device including the composition and having a wide temperature range in which the device can be used, a short response time, a large voltage holding ratio, low threshold voltage, a large contrast ratio, a small flicker rate and a long service life.

### Description of Embodiments

Usage of terms herein is as described below. Terms "liquid crystal compound," "liquid crystal composition" and "liquid crystal display device" may be occasionally abbreviated as "compound," "composition" and "device," respectively. "Liquid crystal compound" is a generic term for a compound having a liquid crystal phase such as a nematic phase and a smectic phase, and a compound having no liquid crystal phase but to be added for the purpose of adjusting physical properties of a composition, such as maximum temperature, minimum temperature, viscosity and dielectric anisotropy. The compound has a six-membered ring such as 1,4-cyclohexylene and 1,4-phenylene, and has rod-like molecular structure. "Liquid crystal display device" is a generic term for a liquid crystal display panel and a liquid crystal display module. "Polymerizable compound" is a compound to be added for the purpose of forming a polymer in the composition.

The liquid crystal composition is prepared by mixing a plurality of liquid crystal compounds. An additive is added to the composition for the purpose of further adjusting the physical properties. The additive such as the polymerizable compound, a polymerization initiator, a polymerization inhibitor, an optically active compound, an antioxidant, an ultraviolet light absorber, a light stabilizer, a heat stabilizer, a dye and an antifoaming agent is added when necessary. The liquid crystal compound and the additive are mixed in such a procedure. A proportion (content) of the liquid crystal compounds is expressed in terms of weight percent (% by weight) based on the weight of the liquid crystal composition containing no additive, even when the additive has been added. A proportion (amount of addition) of the additive is expressed in terms of weight percent (% by weight) based on the weight of the liquid crystal composition containing no additive. Weight parts per million (ppm) may be occasionally used. A proportion of the polymerization initiator and the polymerization inhibitor is exceptionally expressed based on the weight of the polymerizable compound.

"Clearing point" is a transition temperature between the liquid crystal phase and an isotropic phase in the liquid crystal compound. "Minimum temperature of the liquid crystal phase" is a transition temperature between a solid and the liquid crystal phase (the smectic phase, the nematic phase or the like) in the liquid crystal compound. "Maximum temperature of the nematic phase" is a transition temperature between the nematic phase and the isotropic phase in a mixture of the liquid crystal compound and a base liquid crystal or in the liquid crystal composition, and may be occasionally abbreviated as "maximum temperature." "Minimum temperature of the nematic phase" may be occasionally abbreviated as "minimum temperature." An expression "increase the dielectric anisotropy" means that a value of dielectric anisotropy positively increases in a composition having positive dielectric anisotropy, and the value of dielectric anisotropy negatively increases in a composition having negative dielectric anisotropy. An expression "having a large voltage holding ratio" means that the composition has a large voltage holding ratio at room temperature and also at a temperature close to the maximum temperature in an initial stage, and the composition has the large voltage holding ratio at room temperature and also at a temperature close to the maximum temperature even after the device has been used for a long period of time. In the composition or the device, characteristics are studied before and after a temporal change test (including an accelerated deterioration test) in several cases.

A compound represented by formula (1) may be occasionally abbreviated as "compound (1)." At least one compound selected from the group of compounds represented by formula (1) may be occasionally abbreviated as "compound (1)." "Compound (1)" means one compound, a mixture of two compounds or a mixture of three or more compounds represented by formula (1) . A same rule applies also to any other compound represented by any other formula. In formulas (1) to (15), symbols such as A¹, B¹ and C¹ surrounded by a hexagonal shape correspond to rings such as ring A , ring B¹ and ring C¹, respectively. The hexagonal shape represents a six-membered ring such as cyclohexane or benzene. The hexagonal shape may occasionally represent a fused ring such as naphthalene or a bridged ring such as adamantane.

A symbol of terminal group R¹¹ is used in a plurality of compounds in chemical formulas of component compounds. In the compounds, two groups represented by two pieces of arbitrary R¹¹ may be identical or different. In one case, for example, R¹¹ of compound (2) is ethyl and R¹¹ of compound (3) is ethyl. In another case, R¹¹ of compound (2) is ethyl and R¹¹ of compound (3) is propyl. A same rule applies also to a symbol such as R¹², R¹³ and Z¹¹. In compound (8), when i is 2, two pieces of ring D¹ exist. In the compound, two groups represented by the two pieces of ring D¹ may be identical or different. When i is larger than 2, a same rule applies also to two pieces of arbitrary D¹. A same rule applies also to any other symbol.

An expression "at least one piece of 'A'" means that the number of 'A' is arbitrary. An expression "at least one of 'A' may be replaced by 'B'" means that when the number of 'A' is 1, a position of 'A' is arbitrary, and when the number of 'A' is 2 or more, positions thereof can be selected without restriction. A same rule applies also to an expression "at least one piece of 'A' is replaced by 'B'." An expression "at least one piece of 'A' may be replaced by 'B', 'C' or 'D' " includes a case where arbitrary 'A' is replaced by 'B', a case where arbitrary 'A' is replaced by 'C', and a case where arbitrary 'A' is replaced by 'D', and also a case where a plurality of pieces of 'A' are replaced by at least two pieces of 'B', 'C' and/or 'D'. For example, "alkyl in which at least one piece of -CH₂- may be replaced by -O- or -CH=CH-" includes alkyl, alkoxy, alkoxyalkyl, alkenyl, alkoxyalkenyl and alkenyloxyalkyl. In addition, a case where -CH₂- of a methyl part (-CH₂-H) is replaced by -O- to form -O-H is not preferred.

An expression "R¹¹ and R¹² are independently alkyl having 1 to 10 carbons or alkenyl having 2 to 10 carbons, and in the groups, at least one piece of -CH₂- may be replaced by -O-, and in the groups, at least one hydrogen may be replaced by fluorine" may be occasionally used. In the expression, a phrase "in the groups" may be literally construed. In the expression, "the groups" means alkyl, alkenyl, alkoxy, alkenyloxy or the like. More specifically, "the groups" expresses all of the groups described before the phrase "in the groups." The common-sense construe applies also to a phrase "in the monovalent groups" or "in the divalent groups." For example, "the monovalent groups" expresses all of the groups described before the phrase "in the monovalent groups."

Halogen means fluorine, chlorine, bromine and iodine. Preferred halogen is fluorine and chlorine. Further preferred halogen is fluorine. Alkyl of the liquid crystal compound is straight-chain alkyl or branched-chain alkyl, but includes no cyclic alkyl. In general, straight-chain alkyl is preferred to branched-chain alkyl. A same rule applies also to a terminal group such as alkoxy and alkenyl . With regard to a configuration of 1,4-cyclohexylene, trans is preferred to cis for increasing the maximum temperature. Then, 2-fluoro-1,4-phenylene means two divalent groups described below. In a chemical formula, fluorine may be leftward (L) or rightward (R). A same rule applies also to an asymmetrical divalent group formed by removing two hydrogens from a ring, such as tetrahydropyran-2,5-diyl.

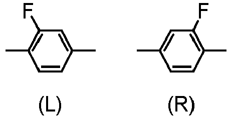

The invention includes items described below.

Item 1. A compound, represented by formula (1): 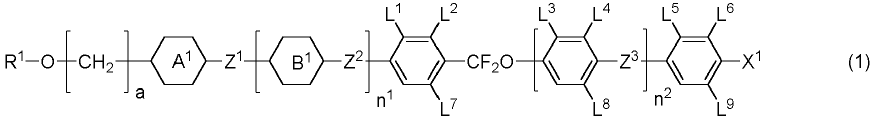 wherein, in formula (1),
R¹ is alkyl having 1 to 12 carbons, and in the R¹, at least one piece of -CH₂- may be replaced by -O-, in which a case where two pieces of -O- are adjacent is excluded, at least one piece of -CH₂CH₂- may be replaced by -CH=CH- or -C≡C-, and in the groups, at least one hydrogen may be replaced by halogen;
ring A¹ is 1,4-cyclohexylene or 1,4-cyclohexenylene;
ring B¹ is 1,4-cyclohexylene, 1,4-cyclohexenylene, 1,4-phenylene, or 1,4-phenylene in which at least one hydrogen is replaced by halogen, and in the rings, at least one hydrogen may be replaced by halogen;
Z¹, Z² and Z³ are independently a single bond, -CH₂CH₂-, -C≡C-, -CH=CH-, -CF=CF-, -CF₂O-, -OCF₂-, -CH₂O- or -OCH₂-;
L¹, L², L³, L⁴, L⁵, L⁶, L⁷, L⁸ and L⁹ are independently hydrogen or halogen;
X¹ is fluorine, chlorine, -CF₃, -CHF₂, -CH₂F, -OCHF₂, -OCH₂F or -OCF₃;
a is 1, 2 or 3; and
n¹ is 0 or 1; n² is 0 or 1; and a sum of n¹ and n² is 0 or 1.

Item 2. The compound according to item 1, wherein, in formula (1), R¹ is alkyl having 1 to 12 carbons, alkenyl having 2 to 12 carbons, alkoxyalkyl having 1 to 11 carbons or alkenyloxyalkyl having 2 to 11 carbons.

Item 3. The compound according to item 1, wherein, in formula (1), Z¹, Z² and Z³ are independently a single bond, -CH₂CH₂-, -C≡C-, -CH=CH- or -CF₂O-.

Item 4. The compound according to item 1, represented by any one of formulas (1-1) to (1-3): 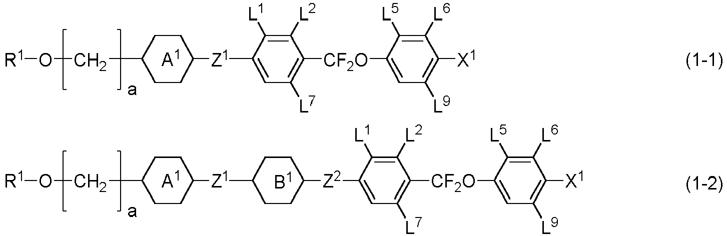 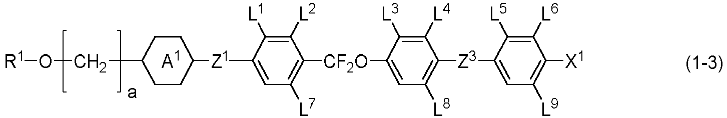 wherein, in formulas (1-1) to (1-3),
R¹ is alkyl having 1 to 12 carbons or alkenyl having 2 to 12 carbons;
ring A¹ is 1,4-cyclohexylene or 1,4-cyclohexenylene;
ring B¹ is 1,4-cyclohexylene, 1,4-cyclohexenylene, 1,4-phenylene, or 1,4-phenylene in which at least one hydrogen is replaced by halogen, and at least one hydrogen directly bonded to the rings may be replaced by fluorine;
Z¹, Z² and Z³ are independently a single bond, -CH₂CH₂-, -C≡C-, -CH=CH- or -CF₂O-;
L¹, L², L³, L⁴, L⁵, L⁶, L⁷, L⁸ and L⁹ are independently hydrogen or fluorine;
X¹ is fluorine, -CF₃ or -OCF₃; and
a is 1 or 2.

Item 5. The compound according to item 1, represented by any one of formulas (1-4) to (1-6): 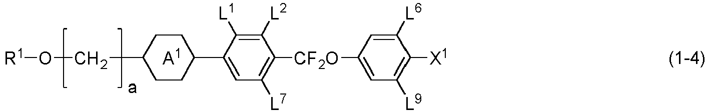 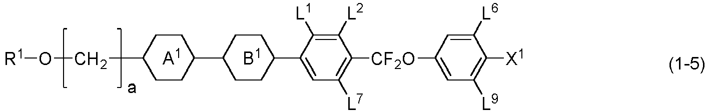 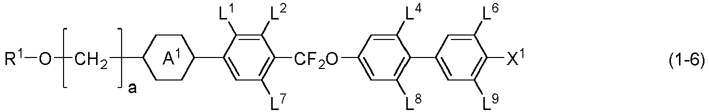 wherein, in formulas (1-4) to (1-6), R¹ is alkyl having 1 to 12 carbons or alkenyl having 2 to 12 carbons;
ring A¹ is 1,4-cyclohexylene or 1,4-cyclohexenylene;
ring B¹ is 1,4-cyclohexylene, 1,4-cyclohexenylene, 1,4-phenylene, 2-fluoro-1,4-phenylene or 2,6-difluoro-1,4-phenylene, and at least one hydrogen directly bonded to the rings may be replaced by fluorine;
L¹, L², L⁴, L⁶, L⁷, L⁸ and L⁹ are independently hydrogen or fluorine;
X¹ is fluorine, -CF₃ or -OCF₃; and
a is 1 or 2.

Item 6. The compound according to item 1, represented by any one of formulas (1-7) to (1-14): 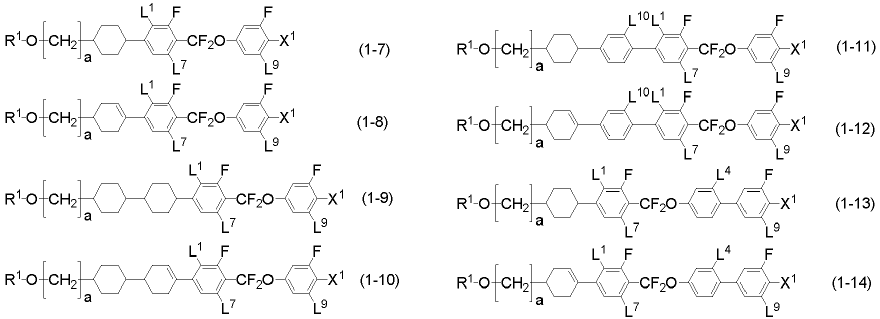 wherein, in formulas (1-7) to (1-14), R¹ is alkyl having 1 to 12 carbons or alkenyl having 2 to 12 carbons;
L¹, L⁴, L⁷, L⁹ and L¹⁰ are independently hydrogen or fluorine;
X¹ is fluorine, -CF₃ or -OCF₃; and
a is 1 or 2.

Item 7. The compound according to item 1, represented by any one of formulas (1-15) to (1-18): 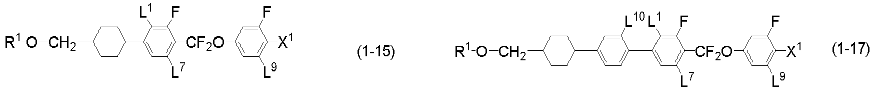 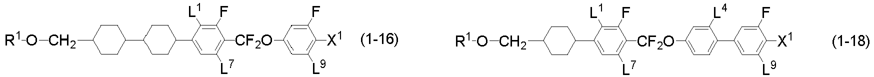 wherein, in formulas (1-15) to (1-18), R¹ is alkyl having 1 to 12 carbons or alkenyl having 2 to 12 carbons;
L¹, L⁴, L⁷, L⁹ and L¹⁰ are independently hydrogen or fluorine; and
X¹ is fluorine, -CF₃ or -OCF₃.

Item 8. A liquid crystal composition, containing at least one compound according to item 1.

Item 9. The liquid crystal composition according to item 8, further containing at least one compound selected from the group of compounds represented by formulas (2) to (4): 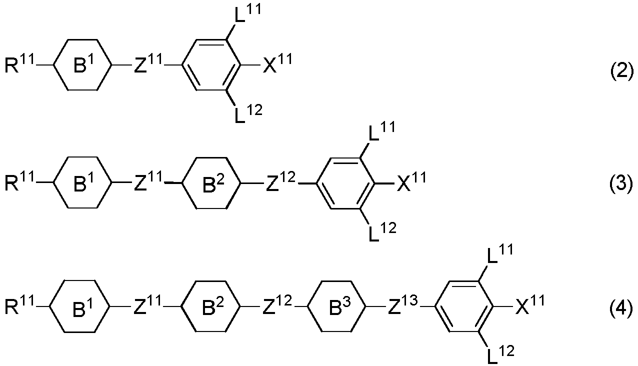 wherein, in formulas (2) to (4),
R¹¹ is alkyl having 1 to 10 carbons or alkenyl having 2 to 10 carbons, and in the R¹¹, at least one hydrogen may be replaced by fluorine, and in the groups, at least one piece of -CH₂- may be replaced by -O-, in which a case where two pieces of -O- are adjacent is excluded;
X¹¹ is fluorine, chlorine, -OCF₃, -OCHF₂, -CF₃, -CHF₂, -CH₂F, -OCF₂CHF₂ or -OCF₂CHFCF₃;
ring B¹, ring B² and ring B³ are independently 1,4-cyclohexylene, 1,4-phenylene, 1,4-phenylene in which at least one hydrogen is replaced by fluorine, tetrahydropyran-2,5-diyl, 1,3-dioxane-2,5-diyl or pyrimidine-2,5-diyl;
Z¹¹, Z¹² and Z¹³ are independently a single bond, -CH₂CH₂-, -CH=CH-, -C≡C-, -COO-, -CF₂O-, -OCF₂-, -CH₂O- or -(CH₂)₄-; and L¹¹ and L¹² are independently hydrogen or fluorine, in which,
when at least one of Z¹¹, Z¹² and Z¹³ is -CF₂O-, R¹¹ is alkyl having 1 to 10 carbons, alkenyl having 2 to 10 carbons, alkoxy having 1 to 9 carbons or alkenyloxy having 2 to 9 carbons, and in the groups, at least one hydrogen may be replaced by fluorine.

Item 10. The liquid crystal composition according to item 8, further containing at least one compound selected from the group of compounds represented by formula (5): 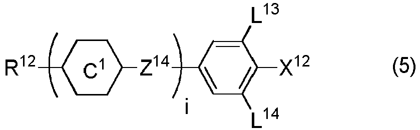 wherein, in formula (5),
R¹² is alkyl having 1 to 10 carbons or alkenyl having 2 to 10 carbons, and in the R¹², at least one hydrogen may be replaced by fluorine, and at least one piece of -CH₂- may be replaced by -O-, in which a case where two pieces of -O- are adjacent is excluded;
X¹² is -C≡N or -C≡C-CN;
ring C¹ is 1,4-cyclohexylene, 1,4-phenylene in which at least one hydrogen may be replaced by fluorine, tetrahydropyran-2,5-diyl, 1,3-dioxane-2,5-diyl or pyrimidine-2,5-diyl;
Z¹⁴ is a single bond, -CH₂CH₂-, -C≡C-, -COO-, -CF₂O-, -OCF₂- or -CH₂O-;
L¹³ and L¹⁴ are independently hydrogen or fluorine; and
i is 1, 2, 3 or 4.

Item 11. The liquid crystal composition according to item 8, further containing at least one compound selected from the group of compounds represented by formulas (6) to (12): 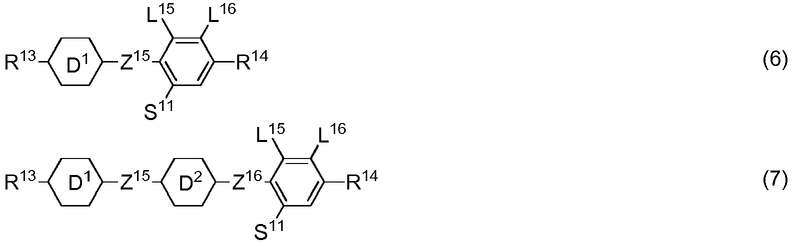 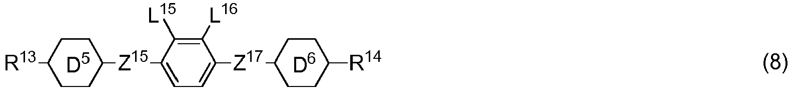 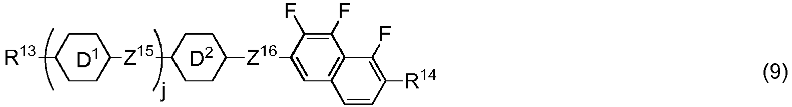 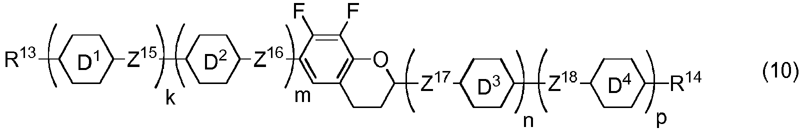 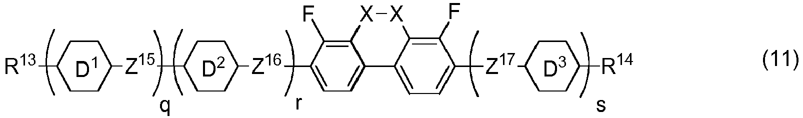 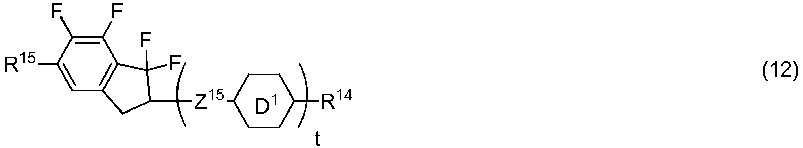 wherein, in formulas (6) to (12),
R¹³ and R¹⁴ are independently alkyl having 1 to 10 carbons or alkenyl having 2 to 10 carbons, and in the groups, at least one piece of -CH₂- may be replaced by -O-, in which a case where two pieces of -O- are adjacent is excluded, and at least one hydrogen may be replaced by fluorine;
R¹⁵ is hydrogen, fluorine, alkyl having 1 to 10 carbons or alkenyl having 2 to 10 carbons, and in the R¹⁵, at least one piece of -CH₂- may be replaced by -O-, in which a case where two pieces of -O- are adjacent is excluded, and at least one hydrogen may be replaced by fluorine;
S¹¹ is hydrogen or methyl;
X is -CF₂-, -O- or -CHF-;
ring D¹, ring D², ring D³ and ring D⁴ are independently 1,4-cyclohexylene, 1,4-cyclohexenylene, 1,4-phenylene in which at least one hydrogen may be replaced by fluorine, tetrahydropyran-2,5-diyl or decahydronaphthalene-2,6-diyl;
ring D⁵ and ring D⁶ are independently 1,4-cyclohexylene, 1,4-cyclohexenylene, 1,4-phenylene, tetrahydropyran-2,5-diyl or decahydronaphthalene-2,6-diyl;
Z¹⁵, Z¹⁶, Z¹⁷ and Z¹⁸ are independently a single bond, -CH₂CH₂-, -COO-, -CH₂O- or -OCF₂CH₂CH₂-;
L¹⁵ and L¹⁶ are independently fluorine or chlorine; and
j, k, m, n, p, q, r and s are independently 0 or 1, a sum of k, m, n and p is 1 or 2, a sum of q, r and s is 0, 1, 2 or 3 and t is 1, 2 or 3.

Item 12. The liquid crystal composition according to item 8, further containing at least one compound selected from the group of compounds represented by formulas (13) to (15): 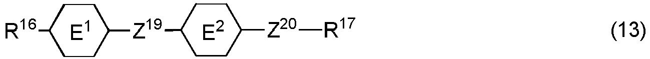 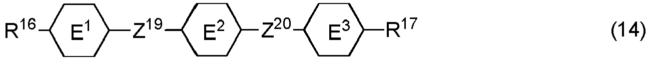 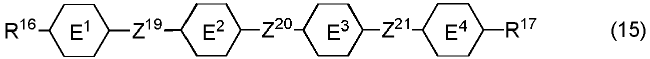 wherein, in formulas (13) to (15),
R¹⁶ and R¹⁷ are independently alkyl having 1 to 10 carbons or alkenyl having 2 to 10 carbons, and in the groups, at least one piece of -CH₂- may be replaced by -O-, in which a case where two pieces of -O- are adjacent is excluded, and in the groups, at least one hydrogen may be replaced by fluorine;
ring E¹, ring E², ring E³ and ring E⁴ are independently 1,4-cyclohexylene, 1,4-phenylene, 2-fluoro-1,4-phenylene, 2,5-difluoro-phenylene or pyrimidine-2,5-diyl; and
Z¹⁹, Z²⁰ and Z²¹ are independently a single bond, -CH₂CH₂-, -CH=CH-, -C≡C- or -COO-.

Item 13. The liquid crystal composition according to item 8, further containing at least one selected from the group of a polymerizable compound, an optically active compound, an antioxidant, an ultraviolet light absorber, a light stabilizer, a heat stabilizer and an antifoaming agent.

Item 14. A liquid crystal display device, including the liquid crystal composition according to item 8.

An aspect of compound (1), a synthesis method of compound (1), a liquid crystal composition, and a liquid crystal display device will be described in the order.

### 1. Aspect of compound (1)

Compound (1) of the invention has structure of an alkoxyalkyl group and a difluoromethyleneoxy group. Compound (1) has features of having larger dielectric anisotropy and a larger dielectric constant in the minor axis direction in comparison with a similar compound (see Comparative Example 2) . Preferred examples of compound (1) will be described. Preferred examples of a terminal group, a ring, a bonding group, and a substituent in compound (1) also apply to a subordinate formula of compound (1) . In compound (1), physical properties can be arbitrarily controlled by suitably combining the groups. Compound (1) may contain a larger amount of isotope such as ²H (deuterium) and ¹³C than the amount of natural abundance because no significant difference exists in the physical properties of the compound. In addition, symbols in compound (1) are defined according to item 1.

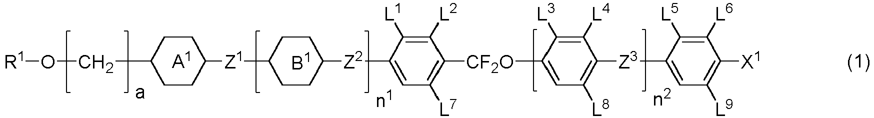

In formula (1), R¹ is alkyl having 1 to 12 carbons, and in the alkyl, at least one piece of -CH₂- may be replaced by -O-, in which a case where two pieces of -O- are adjacent is excluded, and at least one piece of -CH₂CH₂- may be replaced by -CH=CH- or -C≡C-, and in the groups, at least one hydrogen may be replaced by halogen.

Examples of R¹ include alkyl, alkoxyalkyl, alkenyl, alkenyloxyalkyl, alkoxyalkenyl, alkylthioalkyl, alkenylthioalkyl and alkylthioalkenyl. Preferred R¹ is alkyl, alkoxyalkyl, alkenyl, alkenyloxyalkyl or alkoxyalkenyl. Further preferred R¹ is alkyl, alkoxyalkyl and alkenyl. Particularly preferred R¹ is alkyl and alkenyl. Most preferred R¹ is alkyl.

Preferred alkyl is -CH₃, -C₂H₅, -C₃H₇, -C₄H₉, -C₅H₁₁, -C₆H, or -C₇H₁₅.

Preferred alkoxyalkyl is -CH₂OCH₃, -CH₂OC₂H₅, -CH₂OC₃H₇, -(CH₂)₂-OCH₃, -(CH₂)₂-OC₂H₅, -(CH₂)₂-OC₃H₇, -(CH₂)₃-OCH₃, -(CH₂)₄-OCH₃ or -(CH₂)₅-OCH₃.

Preferred alkenyl is -CH=CH₂, -CH=CHCH₃, -CH₂CH=CH₂, -CH=CHC₂H₅, -CH₂CH=CHCH₃, -(CH₂)₂-CHCH₂, -CHCHC₃H₇, -CH₂CHCHC₂H₅, -(CH₂)₂-CH=CHCH₃ or -(CH₂)₃-CH=CH₂.

When R¹ has the straight chain, a temperature range of the liquid crystal phase is wide and the viscosity is small. When R¹ has the branched chain, compatibility with other liquid crystal compounds is high. A compound in which R¹ is optically active is useful as a chiral dopant. A reverse twisted domain to be generated in the liquid crystal display device can be prevented by adding the compound to the composition. A compound in which R¹ is not optically active is useful as a component of the composition. When R¹ is alkenyl, a preferred configuration depends on a position of a double bond. An alkenyl compound having the preferred configuration has low viscosity, a high maximum temperature or a wide temperature range of the liquid crystal phase.

A preferred configuration of -CH=CH- in alkenyl depends on a position of a double bond. In alkenyl having the double bond in an odd-numbered position, such as -CH=CHCH₃, -CH=CHC₂H₅, -CH=CHC₃H₇, -CH=CHC₄H₉, -C₂H₄CH=CHCH₃ and -C₂H₄CH=CHC₂H₅, a trans configuration is preferred. In alkenyl having the double bond in an even-numbered position, such as -CH₂CH=CHCH₃, -CH₂CHCHC₂H₅ and -CH₂CHCHC₃H₇, a cis configuration is preferred. The alkenyl compound having the preferred configuration has a high clearing point or the wide temperature range of the liquid crystal phase. A detailed description is found in Mol. Cryst. Liq. Cryst., 1985, 131, 109 and Mol. Cryst. Liq. Cryst., 1985, 131 and 327.

In formula (1), ring A¹ is 1,4-cyclohexylene or 1,4-cyclohexenylene.

In formula (1), ring B¹ is 1,4-cyclohexylene, 1,4-cyclohexenylene, 1,4-phenylene, or 1,4-phenylene in which at least one hydrogen is replaced by halogen, and at least one hydrogen directly bonded to the rings may be replaced by halogen.

Preferred ring B¹ is 1,4-cyclohexylene, 1,4-cyclohexenylene, 1,4-phenylene, 2-fluoro-1,4-phenylene, 2,3-difluoro-1,4-phenylene, 2,6-difluoro-1,4-phenylene or 2,3,5-trifluoro-1,4-phenylene. Further preferred ring B¹ is 1,4-cyclohexylene, 1,4-phenylene, 2-fluoro-1,4-phenylene, 2,6-difluoro-1,4-phenylene or 2,3-difluoro-4-phenylene. Particularly preferred ring B¹ is 1,4-cyclohexylene, 1,4-phenylene, 2-fluoro-1,4-phenylene or 2,3-difluoro-1,4-phenylene.

When ring B¹ is 1,4-cyclohexylene, the clearing point is high and the viscosity is small. When ring B¹ is 1,4-phenylene, or 1,4-phenylene in which at least one hydrogen is replaced by fluorine, the optical anisotropy is large and the orientation order parameter is relatively large. When ring B¹ is 1,4-phenylene in which at least one hydrogen is replaced by fluorine, the dielectric anisotropy is large.

In formula (1), Z¹, Z² and Z³ is independently a single bond, -CH₂CH₂-, -C≡C-, -CH=CH-, -CF=CF-, -CF₂O-, -OCF₂-, -CH₂O- or -OCH₂-.

Preferred Z¹, Z² and Z³ are a single bond, -CH₂O-, -OCH₂-, -CF₂O-, -CH₂CH₂- or -C=C-. Further preferred Z¹, Z² and Z³ are a single bond, -CH₂O-, -CF₂O- or -CHCH-. Particularly preferred Z¹, Z² and Z³ are a single bond or -CF₂O-. Most preferred Z¹, Z² and Z³ are a single bond.

When Z¹, Z² and Z³ are a single bond, chemical stability is high and the viscosity is small. When Z¹, Z² and Z³ are -CF₂O-, the viscosity is small, the dielectric anisotropy is large and the maximum temperature is high.

In formula (1), X¹ is fluorine, chlorine, -CF₃, -CHF₂, -CH₂F, -OCHF₂, -OCH₂F or -OCF₃. Preferred X¹ is fluorine, -CF₃ or -OCF₃.

When X¹ is fluorine, the viscosity is small. When X¹ is -CF₃, the dielectric anisotropy is large. When X¹ is -OCF₃, the compatibility with other liquid crystal compounds is good.

In formula (1), L¹, L², L¹, L⁴, L⁵, L⁶, L⁷, L⁸ and L⁹ are independently hydrogen or halogen. Preferred L¹, L², L³, L⁴, L⁵, L⁶, L⁷, L⁸ and L⁹ are a combination of hydrogen and fluorine. When L², L⁴, L⁶ and L⁹ are fluorine, such a case is particularly preferred.

With regard to the combination of L¹, L² and L⁷, when all of L¹, L² and L⁷ are hydrogen, the clearing point is high. With regard to L² and L⁷, when one is hydrogen and the other is fluorine, the dielectric anisotropy is large, the dielectric constant in the minor axis direction is large, and the compatibility with other liquid crystal compounds is high. When both L² and L⁷ are fluorine and L¹ is hydrogen, the dielectric anisotropy is particularly large. With regard to the combination of L³, L⁴ and L⁸, when all of L³, L⁴ and L⁸ are hydrogen, the clearing point is high. With regard to L⁴ and L⁸, when one is hydrogen and the other is fluorine, the dielectric anisotropy is large, the dielectric constant in the minor axis direction is large, and the compatibility with other liquid crystal compounds is high. When both L⁴ and L⁸ are fluorine and L³ is hydrogen, the dielectric anisotropy is particularly large. With regard to the combination of L⁵, L⁶ and L⁹, when all of L⁵, L⁶ and L⁹ are hydrogen the clearing point is high. With regard to L⁶ and L⁹, when one is hydrogen and the other is fluorine, the dielectric anisotropy is large, the dielectric constant in the minor axis direction is large, and the compatibility with other liquid crystal compounds is high. When both L⁶ and L⁹ are fluorine and L⁵ is hydrogen, the dielectric anisotropy is particularly large.

In formula (1), a is 1, 2 or 3, preferred example of a is 1 or 2, and a most preferred example of a is 1.

When a is 1 or 2, the dielectric anisotropy is large, and when a is 1, the dielectric anisotropy is particularly large.

Then, n¹ is 0 or 1, n² is 0 or 1, and a sum of n¹ and n² is 0 or 1.

When the sum of n¹ and n² is 0, the viscosity is small, and when the sum of n¹ and n² is 1, the clearing point is high.

Preferred examples of compound (1) include compounds (1-1) to (1-3) described in item 3. Further preferred examples of compound (1) include compounds (1-4) to (1-6) described in item 5. Still further preferred examples include compounds (1-7) to (1-14) described in item 6. Most preferred examples of compound (1) include compounds (1-15) to (1-18) described in item 7.

Compounds (1-7) and (1-8) are preferred from viewpoints of the excellent compatibility and the small viscosity. Compounds (1-9) to (1-12) are preferred from viewpoints of the high clearing point and the large dielectric anisotropy. Compounds (1-3) to (1-14) are preferred from viewpoints of the excellent compatibility and the large dielectric anisotropy.

### 2. Synthesis of compound (1)

A synthesis method of compound (1) will be described. Compound (1) can be synthesized by suitably combining methods in organic synthetic chemistry. A method for introducing an objective terminal group, ring and bonding group into a starting material is described in books such as "Organic Syntheses" (John Wiley & Sons, Inc.), "Organic Reaction" (John Wiley & Sons, Inc.), "Comprehensive Organic Synthesis" (Pergamon Press), "Shin Jikken Kagaku Koza (New Experimental Chemistry Course)" (Maruzen Co., Ltd.).

### 2-1. Formation of bonding group Z

First, a scheme is shown with regard to a method for forming bonding groups Z¹ to Z². Next, reactions described in the scheme in methods (1) to (11) are described. In the scheme, MSG¹ (or MSG²) is a monovalent organic group having at least one ring. The monovalent organic groups represented by a plurality of MSG¹ (or MSG²) used in the scheme may be identical or different. Compounds (1A) to (1J) correspond to compound (1).

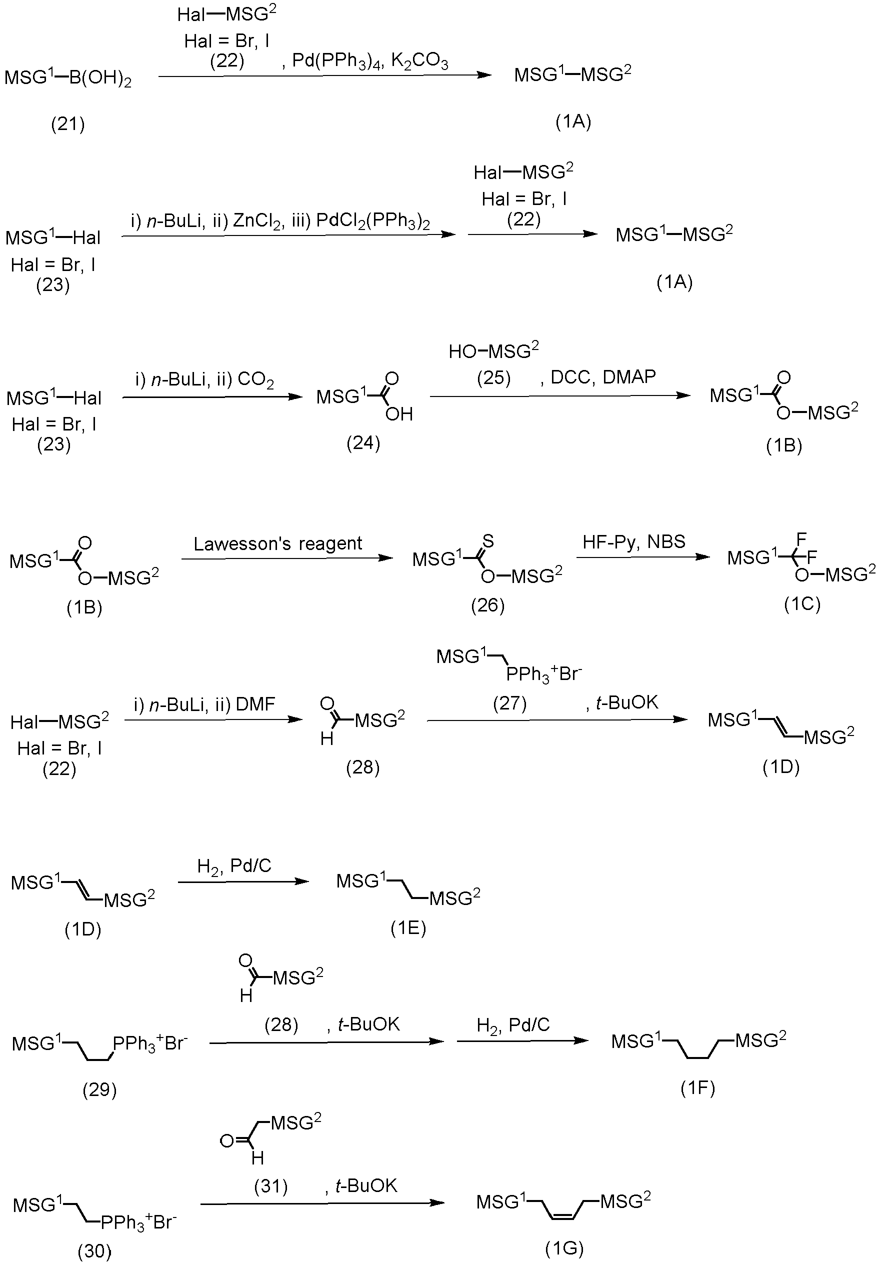

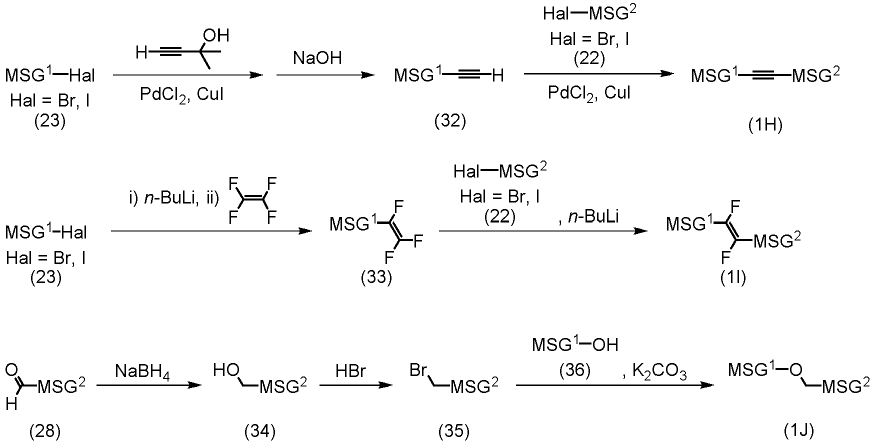

### (1) Formation of a single bond

Compound (1A) is prepared by allowing aryl boronic acid (21) prepared according to a publicly known method to react with halide (22) in the presence of carbonate and a catalyst such as tetrakis (triphenylphosphine)palladium. Compound (1A) is also prepared by allowing halide (23) prepared according to a publicly known method to react with n-butyllithium and subsequently with zinc chloride, and further with halide (22) in the presence of a catalyst such as dichlorobis(triphenylphosphine)palladium.

### (2) Formation of -COO-

Carboxylic acid (24) is obtained by allowing halide (23) to react with n-butyllithium and subsequently with carbon dioxide. Compound (1B) is prepared by dehydration of compound (25) prepared according to a publicly known method and carboxylic acid (24) in the presence of 1,3-dicyclohexylcarbodiimide (DCC) and 4-dimethylaminopyridine (DMAP).

### (3) Formation of -CF₂O-

Thionoester (26) is obtained by treating compound (1B) with a thiation reagent such as Lawesson's reagent. Compound (1C) is prepared by fluorinating thionoester (26) with a hydrogen fluoride-pyridine complex and N-bromosuccinimide (NBS). Refer to M. Kuroboshi et al., Chem. Lett., 1992, 827. Compound (1C) is also prepared by fluorinating thionoester (26) with (diethylamino)sulfur trifluoride (DAST). Refer to W. H. Bunnelle et al., J. Org. Chem. 1990, 55, 768. The bonding group can also be formed according to the method described in Peer. Kirsch et al., Angew. Chem. Int. Ed. 2001, 40, 1480.

### (4) Formation of -CH=CH-

Aldehyde (28) is obtained by treating halide (22) with n-butyllithium and then allowing the treated halide to react with formamide such as N,N-dimethylformamide (DMF). Phosphorus ylide is generated by treating phosphonium salt (27) prepared according to a publicly known method with a base such as potassium t-butoxide. Compound (1D) is prepared by allowing the phosphorus ylide to react with aldehyde (28) . A cis isomer may be generated depending on reaction conditions, and therefore the cis isomer is isomerized into a trans isomer according to a publicly known method when necessary.

### (5) Formation of -CH₂CH₂-

Compound (1E) is prepared by hydrogenating compound (1D) in the presence of a catalyst such as palladium on carbon.

### (6) Formation of -(CH₂)₄-

A compound having -(CH₂)₂-CH=CH- is obtained using phosphonium salt (29) in place of phosphonium salt (27) according to the method in method (4). Compound (1F) is prepared by performing catalytic hydrogenation of the compound.

### (7) Formation of -CH₂CH=CHCH₂-

Compound (1G) is prepared using phosphonium salt (30) in place of phosphonium salt (27) and aldehyde (31) in place of aldehyde (28) according to the method in method (4). A trans isomer is formed depending on reaction conditions, and therefore the trans isomer is isomerized into a cis isomer by a publicly known method where necessary.

### (8) Formation of -C≡C-

Compound (32) is obtained by allowing halide (23) to react with 2-methyl-3-butyn-2-ol in the presence of a catalyst including dichloropalladium and copper halide, and then performing deprotection under basic conditions. Compound (1H) is prepared by allowing compound (32) to react with halide (22) in the presence of the catalyst including dichloropalladium and copper halide.

### (9) Formation of -CF=CF-

Compound (33) is obtained by treating halide (23) with n-butyllithium and then allowing the treated halide to react with tetrafluoroethylene. Compound (1I) is prepared by treating halide (22) with n-butyllithium and then allowing the treated halide to react with compound (33).

### (10) Formation of -OCH₂-

Compound (34) is obtained by reducing aldehyde (28) with a reducing agent such as sodium borohydride. Bromide (35) is obtained by brominating compound (34) with hydrobromic acid or the like. Compound (1J) is prepared by allowing bromide (35) to react with compound (36) in the presence of a base such as potassium carbonate.

### (11) Formation of -CF₂CF₂-

A compound having -(CF₂)₂- is obtained by fluorinating diketone (-COCO-) with sulfur tetrafluoride, in the presence of a hydrogen fluoride catalyst, according to the method described in J. Am. Chem. Soc., 2001, 123, 5414.

### 2-2. Formation of ring A¹ and ring B¹

With regard to a ring such as 1,4-cyclohexylene, 1,4-phenylene, 2-fluoro-1,4-phenylene and 2,6-difluoro-1,4-phenylene, a starting material thereof is commercially available or a synthetic method thereof is well known.

### 2-3. Method for synthesizing compound (1)

In compound (1), an example of a method for synthesizing compound (1-41) in which ring A¹ is 1,4-cyclohexylene is as described below. Compound (43) is obtained by allowing bromide (41) prepared by a publicly known method to react with cyclohexanone (42) in the presence of isopropyl magnesium chloride and lithium chloride. Compound (44) is obtained by dehydrating compound (43) in the presence of paratoluenesulfonic acid monohydrate (PTSA). Compound (45) is obtained by hydrogenating compound (44) in the presence of a catalyst such as Raney nickel. Compound (46) is obtained by allowing compound (45) to react with dibromodifluoromethane in the presence of n-butyllithium. Compound (1-41) is prepared by allowing compound (46) to react with phenol (47) prepared by a publicly known method in the presence of a base such as potassium carbonate. In the compounds, symbols such as R¹ and ring B¹ are defined in a manner identical with the symbols described in item 1.

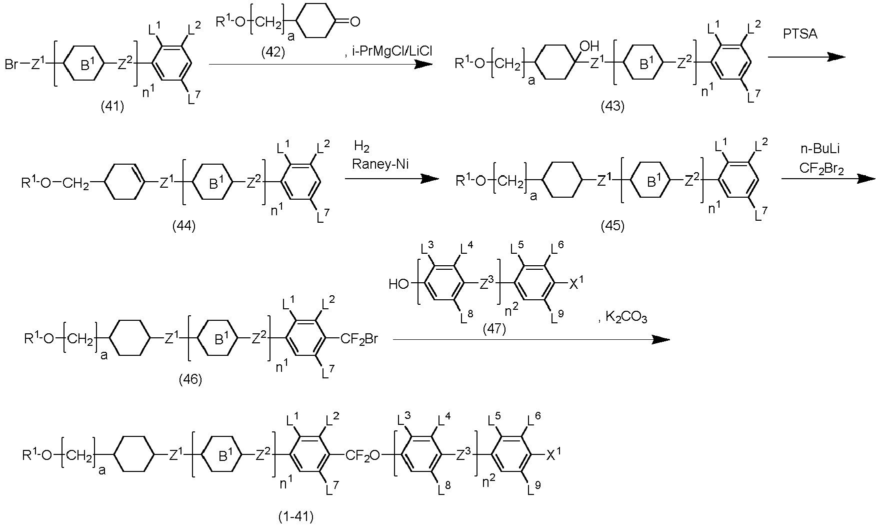

In compound (1), compound (1-42) in which ring A¹ is 1,4-cyclohexenylene can be prepared using compound (44) in a similar manner.

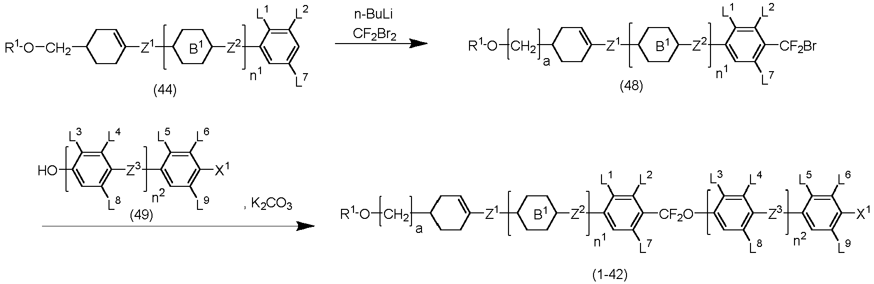

### 3. Liquid crystal composition

### 3-1. Component compound

A liquid crystal composition of the invention will be described. The composition contains at least one compound (1) as component A. The composition may contain two, three or more compounds (1). A component in the composition may be only compound (1). In order to develop excellent physical properties, the composition preferably contains at least one of compounds (1) in the range of about 1% by weight to about 99% by weight. In a composition having positive dielectric anisotropy, a preferred content of compound (1) is in the range of about 5% by weight to about 60% by weight. In a composition having negative dielectric anisotropy, a preferred content of compound (1) is about 30% by weight or less.

**Table. 1 Dielectric anisotropy of component compound**

| Component of composition | Component compound | Dielectric anisotropy |
|---|---|---|
| Component A | Compound (1) | Positively large |
| Component B | Compound (2) to compound (4) | Small |
| Component C | Compound (5) to compound (7) | Positively large |
| Component D | Compound (8) | Positively large |
| Component E | Compound (9) to compound (15) | Negatively large |

The composition contains compound (1) as component A, and further preferably contains a liquid crystal compound selected from components B, C, D and E shown in Table 1. Component B includes compounds (2) to (4) . When the composition is prepared, components B, C, D and E are preferably selected by taking into account positive or negative and magnitude of the dielectric anisotropy. The composition may contain a liquid crystal compound different from compounds (1) to (15). The composition needs not contain such a liquid crystal compound.

Component B is a compound in which two terminal groups are alkyl or the like. Preferred examples of component B include compounds (2-1) to (2-11), compounds (3-1) to (3-19) and compounds (4-1) to (4-7) . In the compounds, R¹¹ and R¹² are independently alkyl having 1 to 10 carbons or alkenyl having 2 to 10 carbons, and in the alkyl and the alkenyl, at least one piece of -CH₂- may be replaced by -O-, and in the groups, at least one hydrogen may be replaced by fluorine.

| | | | |
|---|---|---|---|
| 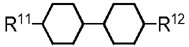 | (2-1) | 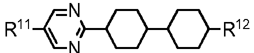 | (3-9) |
| 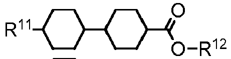 | (2-2) | 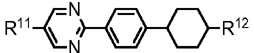 | (3-10) |
| 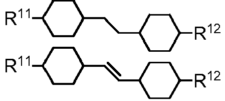 | (2-3) | 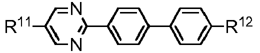 | (3-11) |
| | (2-4) | 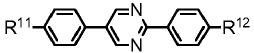 | (3-12) |
| 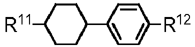 | (2-5) | | |
| 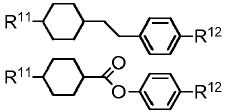 | (2-6) | 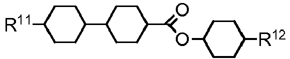 | (3-13) |
| | (2-7) | 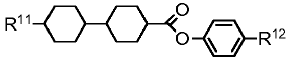 | (3-14) |
| 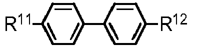 | (2-8) | 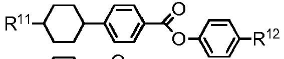 | (3-15) |
| 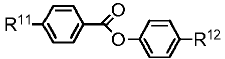 | (2-9) | 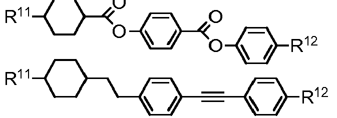 | (3-16) |
| 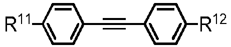 | (2-10) | | (3-17) |
| 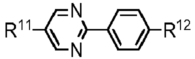 | (2-11) | 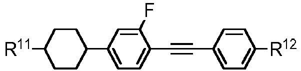 | (3-18) |
| 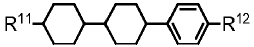 | (3-1) | | |
| 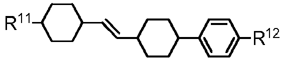 | (3-2) | 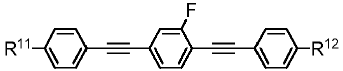 | (3-19) |
| 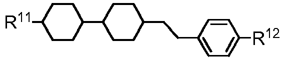 | (3-3) | 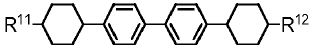 | (4-1) |
| 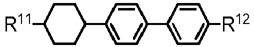 | (3-4) | 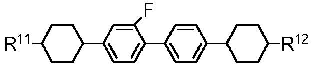 | (4-2) |
| 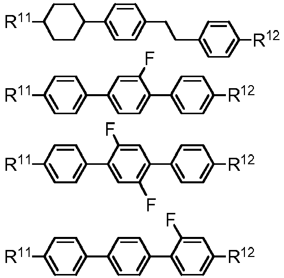 | (3-5) | 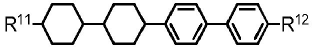 | (4-3) |
| | (3-6) | 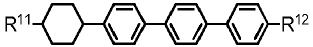 | (4-4) |
| | (3-7) | 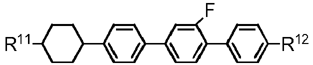 | (4-5) |
| | (3-8) | 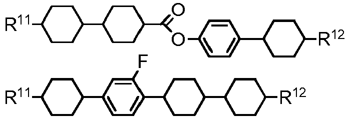 | (4-6) |
| | | | (4-7) |

Component B has small dielectric anisotropy. Component B is close to neutrality. Compound (2) is effective in decreasing the viscosity or adjusting the optical anisotropy. Compounds (3) and (4) are effective in extending the temperature range of the nematic phase by increasing the maximum temperature, or in adjusting the optical anisotropy.

As a content of component B is increased, the viscosity of the composition is decreased, and the dielectric anisotropy is decreased. Thus, as long as a desired value of a threshold voltage of the device is met, the content is preferably as large as possible. When a composition for the IPS mode, the VA mode or the like is prepared, the content of component B is preferably about 30% by weight or more, and further preferably about 40% by weight or more, based on the weight of the liquid crystal composition.

Component C is a compound having a halogen-containing group or a fluorine-containing group at a right terminal. Preferred examples of component C include compounds (5-1) to (5-16), compounds (6-1) to (6-113) and compounds (7-1) to (7-57). In the compounds, R¹³ is alkyl having 1 to 10 carbons or alkenyl having 2 to 10 carbons, and in the alkyl or the alkenyl, at least one piece of -CH₂- may be replaced by -O-, and in the groups, at least one hydrogen may be replaced by fluorine, in which, in compounds (5-11) to (5-13), compounds (6-40) to (6-42), compounds (6-83) to (6-100), compounds (6-110) to (6-113), compounds (7-18) to (7-53) and compounds (7-56) to (7-57), R¹¹ is alkyl having 1 to 10 carbons, alkenyl having 2 to 10 carbons, alkoxy having 1 to 9 carbons or alkenyloxy having 2 to 9 carbons, and in the groups, at least one hydrogen may be replaced by fluorine.

X¹¹ is fluorine, chlorine, -OCF₃, -OCHF₂, -CF₃, -CHF₂, -CH₂F, -OCF₂CHF₂ or -OCF₂CHFCF₃.

| | | | |
|---|---|---|---|
| 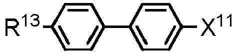 | (5-1) | 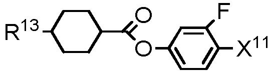 | (5-9) |
| 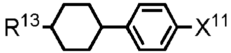 | (5-2) | 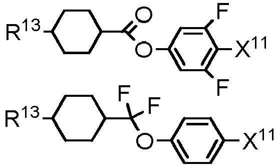 | (5-10) |
| 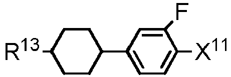 | (5-3) | | (5-11) |
| 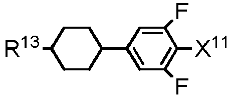 | (5-4) | 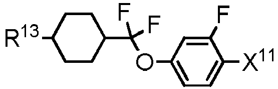 | (5-12) |
| 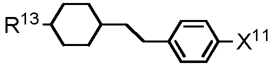 | (5-5) | 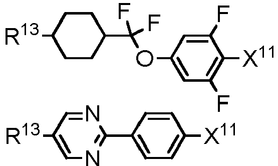 | (5-13) |
| 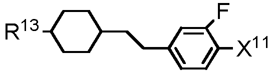 | (5-6) | | (5-14) |
| 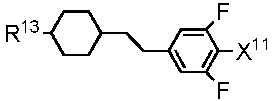 | (5-7) | 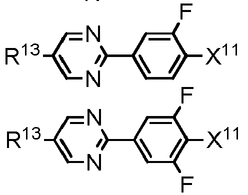 | (5-15) |
| 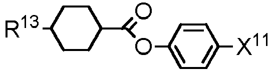 | (5-8) | | (5-16) |

| | | | |
|---|---|---|---|
| 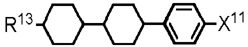 | (6-1) | 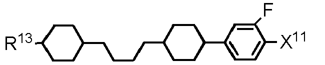 | (6-20) |
| 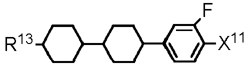 | (6-2) | 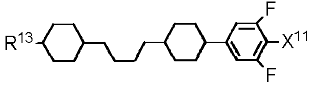 | (6-21) |
| 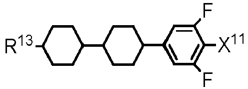 | (6-3) | 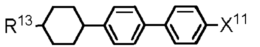 | (6-22) |
| 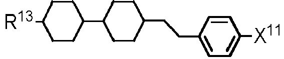 | (6-4) | 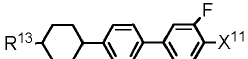 | (6-23) |
| 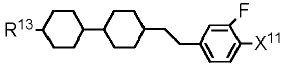 | (6-5) | 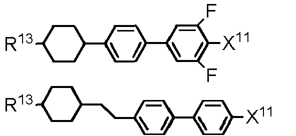 | (6-24) |
| 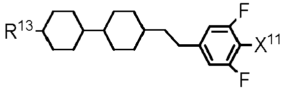 | (6-6) | | (6-25) |
| 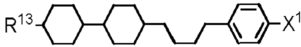 | (6-7) | 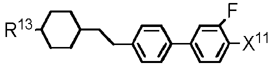 | (6-26) |
| 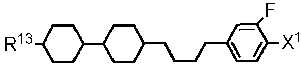 | (6-8) | 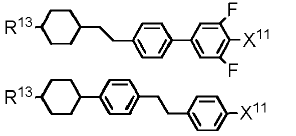 | (6-27) |
| 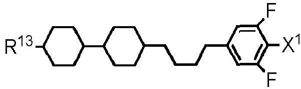 | (6-9) | | (6-28) |
| 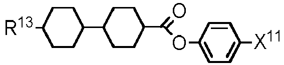 | (6-10) | 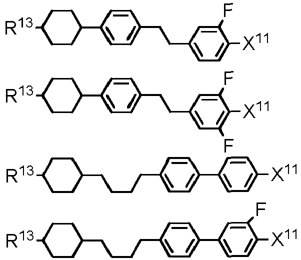 | (6-29) |
| 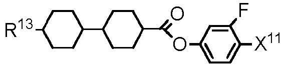 | (6-11) | | (6-30) |
| 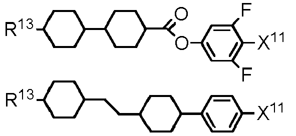 | (6-12) | | (6-31) |
| | (6-13) | | (6-32) |
| 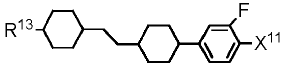 | (6-14) | 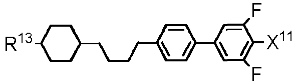 | (6-33) |
| 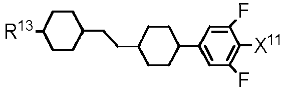 | (6-15) | 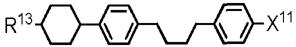 | (6-34) |
| 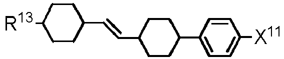 | (6-16) | 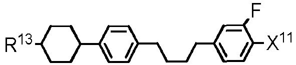 | (6-35) |
| 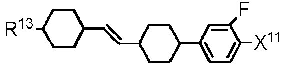 | (6-17) | 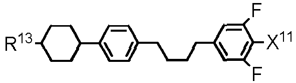 | (6-36) |
| 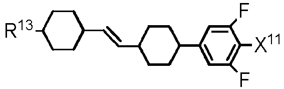 | (6-18) | 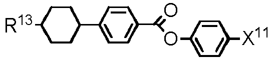 | (6-37) |
| 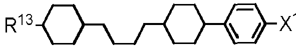 | (6-19) | 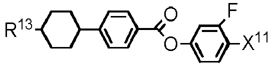 | (6-38) |

| | | | |
|---|---|---|---|
| 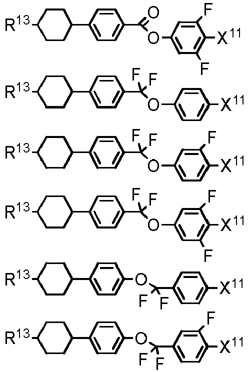 | (6-39) | 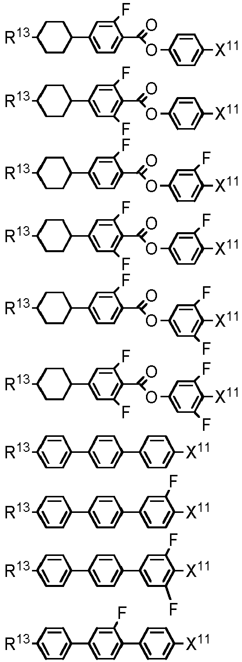 | (6-58) |
| | (6-40) | | (6-59) |
| | (6-41) | | (6-60) |
| | (6-42) | | (6-61) |
| | (6-43) | | (6-62) |
| | (6-44) | | |
| 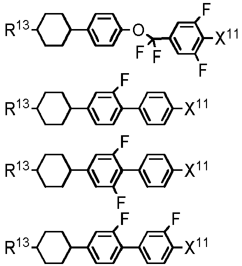 | (6-45) | | (6-63) |
| | (6-46) | | (6-64) |
| | (6-47) | | (6-65) |
| | (6-48) | | (6-66) |
| | | | (6-67) |
| 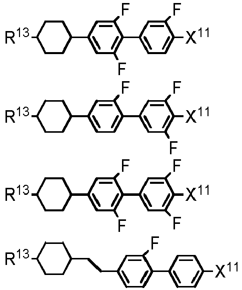 | (6-49) | 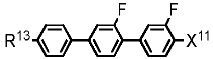 | (6-68) |
| | (6-50) | 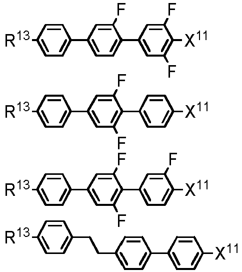 | (6-69) |
| | (6-51) | | (6-70) |
| | (6-52) | | (6-71) |
| 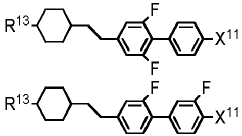 | (6-53) | | (6-72) |
| | (6-54) | 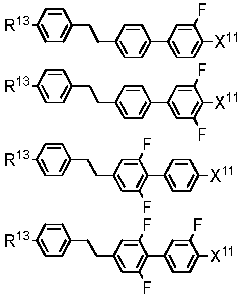 | (6-73) |
| 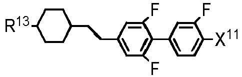 | (6-55) | | (6-74) |
| 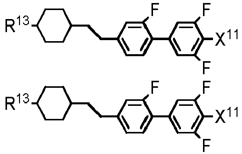 | (6-56) | | (6-75) |
| | (6-57) | | (6-76) |

| | | | |
|---|---|---|---|
| 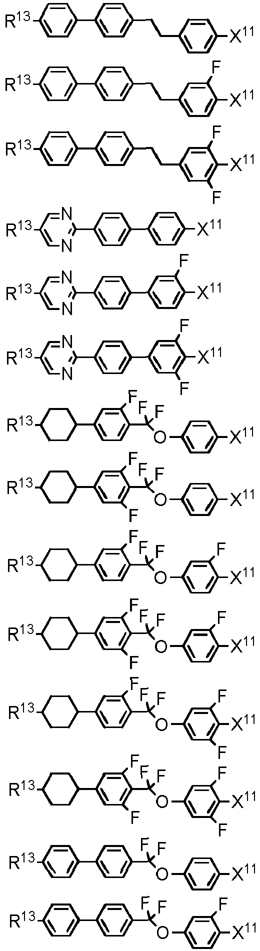 | (6-77) | 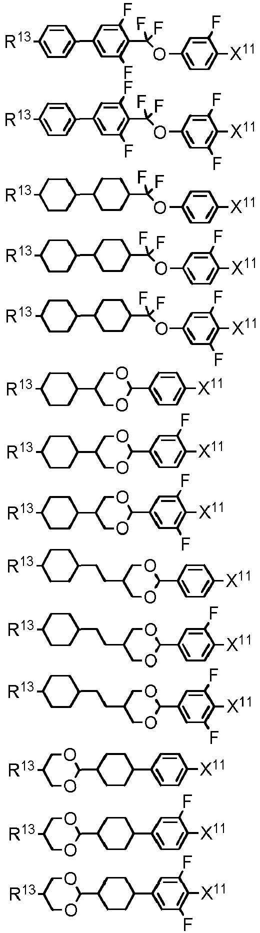 | (6-96) |
| | (6-78) | | (6-97) |
| | (6-79) | | (6-98) |
| | (6-80) | | (6-99) |
| | (6-81) | | (6-100) |
| | (6-82) | | (6-101) |
| | (6-83) | | (6-102) |
| | (6-84) | | (6-103) |
| | (6-85) | | (6-104) |
| | (6-86) | | (6-105) |
| | (6-87) | | (6-106) |
| | | | (6-107) |
| | (6-88) | | (6-108) |
| | (6-89) | | (6-109) |
| | (6-90) | 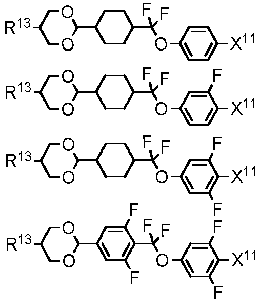 | (6-110) |
| 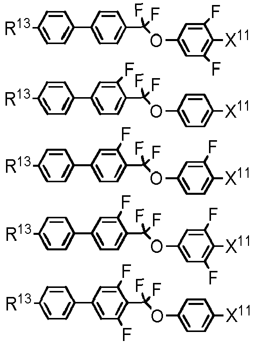 | (6-91) | | (6-111) |
| | (6-92) | | (6-112) |
| | (6-93) | | |
| | (6-94) | | (6-113) |
| | (6-95) | | |

| | | | |
|---|---|---|---|
| 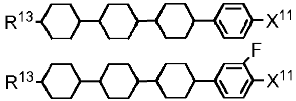 | (7-1) | 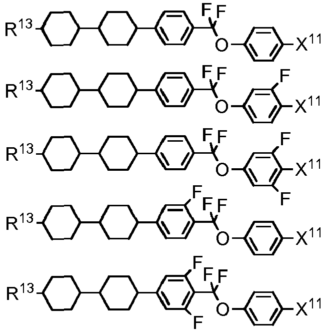 | (7-21) |
| | (7-2) | | (7-22) |
| 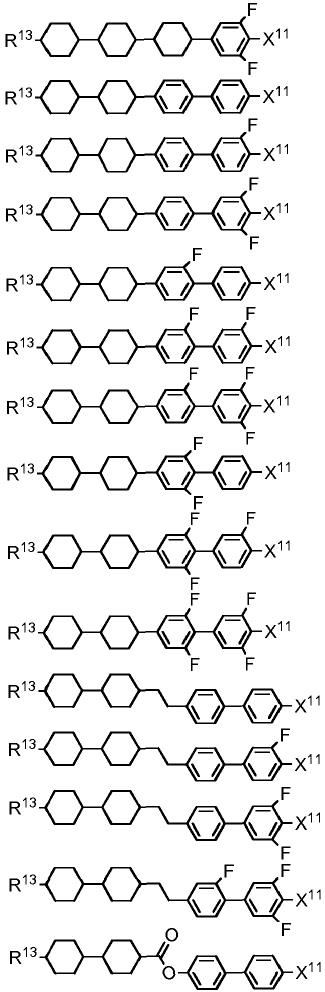 | (7-3) | | (7-23) |
| | (7-4) | | (7-24) |
| | (7-5) | | (7-25) |
| | (7-6) | | |
| | (7-7) | 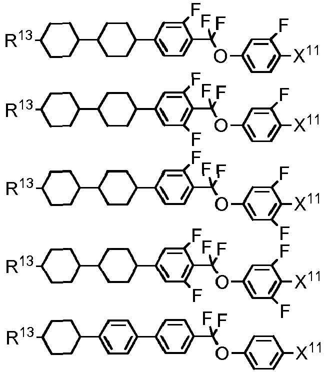 | (7-26) |
| | (7-8) | | (7-27) |
| | (7-9) | | (7-28) |
| | (7-10) | | (7-29) |
| | (7-11) | | (7-30) |
| | (7-12) | 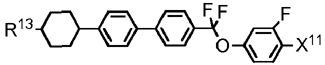 | (7-31) |
| | (7-13) | 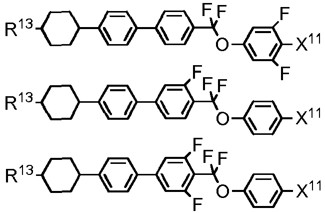 | (7-32) |
| | (7-14) | | (7-33) |
| | (7-15) | | (7-34) |
| | (7-16) | 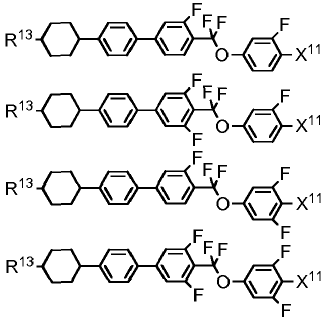 | (7-35) |
| | (7-17) | | (7-36) |
| 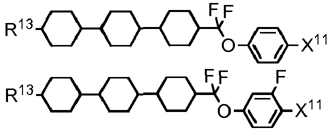 | (7-18) | | |
| | (7-19) | | (7-37) |
| 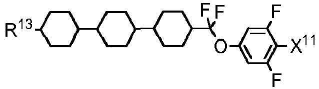 | (7-20) | | (7-38) |

| | | | |
|---|---|---|---|
| 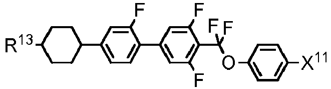 | (7-39) | 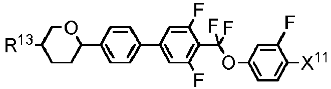 | (7-49) |
| 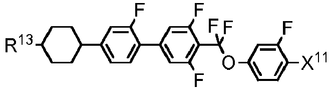 | (7-40) | 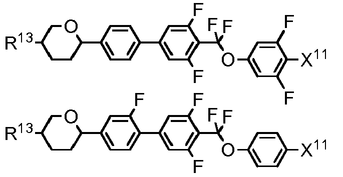 | (7-50) |
| 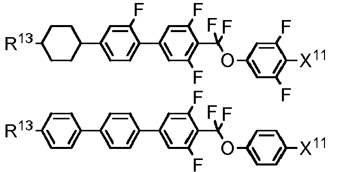 | (7-41) | | (7-51) |
| | (7-42) | 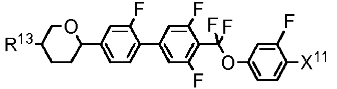 | (7-52) |
| 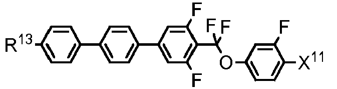 | (7-43) | 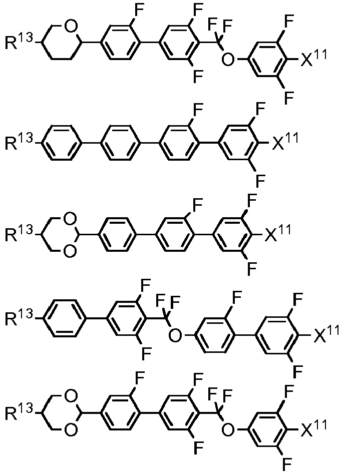 | (7-53) |
| 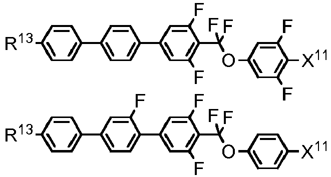 | (7-44) | | (7-54) |
| | (7-45) | | (7-55) |
| 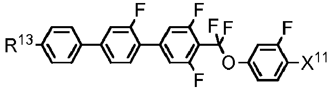 | (7-46) | | (7-56) |
| 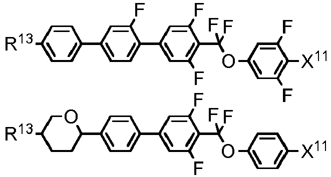 | (7-47) | | (7-57) |
| | (7-48) | | |

Component C has positive dielectric anisotropy and superb stability to heat and light, and therefore is used when a composition for the IPS mode, the FFS mode, the OCB mode or the like is prepared. A content of component C is suitably in the range of about 1% by weight to about 99% by weight, preferably in the range of about 10% by weight to about 97% by weight, and further preferably in the range of about 40% by weight to about 95% by weight, based on the weight of the liquid crystal composition. When component C is added to a composition having negative dielectric anisotropy, the content of component C is preferably about 30% by weight or less. Addition of component C allows adjustment of the elastic constant of the composition and adjustment of a voltage-transmittance curve of the device.

Component D is compound (8) in which a right terminal group is -C≡N or -C≡C-C≡N. Preferred examples of component D include compounds (8-1) to (8-64) . In the compounds, R¹⁴ is alkyl having 1 to 10 carbons or alkenyl having 2 to 10 carbons, and in the alkyl and the alkenyl, at least one piece of -CH₂- may be replaced by -O-, and in the groups, at least one hydrogen may be replaced by fluorine. X¹² is -C≡N or -C≡C-C≡N.

| | | | |
|---|---|---|---|
| 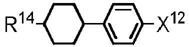 | (8-1) | 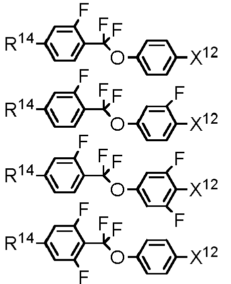 | (8-22) |
| 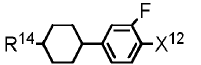 | (8-2) | | |
| 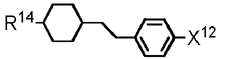 | (8-3) | | (8-23) |
| 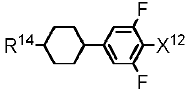 | (8-4) | | (8-24) |
| 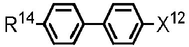 | (8-5) | | (8-25) |
| 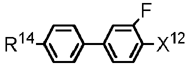 | (8-6) | 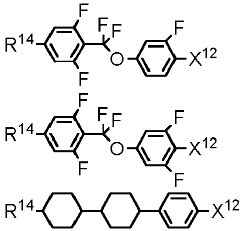 | (8-26) |
| 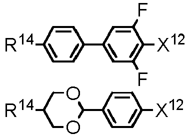 | (8-7) | | (8-27) |
| | (8-8) | | (8-28) |
| 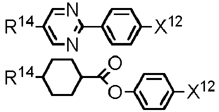 | (8-9) | | |
| | (8-10) | 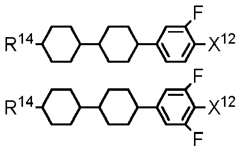 | (8-29) |
| 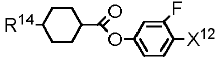 | (8-11) | | (8-30) |
| 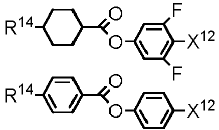 | (8-12) | 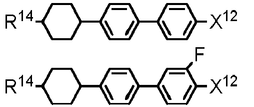 | (8-31) |
| | (8-13) | | (8-32) |
| 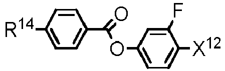 | (8-14) | 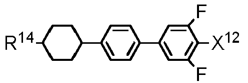 | (8-33) |
| | | 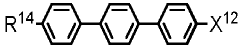 | (8-34) |
| 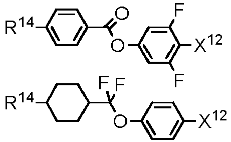 | (8-15) | 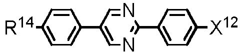 | (8-35) |
| | (8-16) | 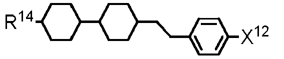 | (8-36) |
| 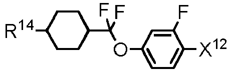 | (8-17) | 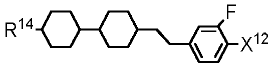 | (8-37) |
| 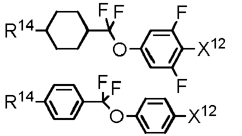 | (8-18) | 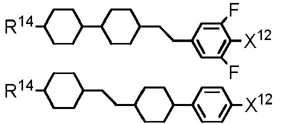 | (8-38) |
| | (8-19) | | (8-39) |
| 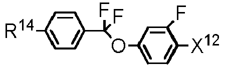 | (8-20) | 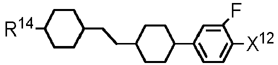 | (8-40) |
| 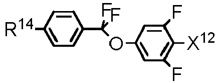 | (8-21) | 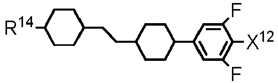 | (8-41) |

| | | | |
|---|---|---|---|
| 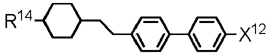 | (8-42) | 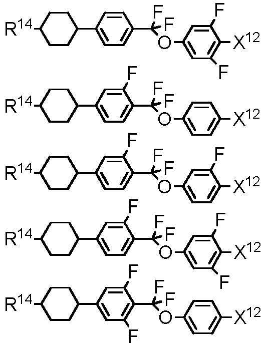 | (8-54) |
| 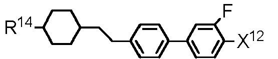 | (8-43) | | (8-55) |
| 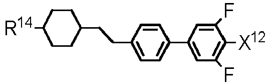 | (8-44) | | (8-56) |
| 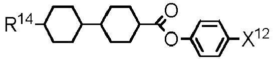 | (8-45) | | (8-57) |
| 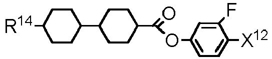 | (8-46) | | (8-58) |
| 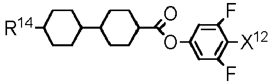 | (8-47) | | |
| 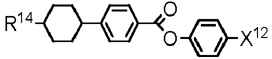 | (8-48) | 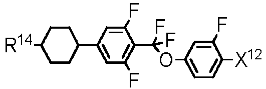 | (8-59) |
| 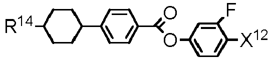 | (8-49) | 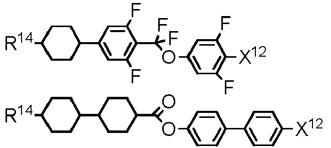 | (8-60) |
| 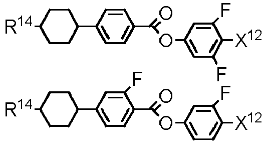 | (8-50) | | (8-61) |
| | (8-51) | 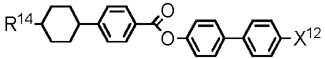 | (8-62) |
| 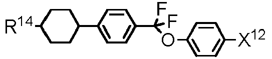 | (8-52) | 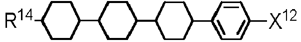 | (8-63) |
| 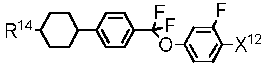 | (8-53) | 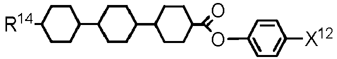 | (8-64) |

Component D has positive dielectric anisotropy and a value thereof is large, and therefore is used when a composition for the TN mode or the like is prepared. Addition of component D can increase the dielectric anisotropy of the composition. Component D is effective in extending the temperature range of the liquid crystal phase, adjusting the viscosity or adjusting the optical anisotropy. Component D is also useful for adjustment of the voltage-transmittance curve of the device.

When the composition for the TN mode or the like is prepared, a content of component D is suitably in the range of about 1% by weight to about 99% by weight, preferably in the range of about 10% by weight to about 97% by weight, and further preferably in the range of about 40% by weight to about 95% by weight, based on the weight of the liquid crystal composition. When component D is added to a composition having negative dielectric anisotropy, the content of component D is preferably about 30% by weight or less. Addition of component D allows adjustment of the elastic constant of the composition and adjustment of the voltage-transmittance curve of the device.

Component E includes compounds (9) to (15). The compounds have phenylene in which hydrogen in lateral positions are replaced by two halogens, such as 2,3-difluoro-1,4-phenylene. Preferred examples of component E include compounds (9-1) to (9-8), compounds (10-1) to (10-17), compound (11-1), compounds (12-1) to (12-3), compounds (13-1) to (13-11), compounds (14-1) to (14-3) and compounds (15-1) to (15-3). In the compounds, R¹⁵, R¹⁶ and R¹⁷ are independently alkyl having 1 to 10 carbons or alkenyl having 2 to 10 carbons, and in the alkyl and the alkenyl, at least one piece of -CH₂- may be replaced by -O-, and in the groups, at least one hydrogen may be replaced by fluorine, and R¹⁷ may be hydrogen or fluorine.

| | | | |
|---|---|---|---|
| 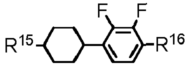 | (9-1) | 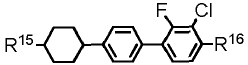 | (10-13) |
| 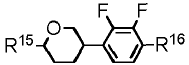 | (9-2) | 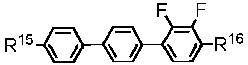 | (10-14) |
| 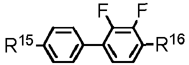 | (9-3) | 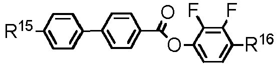 | (10-15) |
| 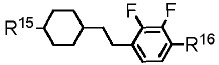 | (9-4) | 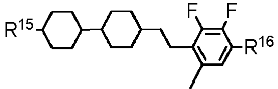 | (10-16) |
| 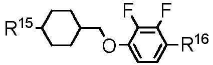 | (9-5) | | |
| 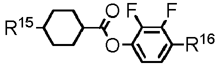 | (9-6) | 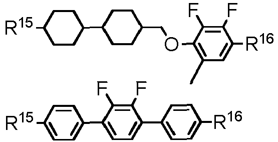 | (10-17) |
| 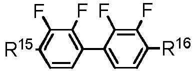 | (9-7) | | (11-1) |
| 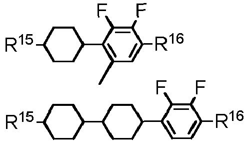 | (9-8) | 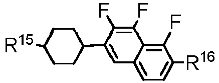 | (12-1) |
| | (10-1) | 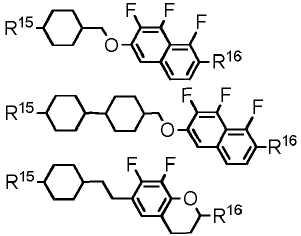 | (12-2) |
| 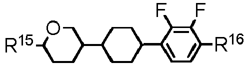 | (10-2) | | (12-3) |
| 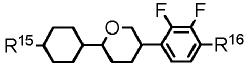 | (10-3) | | (13-1) |
| 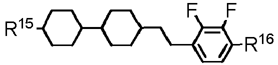 | (10-4) | 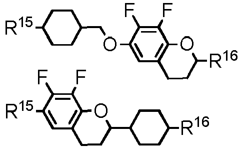 | (13-2) |
| 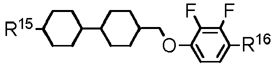 | (10-5) | | |
| 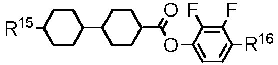 | (10-6) | | (13-3) |
| 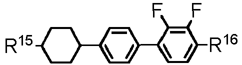 | (10-7) | 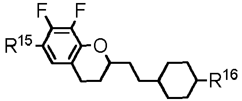 | (13-4) |
| 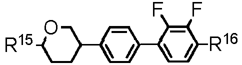 | (10-8) | 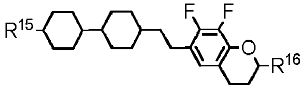 | (13-5) |
| 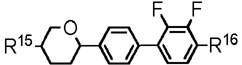 | (10-9) | 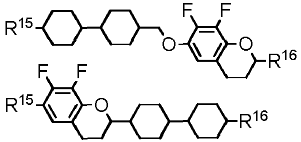 | |
| 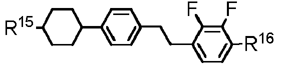 | (10-10) | | (13-6) |
| 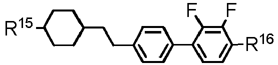 | (10-11) | | 13-7 |
| 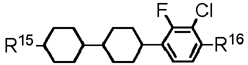 | (10-12) | 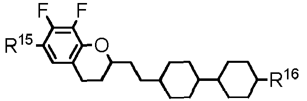 | (13-8) |

| | | | |
|---|---|---|---|
| 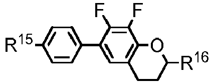 | (13-9) | 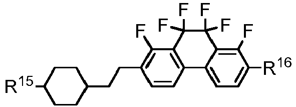 | (14-3) |
| 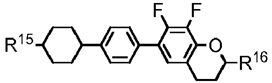 | (13-10) | 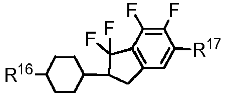 | (15-1) |
| 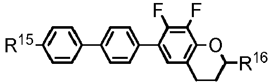 | (13-11) | | |
| 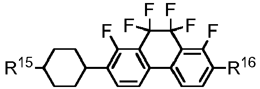 | (14-1) | 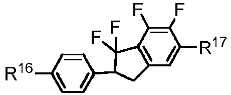 | (15-2) |
| 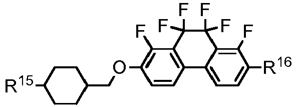 | (14-2) | 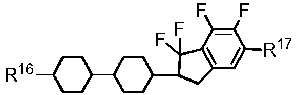 | (15-3) |

Component E has negatively large dielectric anisotropy. Component E is used when a composition for the IPS mode, the VA mode, the PSA mode or the like is prepared. As a content of component E is increased, the dielectric anisotropy of the composition is negatively increased, but the viscosity is increased. Thus, as long as a desired value of a threshold voltage of the device is met, the content is preferably as small as possible. When the dielectric anisotropy at a degree of -5 is taken into account, the content is preferably about 40% by weight or more in order to allow sufficient voltage driving.

Among types of component E, compound (9) is a bicyclic compound, and therefore is effective in decreasing the viscosity, adjusting the optical anisotropy or increasing the dielectric anisotropy. Compounds (10) and (11) are a tricyclic compound, and therefore are effective in increasing the maximum temperature, the optical anisotropy or the dielectric anisotropy. Compounds (12) to (15) are effective in increasing the dielectric anisotropy.

When a composition for the IPS mode, the VA mode, the PSA mode or the like is prepared, the content of component E is preferably about 40% by weight or more, and further preferably in the range of about 50% by weight to about 95% by weight, based on the weight of the liquid crystal composition. When component E is added to a composition having positive dielectric anisotropy, the content of component E is preferably about 30% by weight or less. Addition of component E allows adjustment of the elastic constant of the composition and adjustment of the voltage-transmittance curve of the device.

The liquid crystal composition satisfying at least one of physical properties such as high stability to heat and light, high maximum temperature, low minimum temperature, small viscosity, suitable optical anisotropy, large dielectric anisotropy, large specific resistance and a suitable elastic constant can be prepared by suitably combining components B, C, D and E with compound (1) . The device including such a composition has a wide temperature range in which the device can be used, a short response time, a large voltage holding ratio, low threshold voltage, a large contrast ratio, a small flicker rate and a long service life.

If the device is used for a long period of time, a flicker may be occasionally generated on a display screen. The flicker rate (%) can be represented by a formula (|luminance when applying positive voltage - luminance when applying negative voltage|) / (average luminance) × 100. In a device having the flicker rate in the range of about 0% to about 1%, a flicker is hard to generate on the display screen even if the device is used for a long period of time. The flicker is associated with image persistence, and is presumed to be generated according to a difference in electric potential between a positive frame and a negative frame in driving at alternating current. The composition containing compound (1) is also useful for reducing generation of the flicker.

3-2. Additive

A liquid crystal composition is prepared according to a publicly known method. For example, the component compounds are mixed and dissolved in each other by heating. According to an application, an additive may be added to the composition. Specific examples of the additive include a polymerizable compound, a polymerization initiator, a polymerization inhibitor, an optically active compound, an antioxidant, an ultraviolet light absorber, a light stabilizer, a heat stabilizer, a dye and an antifoaming agent. Such an additive is well known to those skilled in the art, and described in literature.

In a liquid crystal display device having the polymer sustained alignment (PSA) mode, the composition contains a polymer. The polymerizable compound is added for the purpose of forming the polymer in the composition. The polymerizable compound is polymerized by irradiation with ultraviolet light while voltage is applied between electrodes to produce the polymer in the composition. A suitable pretilt is achieved by the method, and therefore the device in which a response time is shortened and the image persistence is improved is prepared.

Preferred examples of the polymerizable compound include acrylate, methacrylate, a vinyl compound, a vinyloxy compound, propenyl ether, an epoxy compound (oxirane, oxetane) and vinyl ketone. Further preferred examples include a compound having at least one acryloyloxy, and a compound having at least one methacryloyloxy. Still further preferred examples also include a compound having both acryloyloxy and methacryloyloxy.

Still further preferred examples include compounds (M-1) to (M-18). In the compounds, R²⁵ to R³¹ are independently hydrogen or methyl; R³², R³³ and R³⁴ are independently hydrogen or alkyl having 1 to 5 carbons, and at least one of R³², R³³ and R³⁴ is independently alkyl having 1 to 5 carbons; v, w and x are independently 0 or 1; and u and v are independently an integer from 1 to 10. L²¹ to L²⁶ are independently hydrogen or fluorine; and L²⁷ and L²⁸ are independently hydrogen, fluorine or methyl.

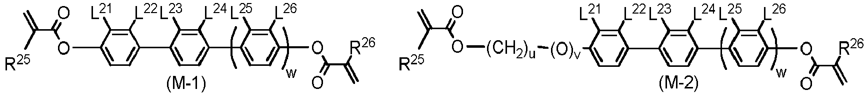

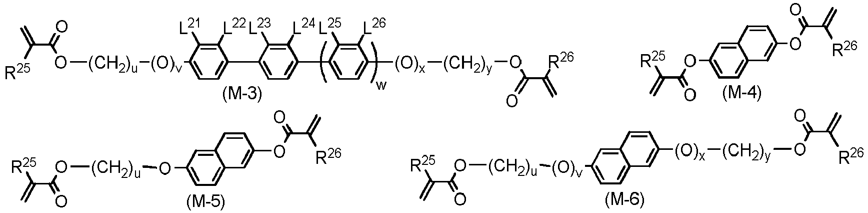

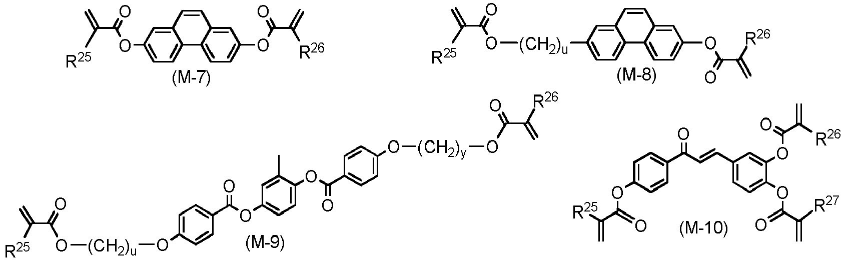

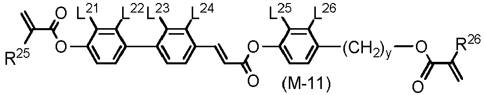

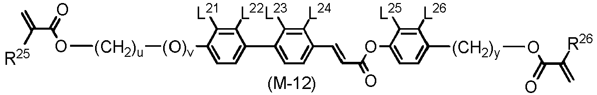

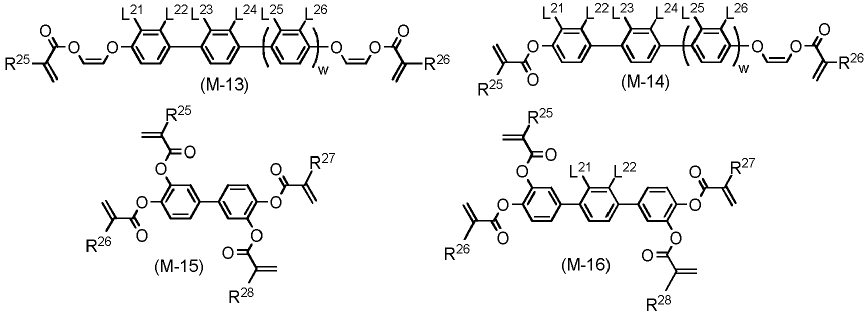

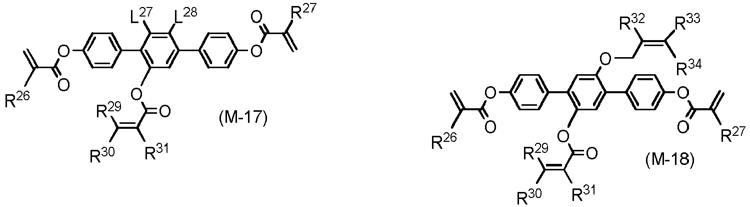

The polymerizable compound can be rapidly polymerized by adding the polymerization initiator. An amount of a remaining polymerizable compound can be decreased by optimizing a reaction temperature. Specific examples of a photoradical polymerization initiator include TPO, 1173 and 4265 from Darocur series of BASF SE, and 184, 369, 500, 651, 784, 819, 907, 1300, 1700, 1800, 1850 and 2959 from Irgacure series thereof.

Additional examples of the photoradical polymerization initiator include 4-methoxyphenyl-2,4-bis(trichloromethyl)triazine, 2-(4-butoxystyryl)-5-trichloromethyl-1,3,4-oxadiazole, 9-phenylacridine, 9,10-benzphenazine, a benzophenone-Michler's ketone mixture, a hexaarylbiimidazole-mercaptobenzimidazole mixture, 1-(4-isopropylphenyl)-2-hydroxy-2-methylpropane-1-one, benzyl dimethyl ketal, 2-methyl-1-[4-(methylthio)phenyl]-2-morpholinopropane-1-one, a mixture of 2,4-diethylxanthone and methyl p-dimethylaminobenzoate and a mixture of benzophenone and methyltriethanolamine.

After the photoradical polymerization initiator is added to the liquid crystal composition, polymerization can be performed by irradiation with ultraviolet light while an electric field is applied. However, an unreacted polymerization initiator or a decomposition product of the polymerization initiator may cause a poor display such as the image persistence in the device. In order to prevent such an event, photopolymerization may be performed with no addition of the polymerization initiator. A preferred wavelength of irradiation light is in the range of about 150 nanometers to about 500 nanometers. A further preferred wavelength is in the range of about 250 nanometers to about 450 nanometers, and a most preferred wavelength is in the range of about 300 nanometers to about 400 nanometers.

Upon storing the polymerizable compound, the polymerization inhibitor may be added thereto for preventing polymerization. The polymerizable compound is ordinarily added to the composition without removing the polymerization inhibitor. Specific examples of the polymerization inhibitor include hydroquinone, a hydroquinone derivative such as methylhydroquinone, 4-t-butylcatechol, 4-methoxyphenol and phenothiazine.

The optically active compound is effective in inducing a helical structure in liquid crystal molecules to give a required twist angle to prevent a reverse twist. A helical pitch can be adjusted by adding the optically active compound thereto. Two or more optically active compounds may be added for the purpose of adjusting temperature dependence of the helical pitch. Preferred examples of the optically active compound include compounds (Op-1) to (Op-18) described below. In compound (Op-18), ring J is 1,4-cyclohexylene or 1,4-phenylene, and R²⁸ is alkyl having 1 to 10 carbons. Asterisk mark (*) represents asymmetrical carbon.

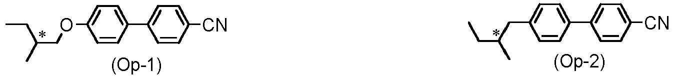

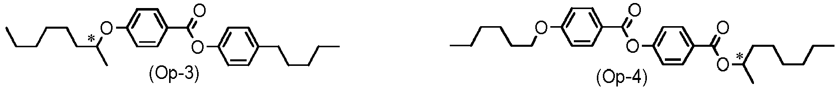

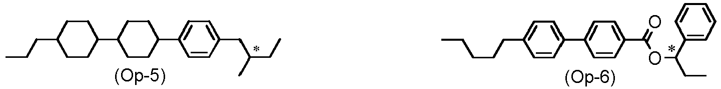

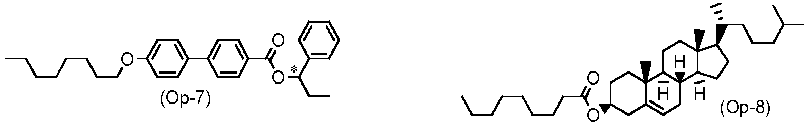

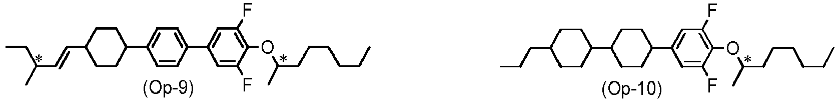

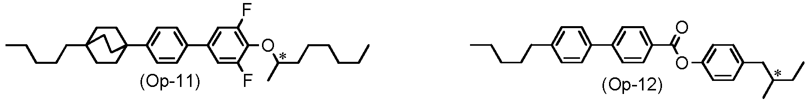

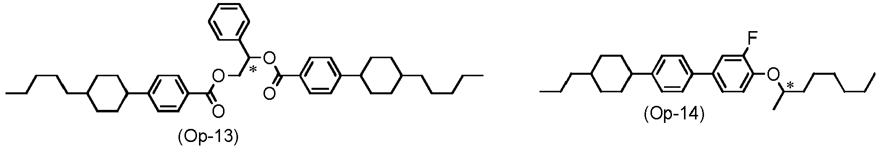

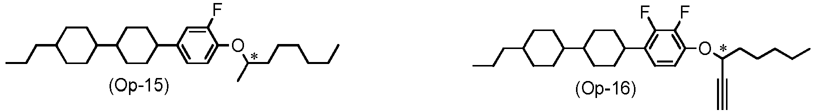

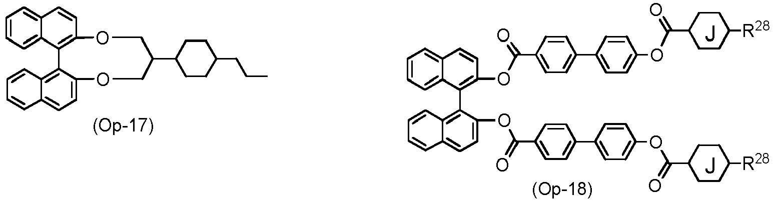

The antioxidant is effective for maintaining the large voltage holding ratio. Preferred examples of the antioxidant include compounds (AO-1) and (AO-2) described below; and Irganox 415, Irganox 565, Irganox 1010, Irganox 1035, Irganox 3114 and Irganox 1098 (trade names; BASF SE). The ultraviolet light absorber is effective for preventing a decrease of the maximum temperature. Preferred examples of the ultraviolet light absorber include a benzophenone derivative, a benzoate derivative and a triazole derivative, and specific examples include compounds (AO-3) and (AO-4) described below; Tinuvin 329, Tinuvin P, Tinuvin 326, Tinuvin 234, Tinuvin 213, Tinuvin 400, Tinuvin 328 and Tinuvin 99-2 (trade names; BASF SE); and 1,4-diazabicyclo[2.2.2]octane (DABCO).

The light stabilizer such as an amine having steric hindrance is preferred for maintaining the large voltage holding ratio. Preferred examples of the light stabilizer include compounds (AO-5), (AO-6) and (AO-7) described below; Tinuvin 144, Tinuvin 765 and Tinuvin 770DF (trade names; BASF SE); and LA-77Y and LA-77G (trade names; ADEKA Corporation). The heat stabilizer is also effective for maintaining the large voltage holding ratio, and preferred examples include Irgafos 168 (trade name; BASF SE). A dichroic dye such as an azo dye and an anthraquinone dye is added to the composition to be adapted for a device having a guest host (GH) mode. The antifoaming agent is effective for preventing foam formation. Preferred examples of the antifoaming agent include dimethyl silicone oil and methylphenyl silicone oil.

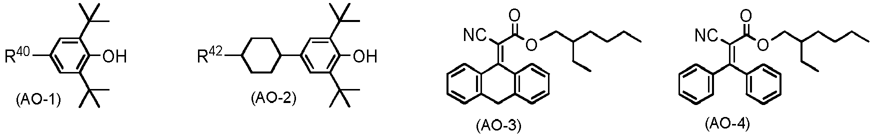

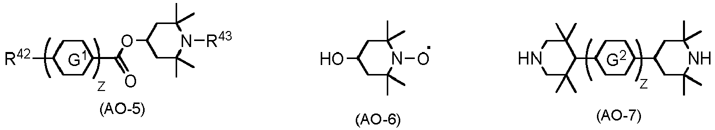

In compound (AO-1), R⁴⁰ is alkyl having 1 to 20 carbons, alkoxy having 1 to 20 carbons, -COOR⁴¹ or -CH₂CH₂COOR⁴¹, in which R⁴¹ is alkyl having 1 to 20 carbons. In compounds (AO-2) and (AO-5), R⁴² is alkyl having 1 to 20 carbons. In compound (AO-7) , R⁴³ is hydrogen, methyl or O^{•} (oxygen radical); ring G¹ is 1,4-cyclohexylene or 1,4-phenylene; in compound (AO-7), ring G² is 1,4-cyclohexylene, 1,4-phenylene, or 1,4-phenylene in which at least one hydrogen is replaced by fluorine; and in compounds (AO-5) and (AO-7), z is 1, 2 or 3.

### 4. Liquid crystal display device

The liquid crystal composition can be used in the liquid crystal display device having an operating mode such as the PC mode, the TN mode, the STN mode, the OCB mode and the PSA mode, and driven by an active matrix. The composition can also be used in the liquid crystal display device having the operating mode such as the PC mode, the TN mode, the STN mode, the OCB mode, the VA mode and the IPS mode, and driven by a passive matrix mode. The devices can be applied to any of a reflective type, a transmissive type and a transflective type.

The composition is also suitable for a nematic curvilinear aligned phase (NCAP) device, in which the composition is microencapsulated. The composition can also be used in a polymer dispersed liquid crystal display device (PDLCD) and a polymer network liquid crystal display device (PNLCD) . In the compositions, a large amount of polymerizable compound is added. On the other hand, when a proportion of the polymerizable compound is about 10% by weight or less based on the weight of the liquid crystal composition, the liquid crystal display device having the PSA mode can be prepared. A preferred proportion is in the range of about 0.1% by weight to about 2% by weight. A further preferred proportion is in the range of about 0.2% by weight to about 1.0% by weight. The PSA mode device can be driven by the driving mode such as the active matrix mode and the passive matrix mode. Such a device can be applied to any of the reflective type, the transmissive type and the transflective type.

### Examples

### 1. Examples of compound (1)

The invention will be described in more detail by way of Examples. Examples are described as typical examples, and therefore the invention is limited by the Examples. Compound (1) was synthesized according to procedures described below. The thus synthesized compound was identified by a method such as an NMR analysis. Physical properties of a compound or a composition, and characteristics of a device were measured by the methods described below.

NMR analysis: For measurement, DRX-500 made by Bruker BioSpin Corporation was used. In ¹H-NMR measurement, a sample was dissolved in a deuterated solvent such as CDCl₃, and measurement was carried out under conditions of room temperature, 500 MHz and 16 times of accumulation. Tetramethylsilane was used as an internal standard. In ¹⁹F-NMR measurement, CFCl₃ was used as an internal standard, and measurement was carried out under conditions of 24 times of accumulation. In explaining nuclear magnetic resonance spectra obtained, s, d, t, q, quin, sex and m stand for a singlet, a doublet, a triplet, a quartet, a quintet, a sextet and a multiplet, and br being broad, respectively.

Gas chromatographic analysis: For measurement, GC-2010 Gas Chromatograph made by Shimadzu Corporation was used. As a column, a capillary column DB-1 (length 60 m, bore 0.25 mm, film thickness 0.25 µm) made by Agilent Technologies, Inc. was used. As a carrier gas, helium (1 mL/minute) was used. A temperature of a sample vaporizing chamber and a temperature of a detector (FID) were set to 300°C and 300°C, respectively. A sample was dissolved in acetone and prepared to be a 1 wt% solution, and then 1 microliter of the solution obtained was injected into the sample vaporizing chamber. As a recorder, GC Solution System made by Shimadzu Corporation or the like was used.

Gas chromatography mass spectrometry: For measurement, GCMS-QP2010 Ultra Gas Chromatograph Mass Spectrometer made by Shimadzu Corporation was used. As a column, a capillary column DB-1 (length 60 m, bore 0.25 mm, film thickness 0.25 µm) made by Agilent Technologies, Inc. was used. As a carrier gas, helium (1 mL/minute) was used. A temperature of a sample vaporizing chamber, a temperature of an ion source, ionization voltage and emission current were set to 300°C, 200°C, 70 eV, 150 uA, respectively. A sample was dissolved in acetone and prepared to be a 1 wt% solution, and then 1 microliter of the solution obtained was injected into the sample vaporizing chamber. As a recorder, GCMS Solution System made by Shimadzu Corporation or the like was used.

HPLC analysis: For measurement, Prominence (LC-20AD; SPD-20A) made by Shimadzu Corporation was used. As a column, YMC-Pack ODS-A (length 150 mm, bore 4.6 mm, particle diameter 5 µm) made by YMC Co., Ltd. was used. As an eluate, acetonitrile and water were appropriately mixed and used. As a detector, a UV detector, an RI detector, a CORONA detector or the like was appropriately used. When the UV detector was used, a detection wavelength was set at 254 nm. A sample was dissolved in acetonitrile and prepared to be a 0.1 wt% solution, and then 1 microliter of the solution was injected into a sample chamber. As a recorder, C-R7Aplus made by Shimadzu Corporation was used.

Ultraviolet-Visible Spectrophotometry: For measurement, PharmaSpec UV-1700 made by Shimadzu Corporation was used. A detection wavelength was adjusted in the range of 190 nm to 700 nm. A sample was dissolved in acetonitrile and prepared to be a 0.01 mmol/L solution, and measurement was carried out by putting the solution in a quartz cell (optical path length: 1 cm) .

Sample for measurement: Upon measuring phase structure and a transition temperature (a clearing point, a melting point, a polymerization starting temperature or the like), a compound itself was used as a sample. Upon measuring physical properties such as maximum temperature of a nematic phase, viscosity, optical anisotropy and dielectric anisotropy, a mixture of a compound and a base liquid crystal was used as a sample.

When the sample prepared by mixing the compound with the base liquid crystal was used, an extrapolated value was calculated according to the following formula and a calculated value was described: [extrapolated value] = (100 × [measured value of a sample] - [% by weight of a base liquid crystal] × [measured value of the base liquid crystal]) / [% by weight of a compound].

Base liquid crystal (A): When the dielectric anisotropy of the compound was zero or positive, base liquid crystal (A) described below was used. A proportion of each component was expressed in terms of % by weight.

| | |
|---|---|
| 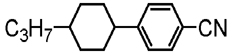 | 24% |
| 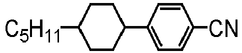 | 36% |
| 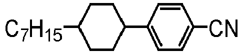 | 25% |
| 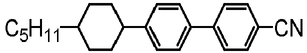 | 15% |

A ratio of the compound to base liquid crystal (A) was adjusted to (15% by weight : 85% by weight) . When crystals (or a smectic phase) precipitated at 25°C at the ratio, a ratio of the compound to base liquid crystal (A) was changed in the order of (10% by weight : 90% by weight), (5% by weight : 95% by weight) and (1% by weight : 99% by weight), and the sample was measured at a ratio at which no crystal (or no smectic phase) precipitated at 25°C. In addition, unless otherwise noted, the ratio of the compound to base liquid crystal (A) was (15% by weight : 85% by weight).

Measuring method: Physical properties were measured according to methods described below. Most of the methods are described in the Standard of Japan Electronics and Information Technology Industries Association (JEITA) discussed and established in JEITA (JEITA ED-2521B). A modified method was also applied. No thin film transistor (TFT) was attached to a TN device used for measurement.
(1) Phase structure: A sample was placed on a hot plate in a melting point apparatus (FP-52 Hot Stage made by Mettler-Toledo International Inc.) equipped with a polarizing microscope. A state of phase and a change thereof were observed with the polarizing microscope while the sample was heated at a rate of 3°C per minute, and a kind of the phase was specified.
(2) Transition temperature (°C): For measurement, a differential scanning calorimeter, Diamond DSC System, made by PerkinElmer, Inc. or a high sensitivity differential scanning calorimeter, X-DSC7000, made by SII NanoTechnology Inc. was used. A sample was heated and then cooled at a rate of 3°C per minute, and a starting point of an endothermic peak or an exothermic peak caused by a phase change of the sample was determined by extrapolation, and thus a transition temperature was determined. A melting point and a polymerization starting temperature of a compound were also measured using the apparatus. Temperature at which a compound undergoes transition from a solid to a liquid crystal phase such as the smectic phase and the nematic phase may be occasionally abbreviated as "minimum temperature of the liquid crystal phase." Temperature at which the compound undergoes transition from the liquid crystal phase to liquid may be occasionally abbreviated as "clearing point."
   A crystal was expressed as C. When the crystals were distinguishable in two kinds, each was expressed as C₁ or C₂. The smectic phase or the nematic phase was expressed as S or N. When smectic A phase, smectic B phase, smectic C phase or smectic F phase was distinguishable among the smectic phases, the phases were expressed as S_{A}, S_{B}, S_{C} or S_{F}, respectively. A liquid (isotropic) was expressed as I. A transition temperature was expressed as "C 50.0 N 100.0 I," for example. The expression indicates that a transition temperature from the crystals to the nematic phase is 50.0°C, and a transition temperature from the nematic phase to the liquid is 100.0°C.
(3) Compatibility of compounds: Samples in which the base liquid crystal and the compound were mixed for proportions of the compounds to be 20% by weight, 15% by weight, 10% by weight, 5% by weight, 3% by weight and 1% by weight were prepared. The samples were put in glass vials, and the glass vials were kept in freezers at -20°C or -30°C for a predetermined period of time. Whether or not a nematic phase was kept or whether or not crystals or a smectic phase precipitated was observed. Conditions under which the nematic phase was kept were applied as a measure of compatibility. The proportion of the compound and the temperature of the freezer may be changed when necessary.
(4) Maximum temperature of nematic phase (T_{NI} or NI; °C): A sample was placed on a hot plate in a melting point apparatus equipped with a polarizing microscope, and heated at a rate of 1°C per minute. Temperature when part of the sample began to change from a nematic phase to an isotropic liquid was measured. When the sample was a mixture of compound (1) and the base liquid crystal, the maximum temperature was expressed in terms of a symbol T_{NI}. When the sample was a mixture of compound (1) and a compound selected from compound (2) to compound (15), the maximum temperature was expressed as a symbol NI. A maximum temperature of the nematic phase may be occasionally abbreviated as "maximum temperature."
(5) Minimum temperature of nematic phase (T_{C}; °C): Samples each having a nematic phase were put in glass vials and kept in freezers at temperatures of 0°C, -10 °C, -20 °C, -30 °C and -40°C for 10 days, and then liquid crystal phases were observed. For example, when the sample maintained the nematic phase at -20°C and changed to crystals or a smectic phase at -30°C, T_{C} was expressed as T_{C} < -20°C. A minimum temperature of the nematic phase may be occasionally abbreviated as "minimum temperature."
(6) Viscosity (bulk viscosity; η; measured at 20°C; mPa·s): For measurement, a cone-plate (E type) rotational viscometer made by Tokyo Keiki Inc. was used.
(7) Viscosity (rotational viscosity; γ1; measured at 25°C; mPa·s): Measurement was carried out according to a method described in M. Imai et al., Molecular Crystals and Liquid Crystals, Vol. 259, p. 37 (1995) . A sample was put in a TN device in which a twist angle was 0 degrees and a distance (cell gap) between two glass substrates was 5 µm. Voltage was applied stepwise to the device in the range of 16 V to 19.5 V at an increment of 0.5 V. After a period of 0.2 second with no voltage application, voltage was repeatedly applied under conditions of only one rectangular wave (rectangular pulse; 0.2 second) and no voltage application (2 seconds). A peak current and a peak time of transient current generated by the applied voltage were measured. A value of rotational viscosity was obtained from the measured values and calculation equation (8) described on page 40 of the paper presented by M. Imai et al. A value of dielectric anisotropy required for the calculation was determined using the device by which the rotational viscosity was measured and by a method described below.
(8) Optical anisotropy (refractive index anisotropy; measured at 25°C; Δn): Measurement was carried out by an Abbe refractometer with a polarizing plate mounted on an ocular, using light at a wavelength of 589 nm. A surface of a main prism was rubbed in one direction, and then a sample was added dropwise onto the main prism. A refractive index (n||) was measured when a direction of polarized light was parallel to a direction of rubbing. A refractive index (n⊥) was measured when the direction of polarized light was perpendicular to the direction of rubbing. A value of optical anisotropy (Δn) was calculated from an equation: Δn = n|| - n⊥.
(9) Dielectric anisotropy (Δε; measured at 25°C) : A sample was put in a TN device in which a distance (cell gap) between two glass substrates was 9 µm and a twist angle was 80 degrees. Sine waves (10 V, 1 kHz) were applied to the device, and after 2 seconds, a dielectric constant (ε||) of liquid crystal molecules in a major axis direction was measured. Sine waves (0.5 V, 1 kHz) were applied to the device, and after 2 seconds, a dielectric constant (ε⊥) of liquid crystal molecules in a minor axis direction was measured. A value of dielectric anisotropy was calculated from an equation: Δε = ε|| - ε⊥.
(10) Elastic constant (K; measured at 25°C; pN): For measurement, HP4284A LCR Meter made by Yokogawa-Hewlett-Packard Co. was used. A sample was put in a horizontal alignment device in which a distance (cell gap) between two glass substrates was 20 µm. An electric charge of 0 V to 20 V was applied to the device, and electrostatic capacity (C) and applied voltage (V) were measured. The measured values were fitted to equation (2.98) and equation (2.101) on page 75 of "Liquid Crystal Device Handbook" (Ekisho Debaisu Handobukku in Japanese; Nikkan Kogyo Shimbun, Ltd.) and values of K₁₁ and K₃₃ were obtained from equation (2.99). Next, K₂₂ was calculated using the previously determined values of Kₙ and K₃₃ in equation (3.18) on page 171. Elastic constant K was expressed in terms of a mean value of the thus determined K₁₁, K₂₂ and K₃₃.
(11) Threshold voltage (Vth; measured at 25°C; V): For measurement, an LCD-5100 luminance meter made by Otsuka Electronics Co., Ltd. was used. A light source was a halogen lamp. A sample was put in a normally white mode TN device in which a distance (cell gap) between two glass substrates was 0.45/Δn (µm) and a twist angle was 80 degrees. A voltage (32 Hz, rectangular waves) to be applied to the device was stepwise increased from 0 V to 10 V at an increment of 0.02 V. On the occasion, the device was irradiated with light from a direction perpendicular to the device, and an amount of light transmitted through the device was measured. A voltage-transmittance curve was prepared, in which the maximum amount of light corresponds to 100% transmittance and the minimum amount of light corresponds to 0% transmittance. A threshold voltage is expressed in terms of a voltage at 90% transmittance.
(12) Change in heating current values (dH; measured at 25° C; µA): Then, dH was determined according to the following formula (A): $dH \left(μA\right) = Iha \left(μA\right) - Ihb \left(μA\right)$ where, Iha in formula (A) denotes a value of the current passing through the liquid crystal composition after heating, and Ihb denotes a value of the current passing through the liquid crystal composition before heating. The liquid crystal composition was heated at 150°C for 1 hour in atmospheric air. A TN device used for the measurement was prepared by facing two glass substrates obliquely vapor-deposited with silicon dioxide, in which a distance (cell gap) between the two glass substrates was 10 µm and an electrode area was 1 cm². A current value was determined by applying a rectangular wave of 3 V and 32 Hz to the device at 25°C.
(13) Voltage holding ratio (VHR-1; measured at 25°C; %): A TN device used for measurement had a polyimide alignment film, and a distance (cell gap) between two glass substrates was 5 µm. A sample was put in the device, and then the device was sealed with an ultraviolet-curable adhesive. The device was charged by applying a pulse voltage (60 microseconds at 5 V) at 25°C. A decaying voltage was measured for 16.7 milliseconds with a high-speed voltmeter, and area A between a voltage curve and a horizontal axis in a unit cycle was determined. Area B is an area without decay. A voltage holding ratio is expressed in terms of a percentage of area A to area B.
(14) Voltage holding ratio (VHR-2; measured at 80°C; %): A voltage holding ratio was measured by a method described above except that the voltage holding ratio was measured at 80°C in place of 25°C. The results were expressed in terms of a symbol VHR-2.
(15) Specific resistance (p; measured at 25°C; Ω cm): Into a vessel equipped with electrodes, 1.0 mL of sample was injected. A direct current voltage (10 V) was applied to the vessel, and a direct current after 10 seconds was measured. Specific resistance was calculated from the following equation: $\begin{matrix}\left(specific resistance\right) = { \left(voltage\right) \times ( electric capacity of a \\ vessel ) } / \left\{\left(direct current\right) \times \left(dielectric constant of vacuum\right)\right\} .\end{matrix}$
(16) Response time (τ; measured at 25°C; ms): For measurement, an LCD-5100 luminance meter made by Otsuka Electronics Co., Ltd. was used. A light source was a halogen lamp. A low-pass filter was set to 5 kHz. A sample was put in a normally white mode TN device in which a distance (cell gap) between two glass substrates was 5.0 µm and a twist angle was 80 degrees. A voltage (rectangular waves; 60 Hz, 5 V, 0.5 second) was applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. A rise time (τr; millisecond) was expressed in terms of time required for a change from 90% transmittance to 10% transmittance. A fall time (τf; millisecond) was expressed in terms of time required for a change from 10% transmittance to 90% transmittance. A response time was expressed by a sum of the rise time and the fall time thus obtained.
(17) Flicker rate (measured at 25°C; %): For measurement, 3298F Multimedia Display Tester made by Yokogawa Electric Corporation was used. A light source was LED. A sample was put in a normally black mode FFS device in which a distance (cell gap) between two glass substrates was 3.5 µm and a rubbing direction was anti-parallel. The device was sealed with an ultraviolet-curable adhesive. Voltage was applied to the device, and a voltage having a maximum amount of light transmitted through the device was measured. A flicker rate displayed thereon was read by bringing a sensor unit close to the device while voltage was applied to the device.

Raw material: Solmix (registered trademark) A-11 is a mixture of ethanol (85.5%), methanol (13.4%) and isopropanol (1.1%), and was purchased from Japan Alcohol Trading Co., Ltd.

### Synthesis Example 1

### Synthesis of compound (No. 1-3-7)

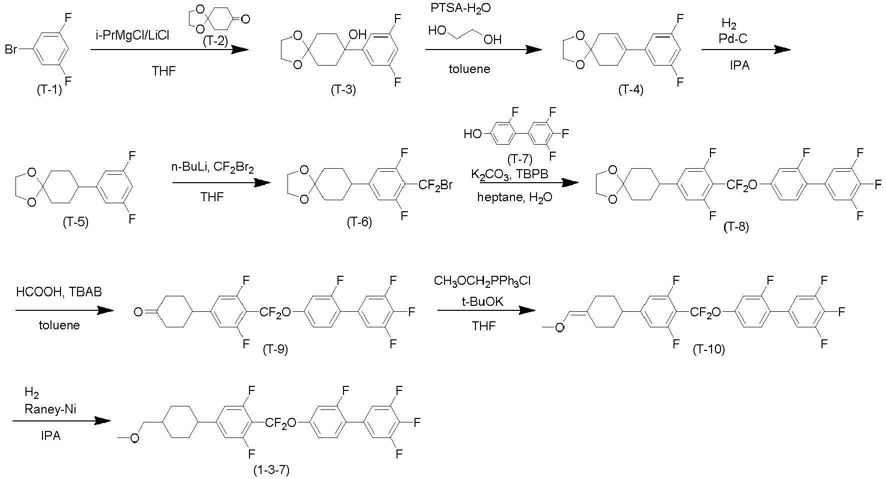

### First step

Under a nitrogen atmosphere, an isopropylmagnesium chloride-lithium chloride complex (1.3M, THF (tetrahydrofuran) solution, 281 mL) and THF (500 mL) were put in a reaction vessel, and the resulting mixture was cooled to 0°C. Compound (T-1) (67.96 g) was slowly added thereto, and the resulting mixture was stirred until compound (T-1) disappeared. Next, compound (T-2) (50.00 g) was slowly added thereto, and the resulting mixture was stirred for 8 hours while returning to room temperature. The reaction mixture was poured into a saturated aqueous solution of ammonium chloride, and an aqueous layer thereof was subjected to extraction with toluene. A combined organic layer was washed with brine. The resulting material was dried over anhydrous magnesium sulfate, and then concentrated under reduced pressure to obtain compound (T-3) (79.00 g, yield: 91%).

### Second step

Under a nitrogen atmosphere, compound (T-3) (79.00 g), ethylene glycol (3.95 g), PTSA (paratoluenesulfonic acid monohydrate, 2.37 g) and toluene (790 mL) were put in a reaction vessel, and the resulting mixture was heated under reflux for 4 hours while distilled-off water was removed. The reaction mixture was poured into a saturated aqueous solution of sodium bicarbonate, and an aqueous layer thereof was subjected to extraction with toluene. A combined organic layer was washed with brine and dried over anhydrous magnesium sulfate. The resulting solution was concentrated under reduced pressure, and the resulting residue was purified by silica gel chromatography (toluene/ethyl acetate=10/1 in a volume ratio) to obtain compound (T-4) . Compound (T-4) obtained, 5% palladium on carbon (2.37 g) and IPA (790 mL) were put in a reaction vessel, and the resulting mixture was stirred for 8 hours under a hydrogen atmosphere. The catalyst was removed by filtration, and the resulting solution was concentrated under reduced pressure, and the resulting residue was purified by silica gel chromatography (heptane/toluene=10/1 in a volume ratio), and further purified through recrystallization in Solmix (registered trademark) A-11 to obtain compound (T-5) (54.90 g, Yield: 73%).

### Third step

Under a nitrogen atmosphere, compound (T-5) (54.90 g) and THF (549 mL) were put in a reaction vessel, and the resulting mixture was cooled to -60°C. Then, n-butyl lithium (1.65 M, n-hexane solution, 157 mL) was slowly added thereto, and the resulting mixture was stirred for 2 hours. Next, dibromodifluoromethane (54.36 g) was slowly added thereto and the resulting mixture was stirred for 8 hours while returning to room temperature. The resulting reaction mixture was poured into water, and an aqueous layer thereof was subjected to extraction with toluene. Then, a combined organic layer was washed with brine and dried over anhydrous magnesium sulfate. The resulting solution was concentrated under reduced pressure and the resulting residue was purified by silica gel chromatography (toluene/ethyl acetate=10/1 in a volume ratio) to obtain compound (T-6) (65.7 g; yield: 48%).

### Fourth step

Compound (T-6) (20.00 g), compound (T-7) (9.24 g) synthesized according to the method described in WO 2008/105286 Al, potassium carbonate (5.27 g), tetrabutylphosphonium bromide (TBPB) (6.47 g), heptane (12 mL) and water (110 mL) were put in a reaction vessel, and the resulting mixture was heated under reflux for 20 hours. The reaction mixture was poured into water, and an aqueous layer thereof was subjected to extraction with toluene. A combined organic layer was washed with brine and dried over anhydrous magnesium sulfate. The resulting solution was concentrated under reduced pressure, and the resulting residue was purified by silica gel column chromatography (toluene/ethyl acetate=10/1 in a volume ratio), and further purified through recrystallization in Solmix (registered trademark) A-11 to obtain compound (T-8) (18.80 g, yield: 74%).

### Fifth step

Under a nitrogen atmosphere, compound (T-8) (18.80 g), formic acid (38.4 mL), TBAB (2.27 g) and toluene (128 mL) were put in a reaction vessel, and the resulting mixture was stirred at room temperature for 3 hours. The reaction mixture was poured into water, and returned to neutrality with sodium bicarbonate. An aqueous layer thereof was subjected to extraction with toluene, and a combined organic layer was washed with brine and dried over anhydrous magnesium sulfate. The resulting solution was concentrated under reduced pressure, and the resulting residue was purified through recrystallization in heptane to obtain compound (T-9) (9.00 g, yield: 76%).

### Sixth step

Under a nitrogen atmosphere, (methoxymethyl)triphenylphosphonium chloride (8.02 g) and THF (90 mL) were put in a reaction vessel, and the resulting mixture was cooled to -40°C. Potassium t-butoxide (2.62 g) was added thereto, and the resulting mixture was stirred for 1 hour while maintaining -40°C. Next, a THF (90 mL) solution of compound (T-9) (9.00 g) was slowly added dropwise thereto, and after dropwise addition, the resulting mixture was stirred for 3 hours while returning to room temperature. The reaction mixture was poured into water, and an aqueous layer thereof was subjected to extraction with toluene. A combined organic layer was washed with brine and dried over anhydrous magnesium sulfate. The resulting solution was concentrated under reduced pressure, and the resulting residue was purified by silica gel column chromatography (toluene/heptane=2/1 in a volume ratio) to obtain compound (T-10). Compound (T-10) obtained and Raney nickel (0.9 g) were put in a reaction vessel, and the resulting mixture was stirred for 30 hours under a hydrogen atmosphere.

The catalyst was removed by filtration, and then the resulting solution was concentrated under reduced pressure, and the resulting residue was purified by silica gel column chromatography (toluene/heptane=2/1 in a volume ratio), and further purified through recrystallization in Solmix (registered trademark) A-11 to obtain compound (No. 1-3-7) (1.86 g, yield: 19%).
¹H-NMR (ppm; CDCl₃) : δ 7.38 - 7.34 (m, 1H), 7.17 - 7.12 (m, 4H), 6.86 - 6.83 (m, 2H), 3.35 (s, 3H), 3.24 (d, J= 6.3 Hz, 2H), 2.54 - 2.47 (m, 1H), 1.95 - 1.93 (m, 4H), 1.69 - 1.61 (m, 1H), 1.47 - 1.38 (m, 2H), 1.17 - 1.08 (m, 2H)
Transition temperature: C 80.2 N 96.4 I.

Maximum temperature (T_{NI}) = 59.7°C; dielectric anisotropy (Δε) = 40.2; dielectric constant (ε⊥) in the minor axis direction = 8.5; optical anisotropy (Δn) = 0. 137; viscosity (η) = 81.6 mPa·s.

### Synthesis Example 2

### Synthesis of compound (No. 1-1-4)

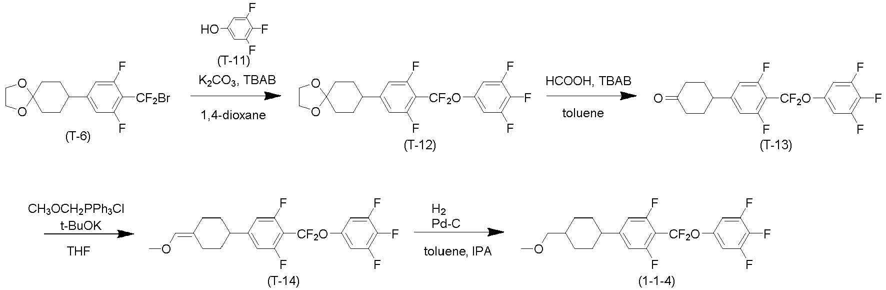

### First step

Under a nitrogen atmosphere, compound (T-6) (25.00 g), compound (T-11) (6.164 g), potassium carbonate (12.08 g), tetrabutylammonium bromide (TBAB) (4.03 g) and 1,4-dioxane (200 mL) were put in a reaction vessel, and the resulting mixture was heated under reflux for 8 hours. The reaction mixture was poured into water, and an aqueous layer thereof was subjected to extraction with toluene. A combined organic layer was washed with brine and dried over anhydrous magnesium sulfate. The resulting solution was concentrated under reduced pressure, and the resulting residue was purified by silica gel column chromatography (toluene/ethyl acetate=10/1 in a volume ratio), and further purified by recrystallization in Solmix (registered trademark) A-11 to obtain compound (T-12) (12.82 g, yield: 62%).

### Second step

Under a nitrogen atmosphere, compound (T-12) (12.82 g), formic acid (38.4 mL), TBAB (2.27 g) and toluene (128 mL) were put in a reaction vessel, and the resulting mixture was stirred at room temperature for 3 hours . The reaction mixture was poured into water and returned to neutrality with sodium bicarbonate. An aqueous layer thereof was subjected to extraction with toluene, and a combined organic layer was washed with brine and dried over anhydrous magnesium sulfate. The resulting solution was concentrated under reduced pressure, and the resulting residue was purified by silica gel column chromatography (toluene/ethyl acetate=10/1 in a volume ratio) to obtain compound (T-13) (11.17 g, yield: 99%).

### Third step

Under a nitrogen atmosphere, (methoxymethyl)triphenylphosphonium chloride (12.30 g) and THF (100 mL) were put in a reactor, and the resulting mixture was cooled to -40°C. Potassium t-butoxide (4.03 g) was added thereto, and the resulting mixture was stirred for 1 hour while maintaining -40°C. Next, a THF (40 mL) solution of compound (T-13) (10.41 g) was slowly added dropwise thereto, and after dropwise addition, the resulting mixture was stirred for 3 hours while returning to room temperature. The reaction mixture was poured into water, and an aqueous layer thereof was subjected to extraction with toluene. A combined organic layer was washed with brine and dried over anhydrous magnesium sulfate. The resulting solution was concentrated under reduced pressure, and the resulting residue was purified by silica gel column chromatography (toluene/heptane=2/1 in a volume ratio) to obtain compound (T-14). Compound (T-14) obtained, 5% palladium on carbon (0.31 g), toluene (100 mL) and IPA (100 mL) were put in a reaction vessel, and the resulting mixture was stirred for 12 hours under a hydrogen atmosphere. The catalyst was removed by filtration, and then the resulting solution was concentrated under reduced pressure, and the resulting residue was purified by silica gel column chromatography (ethyl acetate/heptane=1/10 in a volume ratio), and further purified through recrystallization in in Solmix (registered trademark) A-11 to obtain compound (1-1-4) (3.71 g, yield: 33%).
¹H-NMR (ppm; CDCl₃): δ 6. 98 - 6.92 (m, 2H), 6.85 - 6.82 (m, 2H), 3.35 (s, 3H), 3.24 (J = 6.3 Hz, 2H), 2.50 (tt, J = 12.2 Hz, J = 3.1 Hz, 1H), 1.97 - 1.90 (m, 4H), 1.69 - 1.60 (m, 1H), 1.46 - 1.37 (m, 2H), 1.17 - 1.08 (m, 2)

Transition temperature: C 57.1 I.

Maximum temperature (T_{NI}) = -19.6°C; dielectric anisotropy (Δε) = 31.1; dielectric constant in a minor axis direction (ε⊥) = 9.1; optical anisotropy (Δn) = 0 .070; viscosity (η) = 49.8 mPa·s.

### Comparative Example 1

### Comparison of physical properties

Compound (S-1) below was selected as a comparative compound. The reason is that the compound is described in JP H10-251186 A and is similar to the compound of the invention. 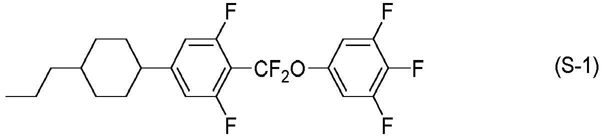 ¹H-NMR (ppm; CDCl₃): δ 6.98 - 6.92 (m, 2H), 6.85 - 6.82 (m, 2H), 2.49 (tt, J = 12.2 Hz, J = 3.1 Hz, 1H), 1.90 - 1.88 (m, 4H), 1.44 - 1.19 (m, 7H), 1.08 - 1.00 (m, 2H), 0.90 (J = 7.5 Hz, 3H)

Transition temperature: C 40.2 I.

Maximum temperature (T_{NI}) = -11.0°C; dielectric anisotropy (Δε) = 20.3; dielectric constant in a minor axis direction (ε⊥) = 7.2; optical anisotropy (Δn) = 0.064; viscosity (η) = 38.9 mPa·s

**Table 2. Physical properties of compound (No. 1-1-4) and comparative compound (S-1)**

| | Compound (No. 1-1-4) | Comparative compound (S-1) |
|---|---|---|
| | 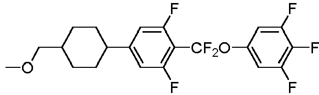 | 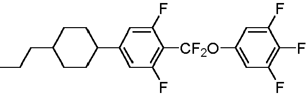 |
| Maximum temperature (T_{NI}) | -19.6°C | -11.0°C |
| Optical anisotropy (Δn) | 0.070 | 0.064 |
| Dielectric anisotropy (Δε) | 31.1 | 20.3 |
| Dielectric constant in the minor axis direction (ε_{⊥}) | 9.1 | 7.2 |
| Viscosity (η) | 49.8 mPa·s | 38.9 mPa·s |

Physical properties of compound (No. 1-1-4) and comparative compound (S-1) obtained in Synthesis Example 2 are summarized in Table 2. Table 2 shows that compound (No. 1-1-4) is superior to comparative compound (S-1) in view of larger dielectric anisotropy and further a larger dielectric constant in the minor axis direction.

### Comparative Example 2

Compound (S-2) below was selected as a comparative compound. The reason is that the compound is similar to the compound of the invention. The compound was synthesized according to the method described in JP H10-251186 A. 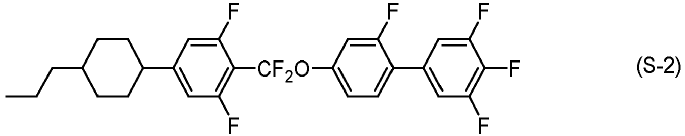 ¹H-NMR (ppm; CDCl₃): δ 7.37 - 7.34 (m, 1H), 7.17 - 7.12 (m, 4H), 6.85 - 6.83 (m, 2H), 2.51 - 2.46 (m, 1H), 1.90 - 1.88 (m, 4H), 1.44 - 1.19 (m, 7H), 1.09 - 1.00 (m, 2H), 0.90 (t, J = 7.5 Hz, 3H)

Transition temperature: C 74.5 N 118.5 I.

Maximum temperature (T_{NI}) = 69.0°C; dielectric anisotropy (Δε) = 28.3; dielectric constant in a minor axis direction (ε⊥) = 6.5; optical anisotropy (Δn) = 0.130; viscosity (η) = 65.7 mPa·s

| Table 3 Physical properties of compound (No. 1-3-7) and comparative compound (S-2) | | |
|---|---|---|
| | Compound (No. 1-3-7) | Comparative compound (S-2) |
| | 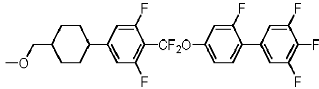 | 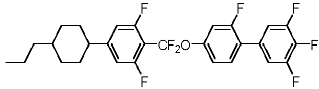 |
| Maximum temperature (T_{NI}) | 59.7°C | 69.0°C |
| Optical anisotropy (Δn) | 0.137 | 0.130 |
| Dielectric anisotropy (Δε) | 40.2 | 28.3 |
| Dielectric constant in the minor axis direction (ε_{⊥}) | 8.5 | 6.5 |
| Viscosity (η) | 81.6 mPa·s | 65.7 mPa·s |

Physical properties of compound (No. 1-3-7) and comparative compound (S-2) obtained in Synthesis Example 1 are summarized in Table 3. Table 3 shows that compound (No. 1-3-7) superior to comparative compound (S-2) in view of larger dielectric anisotropy and further a larger dielectric constant in the minor axis direction.

### 2. Synthesis of compound (1)

Compound (1) is synthesized according to "2. Synthesis of compound (1)" and Synthesis Example described above. Specific examples of such a compound include compounds (No. 1-1-1) to (No. 1-130), compounds (No. 1-2-1) to (No. 1-2-48) and compounds (No. 1-3-1) to (No. 1-3-31) described below.

| | | | |
|---|---|---|---|
| 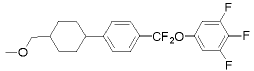 | 1-1-1 | 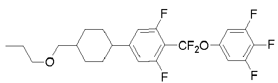 | 1-1-16 |
| 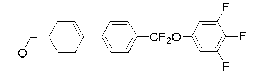 | 1-1-2 | 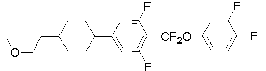 | 1-1-17 |
| 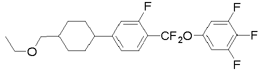 | 1-1-3 | 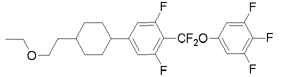 | 1-1-18 |
| 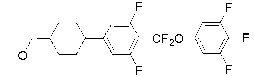 | 1-1-4 | 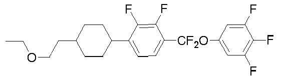 | 1-1-19 |
| 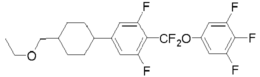 | 1-1-5 | 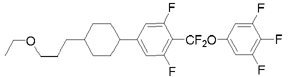 | 1-1-20 |
| 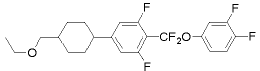 | 1-1-6 | 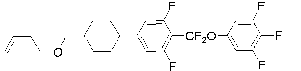 | 1-1-21 |
| 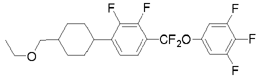 | 1-1-7 | 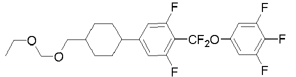 | 1-1-22 |
| 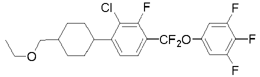 | 1-1-8 | 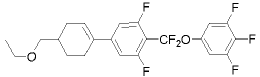 | 1-1-23 |
| 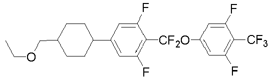 | 1-1-9 | 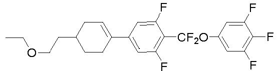 | 1-1-24 |
| 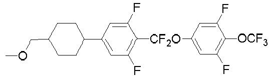 | 1-1-10 | 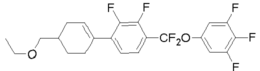 | 1-1-25 |
| 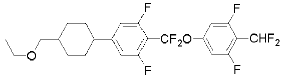 | 1-1-11 | 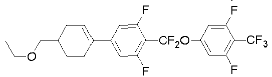 | 1-1-26 |
| 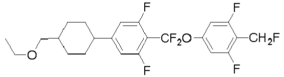 | 1-1-12 | 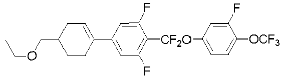 | 1-1-27 |
| 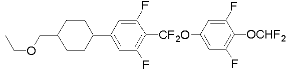 | 1-1-13 | 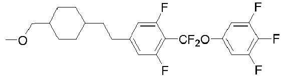 | 1-1-28 |
| 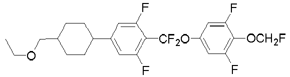 | 1-1-14 | 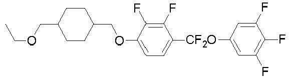 | 1-1-29 |
| 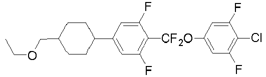 | 1-1-15 | 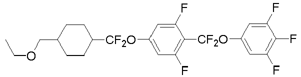 | 1-1-30 |

| | | | |
|---|---|---|---|
| 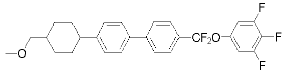 | 1-2-1 | 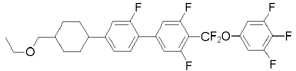 | 1-2-16 |
| 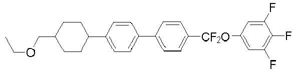 | 1-2-2 | 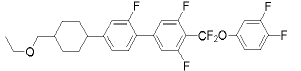 | 1-2-17 |
| 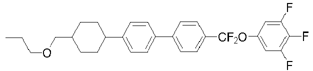 | 1-2-3 | 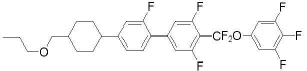 | 1-2-18 |
| 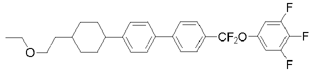 | 1-2-4 | 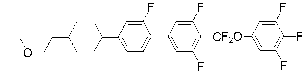 | 1-2-19 |
| 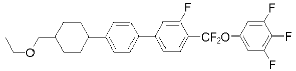 | 1-2-5 | 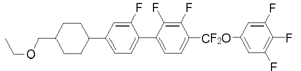 | 1-2-20 |
| 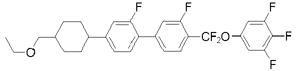 | 1-2-6 | 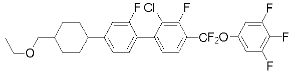 | 1-2-21 |
| 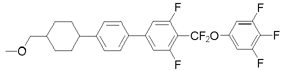 | 1-2-7 | 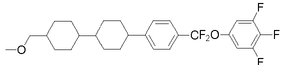 | 1-2-22 |
| 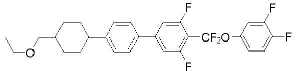 | 1-2-8 | 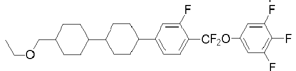 | 1-2-23 |
| 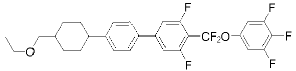 | 1-2-9 | 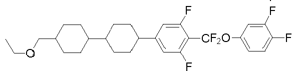 | 1-2-24 |
| 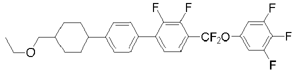 | 1-2-10 | 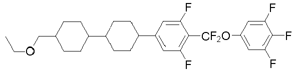 | 1-2-25 |
| 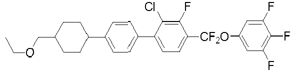 | 1-2-11 | 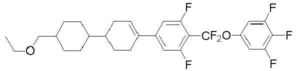 | 1-2-26 |
| 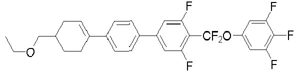 | 1-2-12 | 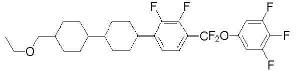 | 1-2-27 |
| 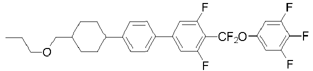 | 1-2-13 | 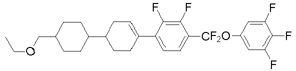 | 1-2-28 |
| 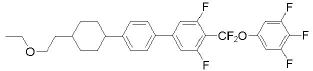 | 1-2-14 | 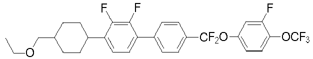 | 1-2-29 |
| 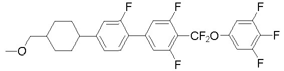 | 1-2-15 | 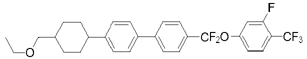 | 1-2-30 |

| | | | |
|---|---|---|---|
| 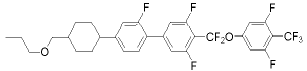 | 1-2-31 | 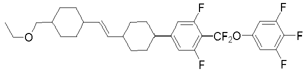 | 1-2-46 |
| 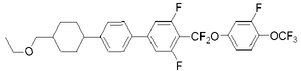 | 1-2-32 | 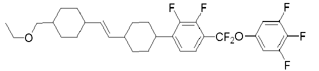 | 1-2-47 |
| 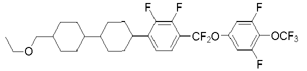 | 1-2-33 | 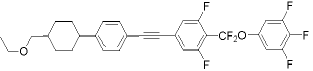 | 1-2-48 |
| 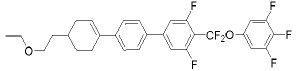 | 1-2-34 | 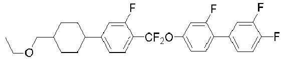 | 1-3-1 |
| 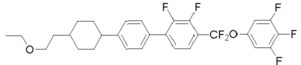 | 1-2-35 | 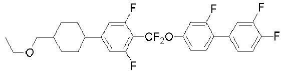 | 1-3-2 |
| 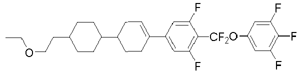 | 1-2-36 | 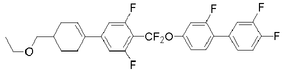 | 1-3-3 |
| 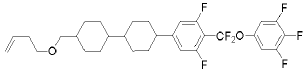 | 1-2-37 | 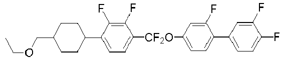 | 1-3-4 |
| 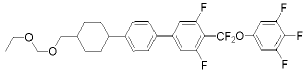 | 1-2-38 | 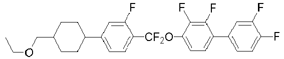 | 1-3-5 |
| 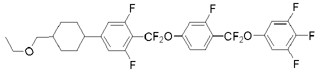 | 1-2-39 | 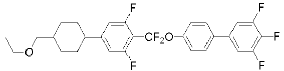 | 1-3-6 |
| 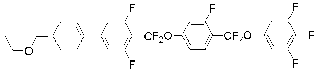 | 1-2-40 | 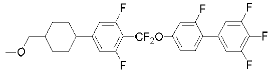 | 1-3-7 |
| 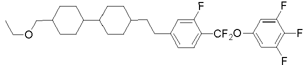 | 1-2-41 | 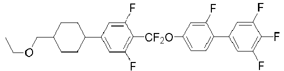 | 1-3-8 |
| 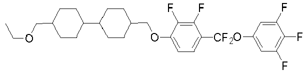 | 1-2-42 | 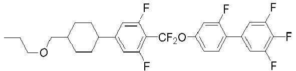 | 1-3-9 |
| 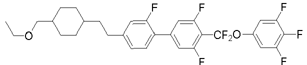 | 1-2-43 | 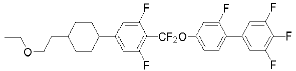 | 1-3-10 |
| 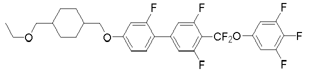 | 1-2-44 | 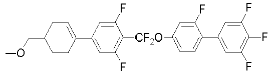 | 1-3-11 |
| 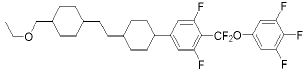 | 1-2-45 | 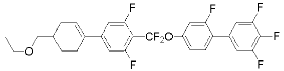 | 1-3-12 |

| | | | |
|---|---|---|---|
| 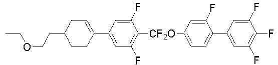 | 1-3-13 | 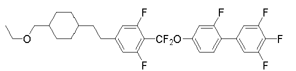 | 1-3-29 |
| 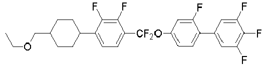 | 1-3-14 | 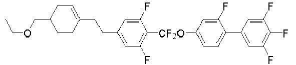 | 1-3-30 |
| 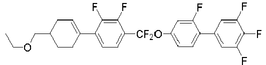 | 1-3-15 | 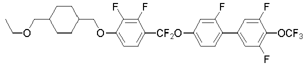 | 1-3-31 |
| 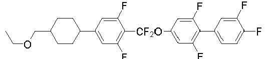 | 1-3-16 | | |
| 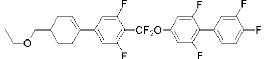 | 1-3-17 | | |
| 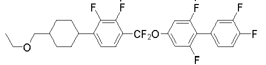 | 1-3-18 | | |
| 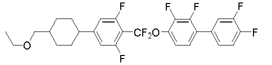 | 1-3-19 | | |
| 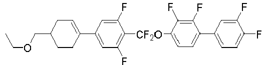 | 1-3-20 | | |
| 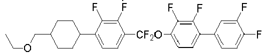 | 1-3-21 | | |
| 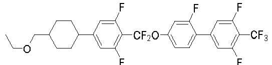 | 1-3-22 | | |
| 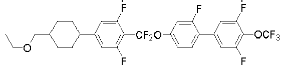 | 1-3-23 | | |
| 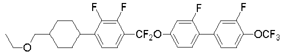 | 1-3-24 | | |
| 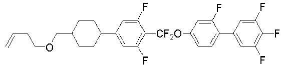 | 1-3-25 | | |
| 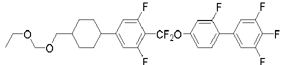 | 1-3-26 | | |
| 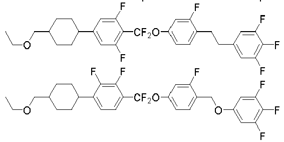 | 1-3-27 | | |
| | 1-3-28 | | |

### 3. Examples of compositions

The invention will be described in more detail by way of Examples. Examples are described as typical examples, and therefore the invention is not limited by the Examples. For example, the invention includes a composition in Use Example, and also a mixture of a composition in Use Example 1 and a composition in Use Example 2. The invention also includes a mixture prepared by mixing at least two compositions in Use Examples. The compounds in Use Examples were expressed using symbols according to definitions in Table 3 below. In Table 3, a configuration with regard to 1,4-cyclohexylene is trans. A parenthesized number after the symbol in Use Example expresses a chemical formula to which the compound belongs. A symbol (-) means a liquid crystal compound different from compounds (1) to (15). A proportion (percentage) of the liquid crystal compound is expressed in terms of weight percent (% by weight) based on the weight of the liquid crystal composition without containing an additive. Values of physical properties of the composition were summarized in a last part. The physical properties were measured according to the methods described above, and measured values were directly described (without extrapolation).

**Table 4 Method for Description of Compounds using Symbols**

| R-(A1)-Z1-.....-Zn-(An)-R' | | | |
|---|---|---|---|
| 1) Left-terminal Group R- | Symbol | 4) Ring Structure -An- | Symbol |
| CₙH₂ₙ₊₁- | n- | 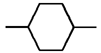 | H |
| CₙH₂ₙ₊₁O- | nO- | | |
| CₘH₂ₘ₊₁OCₙH₂ₙ- | mOn- | 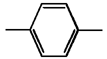 | B |
| CH₂=CH-V- | V- | | |
| CₙH₂ₙ₊₁-CH=CH- | nV- | | |
| CH₂=CH-CₙH₂ₙ- | Vn- | 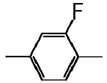 | B(F) |
| CₘH₂ₘ₊₁-CH=CH-CₙH₂ₙ- | mVn- | | |
| CF₂=CH- | VFF- | 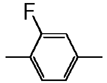 | B(2F) |
| CF₂=CH-CₙH₂ₙ- | VFFn- | | |

| 2) Right-terminal Group -R' | Symbol | | |
|---|---|---|---|
| -CₙH₂ₙ₊₁ | -n | 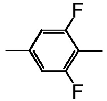 | B(F,F) |
| -OCₙH₂ₙ₊₁ | -On | | |
| -COOCH₃ | -EMe | | |
| -CH=CH₂ | -V | 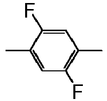 | B(2F,5F) |
| -CH=CH-CₙH₂ₙ₊₁ | -Vn | | |
| -CₙH₂ₙ-CH=CH₂ | -nV | | |
| -CₘH₂ₘ₋CH=CH-CₙH₂ₙ₊₁ | -mVn | 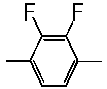 | B(2F,3F) |
| -CH=CF₂ | -VFF | | |
| -F | -F | | |
| -Cl | -CL | 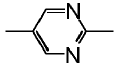 | Py |
| -OCF₃ | -OCF3 | | |
| -OCF₂H | -OCF2H | 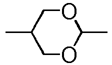 | G |
| -CF₃ | -CF₃ | | |
| -OC H =CH-CF₃ | -OVCF3 | | |
| -C≡N | -C | 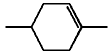 | ch |

| 3) Bonding Group -Zn- | Symbol | | |
|---|---|---|---|
| -CₙH₂ₙ- | n | 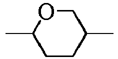 | Dh |
| -COO- | E | | |
| -CH=CH- | V | 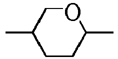 | dh |
| -CH₂O- | 1O | | |
| -OCH₂- | O1 | 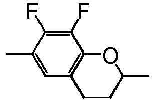 | Cro(7F,8F) |
| -CF₂O- | X | | |
| -C≡C- | T | | |

| 5) Examples of Description | | | |
|---|---|---|---|
| Example 1 1O1-HB(F,F)XB(F,F)-F | | Example 2 3-BB(F,F)XB(F,F)-F | |
| 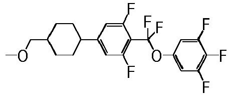 | | 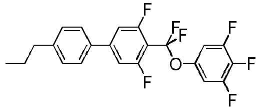 | |

| Example 3 3-HB-O2 | | Example 4 3-HBB(2F,3F)-O2 | |
|---|---|---|---|
| 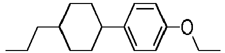 | | 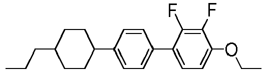 | |

### Use Example 1

| | | |
|---|---|---|
| 1O1-HB(F,F)XB(F,F)-F | (No.1-1-4) | 8% |
| 2-HB-C | (8-1) | 4 % |
| 3-HB-C | (8-1) | 10% |
| 3-HB-O2 | (2-5) | 14% |
| 2-BTB-1 | (2-10) | 4 % |
| 3-HHB-F | (6-1) | 5% |
| 3-HHB-1 | (3-1) | 7% |
| 3-HHB-O1 | (3-1) | 4% |
| 3-HHB-3 | (3-1) | 13% |
| 3-HHEB-F | (6-10) | 3% |
| 5-HHEB-F | (6-10) | 3% |
| 2-HHB(F)-F | (6-2) | 6% |
| 3-HHB(F)-F | (6-2) | 8 % |
| 5-HHB(F)-F | (6-2) | 6% |
| 3-HHB(F,F)-F | (6-3) | 5% |

NI = 88.8°C; η = 18.9 mPa·s; Δn = 0.098; Δε = 6.5.

### Use Example 2

| | | |
|---|---|---|
| 101-HBBXB(F,F)-F | (No.1-2-1) | 5% |
| 3-HB-CL | (5-2) | 15% |
| 3-HB-O2 | (2-5) | 10% |
| 3-HHB (F, F)-F | (6-3) | 5% |
| 3-HBB(F,F)-F | (6-24) | 30% |
| 5-HBB(F,F)-F | (6-24) | 25% |
| 5-HBB(F)B-2 | (4-5) | 5% |
| 5-HBB(F)B-3 | (4-5) | 5% |

NI = 71.8°C; η = 24.0 mPa·s; Δn = 0.127; Δε = 7.3.

### Use Example 3

| | | |
|---|---|---|
| 101-HB(F,F)XB(F)B(F,F)-F | (No.1-3-7) | 6 % |
| 7-HB(F,F)-F | (5-4) | 3% |
| 3-HB-O2 | (2-5) | 6 % |
| 2-HHB (F) -F | (6-2) | 10% |
| 3-HHB(F)-F | (6-2) | 8 % |
| 5-HHB (F) - F | (6-2) | 10 % |
| 2-HBB(F)-F | (6-23) | 10% |
| 3-HBB(F)-F | (6-23) | 8 % |
| 5-HBB(F)-F | (6-23) | 13% |
| 2-HBB-F | (6-22) | 5% |
| 3-HBB-F | (6-22) | 5% |
| 5-HBB-F | (6-22) | 3% |
| 3-HBB(F,F)-F | (6-24) | 4% |
| 5-HBB(F,F)-F | (6-24) | 9% |

NI = 84.5°C; η = 28.1 mPa·s; Δn = 0.117; Δε = 7.7

### Use Example 4

| | | |
|---|---|---|
| 201-chB(F,F)XB(F,F)-F | (No.1-1-23) | 6% |
| 5-HB-CL | (5-2) | 18% |
| 3-HHB-F | (6-1) | 6% |
| 3-HHB-CL | (6-1) | 5% |
| 4-HHB-CL | (6-1) | 5% |
| 3-HHB(F)-F | (6-2) | 9% |
| 4-HHB(F)-F | (6-2) | 8% |
| 5-HHB(F)-F | (6-2) | 10 % |
| 7-HHB(F)-F | (6-2) | 9 % |
| 5-HBB(F)-F | (6-23) | 6% |
| 101-HBBH-5 | (4-1) | 3% |
| 3-HHBB (F, F)-F | (7-6) | 3% |
| 4-HHBB (F, F)-F | (7-6) | 3% |
| 5-HHBB (F, F)-F | (7-6) | 3% |
| 3-HH2BB(F,F)-F | (7-15) | 3% |
| 4-HH2BB(F,F)-F | (7-15) | 3% |

### Use Example 5

| | | |
|---|---|---|
| 2O1-HB(2F,3F)XB(F,F)-F | (No.1-1-7) | 4% |
| 3-HHB (F, F)-F | (6-3) | 9% |
| 3-H2HB(F,F)-F | (6-15) | 10% |
| 4-H2HB(F,F)-F | (6-15) | 7% |
| 5-H2HB(F,F)-F | (6-15) | 7% |
| 3-HBB(F,F)-F | (6-24) | 20% |
| 5-HBB(F,F)-F | (6-24) | 18% |
| 3-H2BB(F,F)-F | (6-27) | 8 % |
| 5-HHBB (F, F)-F | (7-6) | 3% |
| 5-HHEBB-F | (7-17) | 3% |
| 3-HH2BB(F,F)-F | (7-15) | 3% |
| 1O1-HBBH-4 | (4-1) | 3% |
| 1O1-HBBH-5 | (4-1) | 5% |

### Use Example 6

| | | |
|---|---|---|
| 2O2-HB(F,F)XB(F,F)-F | (No.1-1-18) | 7 % |
| 5-HB-F | (5-2) | 10% |
| 6-HB-F | (5-2) | 9 % |
| 7-HB-F | (5-2) | 6 % |
| 2-HHB-OCF3 | (6-1) | 6% |
| 3-HHB-OCF3 | (6-1) | 6% |
| 4-HHB-OCF3 | (6-1) | 6% |
| 5-HHB-OCF3 | (6-1) | 6% |
| 3-HH2B-OCF3 | (6-4) | 4% |
| 5-HH2B-OCF3 | (6-4) | 3% |
| 3-HHB(F,F)-O | (6-3) | 3% |
| 3-HHB(F,F)-O | (6-3) | 5% |
| 3-HH2B(F)-F | (6-5) | 3% |
| 3-HBB(F)-F | (6-23) | 10% |
| 5-HBB(F)-F | (6-23) | 10% |
| 5-HBBH-3 | (4-1) | 3% |
| 3-HB(F)BH-3 | (4-2) | 3% |

### Use Example 7

| | | |
|---|---|---|
| 2O1-HBB(F,F)XB(F,F)-F | (No.1-2-9) | 5% |
| 5-HB-CL | (5-2) | 13% |
| 3-HHB-1 | (3-1) | 6% |
| 3-HHB(F,F)-F | (6-3) | 9 % |
| 3-HBB(F,F)-F | (6-24) | 20% |
| 5-HBB(F,F)-F | (6-24) | 13% |
| 3-HHEB(F,F)-F | (6-12) | 10% |
| 4-HHEB(F,F)-F | (6-12) | 4% |
| 5-HHEB(F,F)-F | (6-12) | 4% |
| 2-HBEB(F,F)-F | (6-39) | 4% |
| 3-HBEB(F,F)-F | (6-39) | 4% |
| 5-HBEB(F,F)-F | (6-39) | 3% |
| 3-HHBB(F,F)-F | (7-6) | 5% |

### Use Example 8

| | | |
|---|---|---|
| 2O1-HB(F,F)XB(F,F)-CF3 | (No.1-1-9) | 6% |
| 3-HB-CL | (5-2) | 4% |
| 5-HB-CL | (5-2) | 5% |
| 3-HHB-OCF3 | (6-1) | 4% |
| 3-H2HB-OCF3 | (6-13) | 4% |
| 5-H4HB-OCF3 | (6-19) | 13% |
| V-HHB(F)-F | (6-2) | 5% |
| 3-HHB(F)-F | (6-2) | 3% |
| 5-HHB (F)-F | (6-2) | 6% |
| 3-H4HB(F,F)-CF3 | (6-21) | 8% |
| 5-H4HB(F,F)-CF3 | (6-21) | 8% |
| 5-H2HB(F,F)-F | (6-15) | 6% |
| 5-H4HB(F,F)-F | (6-21) | 8 % |
| 2-H2BB(F)-F | (6-26) | 5% |
| 3-H2BB(F)-F | (6-26) | 10% |
| 3-HBEB(F,F)-F | (6-39) | 5% |

### Use Example 9

| 1O1-HB(F,F)XB(F)B(F,F)-F | (No.1-3-7) | 7 % |
|---|---|---|
| 5-HB-CL | (5-2) | 17% |
| 7-HB(F,F)-F | (5-4) | 5% |
| 3-HB-O2 | (2-5) | 17% |
| 3-HHB-1 | (3-1) | 11% |
| 3-HHB-O1 | (3-1) | 7% |
| 2-HHB (F)-F | (6-2) | 6% |
| 3-HHB(F)-F | (6-2) | 8 % |
| 5-HHB (F)-F | (6-2) | 7 % |
| 3-HHB (F, F)-F | (6-3) | 6% |
| 3-H2HB(F,F)-F | (6-15) | 4% |
| 4-H2HB(F,F)-F | (6-15) | 5% |

NI = 72.0°C; η = 21.8 mPa·s; Δn = 0.085; Δε = 5.8.

### Use Example 10

| | | |
|---|---|---|
| 1O1-HB(F,F)XB(F,F)-F | (No.1-1-4) | 6 % |
| 101-HBBXB(F,F)-F | (No.1-2-1) | 4% |
| 5-HB-CL | (5-2) | 3% |
| 7-HB(F)-F | (5-3) | 6% |
| 3-HB-O2 | (2-5) | 15% |
| 3-HHEB-F | (6-10) | 10% |
| 5-HHEB-F | (6-10) | 9 % |
| 3-HHEB(F,F)-F | (6-12) | 10% |
| 4-HHEB(F,F)-F | (6-12) | 6% |
| 3-GHB(F,F)-F | (6-109) | 4% |
| 4-GHB(F,F)-F | (6-109) | 7% |
| 5-GHB(F,F)-F | (6-109) | 8 % |
| 2-HHB(F,F)-F | (6-3) | 5% |
| 3-HHB (F, F)-F | (6-3) | 7% |

NI = 70.7°C; η = 29.1 mPa·s; Δn = 0.079; Δε = 9.6.

### Use Example 11

| | | |
|---|---|---|
| 2O1-HB(F,F)XB(F)B(F,F)-OCF3 | (No.1-3-23) | 4 % |
| 3-HB-O1 | (2-5) | 12% |
| 3-HH-4 | (2-1) | 4 % |
| 3-HB(2F,3F)-O2 | (9-1) | 11% |
| 5-HB(2F,3F)-O2 | (9-1) | 12% |
| 2-HHB (2F,3 F)-1 | (10-1) | 12% |
| 3-HHB (2F,3 F)-1 | (10-1) | 13% |
| 3-HHB(2F,3F)-O2 | (10-1) | 12% |
| 5-HHB(2F,3F)-O2 | (10-1) | 13% |
| 3-HHB-1 | (3-1) | 7 % |

### Use Example 12

| | | |
|---|---|---|
| 201-chB(F,F)XB(F,F)-F | (No.1-1-23) | 7% |
| 2-HH-5 | (2-1) | 3% |
| 3-HH-4 | (2-1) | 13% |
| 3-HH-5 | (2-1) | 3% |
| 3-HB-O2 | (2-5) | 11% |
| 3-H2B(2F,3F)-O2 | (9-4) | 14% |
| 5-H2B(2F,3F)-O2 | (9-4) | 14% |
| 3-HHB(2F,3CL)-O2 | (10-12) | 4% |
| 2-HBB(2F,3F)-O2 | (10-7) | 5% |
| 3-HBB(2F,3F)-O2 | (10-7) | 7% |
| 5-HBB(2F,3F)-2 | (10-7) | 9% |
| 3-HHB-1 | (3-1) | 3% |
| 3-HHB-3 | (3-1) | 4% |
| 3-HHB-O1 | (3-1) | 3% |

### Use Example 13

| | | |
|---|---|---|
| 2O1-HB(2F,3F)XB(F,F)-F | (No.1-1-7) | 8 % |
| 2-HH-3 | (2-1) | 21% |
| 3-HH-4 | (2-1) | 8 % |
| 1-BB-3 | (2-8) | 8 % |
| 3-HB-O2 | (2-5) | 3 % |
| 3-BB(2F,3F)-O2 | (9-3) | 7 % |
| 5-BB(2F,3F)-O2 | (9-3) | 4 % |
| 2-HH1OB(2F,3F)-O2 | (10-5) | 11% |
| 3-HH1OB(2F,3F)-O2 | (10-5) | 17% |
| 3-HBB(2F,3CLF)-O2 | (10-13) | 3% |
| 3-HHB-1 | (3-1) | 5% |
| 3-HHB-O1 | (3-1) | 3% |
| 5-B(F)BB-2 | (3-8) | 2% |

### Use Example 14

| | | |
|---|---|---|
| 2O2-HB(F,F)XB(F,F)-F | (No.1-1-18) | 4 % |
| 2O1-HBB(F,F)XB(F,F)-F | (No.1-2-9) | 3% |
| 2-HH-3 | (2-1) | 15% |
| 7-HB-1 | (2-5) | 8 % |
| 5-HB-O2 | (2-5) | 8% |
| 3-HB(2F,3F)-O2 | (9-1) | 15% |
| 5-HB(2F,3F)-O2 | (9-1) | 15% |
| 3-HHB(2F,3CL)-O2 | (10-12) | 3% |
| 4-HHB(2F,3CL)-O2 | (10-12) | 3% |
| 5-HHB(2F,3CL)-O2 | (10-12) | 4% |
| 3-HH1OCro(7F,8F)-5 | (13-6) | 6% |
| 5-HBB(F)B-2 | (4-5) | 8% |
| 5-HBB(F)B-3 | (4-5) | 8% |

### Use Example 15

| | | |
|---|---|---|
| 2O1-HB(F,F)XB(F,F)-CF3 | (No.1-1-9) | 6% |
| 3-HH-4 | (2-1) | 5% |
| 1-BB-3 | (2-8) | 6% |
| 3-HH-V | (2-1) | 20% |
| 3-BB(2F,3F)-O2 | (9-3) | 11% |
| 5-BB(2F,3F)-O2 | (9-3) | 5% |
| 2-HH1OB(2F,3F)-O2 | (10-5) | 20% |
| 3-HH1OB(2F,3F)-O2 | (10-5) | 13% |
| 3-HHB-1 | (3-1) | 8 % |
| 5-B(F)BB-2 | (3-8) | 6% |

### Use Example 16

| | | |
|---|---|---|
| 2O1-HB(F,F)XB(F)B(F,F)-OCF3 | (No.1-3-23) | 5% |
| 2-HH-3 | (2-1) | 5% |
| 3-HH-V1 | (2-1) | 8% |
| 1V2-HH-1 | (2-1) | 8% |
| 1V2-HH-3 | (2-1) | 5% |
| 3-BB(2F,3F)-O2 | (9-3) | 8% |
| 5-BB(2F,3F)-O2 | (9-3) | 5% |
| 3-H1OB(2F,3F)-O2 | (9-5) | 7% |
| 2-HH1OB(2F,3F)-O2 | (10-5) | 7% |
| 3-HH1OB(2F,3F)-O2 | (10-5) | 19% |
| 3-HDhB(2F,3F)-O2 | (10-3) | 7% |
| 3-HHB-1 | (3-1) | 3% |
| 3-HHB-3 | (3-1) | 2% |
| 2-BB(2F,3F)B-3 | (11-1) | 11% |

### Use Example 17

| | | |
|---|---|---|
| 1O1-HB(F,F)XB(F,F)-F | (No.1-1-4) | 4 % |
| 1V2-BEB(F,F)-C | (8-15) | 6% |
| 3-HB-C | (8-1) | 17% |
| 2-BTB-1 | (2-10) | 9 % |
| 5-HH-VFF | (2-1) | 23% |
| 3-HHB-1 | (3-1) | 5% |
| VFF-HHB-1 | (3-1) | 10% |
| VFF2-HHB-1 | (3-1) | 12% |
| 3-H2BTB-2 | (3-17) | 5% |
| 3-H2BTB-3 | (3-17) | 5% |
| 3-H2BTB-4 | (3-17) | 4% |

NI = 84.1°C; η = 15.4 mPa·s; Δn = 0.133; Δε = 7.7.

### Use Example 18

| | | |
|---|---|---|
| 101-HBBXB(F,F)-F | (No.1-2-1) | 3% |
| 201-chB(F,F)XB(F,F)-F | (No.1-1-23) | 4% |
| 3-HB-O1 | (2-5) | 10% |
| 3-HH-4 | (2-1) | 5% |
| 3-HH-VFF | (2-1) | 5% |
| 3-HB(2F,3F)-O2 | (9-1) | 9 % |
| 5-HB(2F,3F)-O2 | (9-1) | 10% |
| 2-HHB (2F,3 F)-1 | (10-1) | 11 % |
| 3-HHB (2F,3 F)-1 | (10-1) | 12% |
| 3-HHB(2F,3F)-O2 | (10-1) | 10% |
| 5-HHB(2F,3F)-O2 | (10-1) | 11% |
| 3-HHB-1 | (3-1) | 6% |
| 1-BB-5 | (2-8) | 4 % |

### Use Example 19

| | | |
|---|---|---|
| 1O1-HB(F,F)XB(F)B(F,F)-F | (No.1-3-7) | 4 % |
| 2O1-HB(F,F)XB(F,F)-CF3 | (No.1-1-9) | 4% |
| 2-HH-3 | (2-1) | 13% |
| 7-HB-1 | (2-5) | 8 % |
| 5-HB-O2 | (2-5) | 8% |
| 3-HB(2F,3F)-O2 | (9-1) | 13% |
| 5-HB(2F,3F)-O2 | (9-1) | 13% |
| 3-HHB(2F,3CL)-O2 | (10-12) | 4% |
| 4-HHB(2F,3CL)-O2 | (10-12) | 3% |
| 2-H1OB(2F,3F)-O2 | (9-5) | 3% |
| 3-H1OB(2F,3F)-O2 | (9-5) | 3% |
| 3-HH1OCro(7F,8F)-5 | (13-6) | 5% |
| 5-HBB(F)B-2 | (4-5) | 9 % |
| 5-HBB(F)B-3 | (4-5) | 10% |

### Use Example 20

| | | |
|---|---|---|
| 2O1-HB(2F,3F)XB(F,F)-F | (No.1-1-7) | 5% |
| 2-HH-5 | (2-1) | 3% |
| 3-HH-4 | (2-1) | 15% |
| 3-HH-5 | (2-1) | 4 % |
| 3-HB-O2 | (2-5) | 12% |
| 3-H2B(2F,3F)-O2 | (9-4) | 10% |
| 5-H2B(2F,3F)-O2 | (9-4) | 10% |
| 3-HHB(2F,3CL)-O2 | (10-12) | 5% |
| 2-HBB(2F,3F)-O2 | (10-7) | 5% |
| 3-HBB(2F,3F)-O2 | (10-7) | 7% |
| 5-HBB(2F,3F)-O2 | (10-7) | 6% |
| 3-HHB-1 | (3-1) | 3% |
| 3-HHB-3 | (3-1) | 4% |
| 3-HHB-O1 | (3-1) | 3% |
| 3-HH2B(2F,3F)-O2 | (10-4) | 5% |
| 3-DhB(2F,3F)-O2 | (9-2) | 3% |

### Use Example 21

| | | |
|---|---|---|
| 2O2-HB(F,F)XB(F,F)-F | (No.1-1-18) | 6% |
| 2-HH-3 | (2-1) | 5% |
| 3-HH-V1 | (2-1) | 7% |
| 1V2-HH-1 | (2-1) | 5% |
| 1V2-HH-3 | (2-1) | 4% |
| 3-BB(2F,3F)-O2 | (9-3) | 6% |
| 5-BB(2F,3F)-O2 | (9-3) | 3% |
| 3-H1OB(2F,3F)-O2 | (9-5) | 4% |
| 2-HH1OB(2F,3F)-O2 | (10-5) | 8 % |
| 3-HH1OB(2F,3F)-O2 | (10-5) | 17% |
| 3-HDhB(2F,3F)-O2 | (10-3) | 5% |
| 3-dhBB(2F,3F)-O2 | (10-9) | 3% |
| V-HHB-1 | (3-1) | 5% |
| V2-HHB-1 | (3-1) | 5% |
| 3-HHB-1 | (3-1) | 3% |
| 3-HHB-3 | (3-1) | 3 % |
| 2-BB(2F,3F)B-3 | (11-1) | 11% |

### Use Example 22

| | | |
|---|---|---|
| 2O1-HBB(F,F)XB(F,F)-F | (No.1-2-9) | 7% |
| 2-HH-3 | (2-1) | 18% |
| 3-HH-4 | (2-1) | 7% |
| 1-BB-3 | (2-8) | 8 % |
| 3-HB-O2 | (2-5) | 3% |
| 3-BB(2F,3F)-O2 | (9-3) | 8% |
| 5-BB(2F,3F)-O2 | (9-3) | 5% |
| 2-HH1OB(2F,3F)-O2 | (10-5) | 10% |
| 3-HH1OB(2F,3F)-O2 | (10-5) | 18% |
| 3-HHB-1 | (3-1) | 5% |
| 3-HHB-O1 | (3-1) | 3% |
| 5-B(F)BB-2 | (3-8) | 2% |
| V-HBB-2 | (3-4) | 6% |

### Industrial Applicability

A liquid crystal compound of the invention has excellent physical properties. A liquid crystal composition containing the compound can be widely utilized in a liquid crystal display device to be used in a personal computer, a television or the like.

## Claims

1. A compound, represented by formula (1): 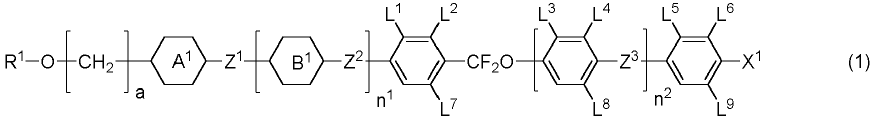 wherein, in formula (1),
R¹ is alkyl having 1 to 12 carbons, and in the R¹, at least one piece of -CH₂- may be replaced by -O-, in which a case where two pieces of -O- are adjacent is excluded, and at least one piece of -CH₂CH₂- may be replaced by -CH=CH- or -C≡C-, and in the groups, at least one hydrogen may be replaced by halogen;
ring A¹ is 1,4-cyclohexylene or 1,4-cyclohexenylene;
ring B¹ is 1,4-cyclohexylene, 1,4-cyclohexenylene, 1,4-phenylene, or 1,4-phenylene in which at least one hydrogen is replaced by halogen, and in the rings, at least one hydrogen may be replaced by halogen;
Z¹, Z² and Z³ are independently a single bond, -CH₂CH₂-, -C≡C-, -CH=CH-, -CF=CF-, -CF₂O-, -OCF₂-, -CH₂O- or -OCH₂-;
L¹, L², L³, L⁴, L⁵, L⁶, L⁷, L⁸ and L⁹ are independently hydrogen or halogen;
X¹ is fluorine, chlorine, -CF₃, -CHF₂, -CH₂F, -OCHF₂, -OCH₂F or -OCF₃;
a is 1, 2 or 3; and
n¹ is 0 or 1, n² is 0 or 1, and a sum of n¹ and n² is 0 or 1.

2. The compound according to claim 1, wherein, in formula (1), R¹ is alkyl having 1 to 12 carbons, alkenyl having 2 to 12 carbons, alkoxyalkyl having 1 to 11 carbons or alkenyloxyalkyl having 2 to 11 carbons.

3. The compound according to claim 1, wherein, in formula (1), Z¹, Z² and Z³ are independently a single bond, -CH₂CH₂-, -C≡C-, -CH=CH- or -CF₂O-.

4. The compound according to claim 1, represented by any one of formulas (1-1) to (1-3): 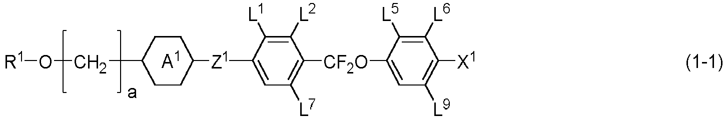 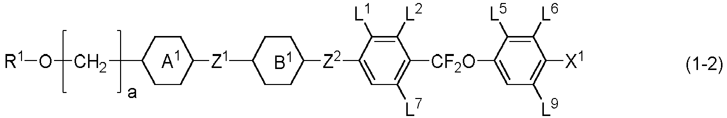 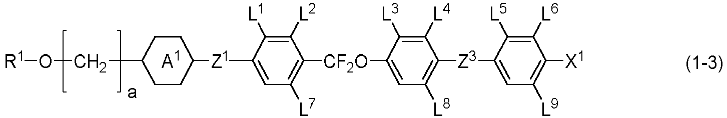 wherein, in formulas (1-1) to (1-3),
R¹ is alkyl having 1 to 12 carbons or alkenyl having 2 to 12 carbons;
ring A¹ is 1,4-cyclohexylene or 1,4-cyclohexenylene;
ring B¹ is 1,4-cyclohexylene, 1,4-cyclohexenylene, 1,4-phenylene, or 1,4-phenylene in which at least one hydrogen is replaced by halogen, and at least one hydrogen to be directly bonded to the rings may be replaced by fluorine;
Z¹, Z² and Z³ are independently a single bond, -CH₂CH₂-, -C≡C-, -CH=CH- or -CF₂O-;
L¹, L², L³, L⁴, L⁵, L⁶, L⁷, L⁸ and L⁹ are independently hydrogen or fluorine;
X¹ is fluorine, -CF₃ or -OCF₃; and
a is 1 or 2.

5. The compound according to claim 1, represented by any one of formulas (1-4) to (1-6): 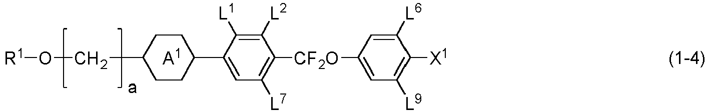 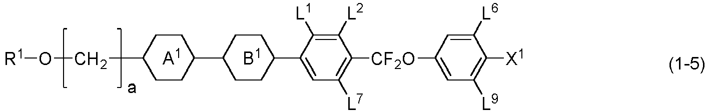 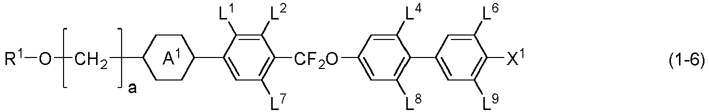 wherein, in formulas (1-4) to (1-6),
R¹ is alkyl having 1 to 12 carbons or alkenyl having 2 to 12 carbons;
ring A¹ is 1,4-cyclohexylene or 1,4-cyclohexenylene;
ring B¹ is 1,4-cyclohexylene, 1,4-cyclohexenylene, 1,4-phenylene, 2-fluoro-1,4-phenylene or 2,6-difluoro-1,4-phenylene, and at least one hydrogen directly bonded to the rings may be replaced by fluorine;
L¹, L², L⁴, L⁶, L⁷, L⁸ and L⁹ are independently hydrogen or fluorine;
X¹ is fluorine, -CF₃ or -OCF₃; and
a is 1 or 2.

6. The compound according to claim 1, represented by any one of formulas (1-7) to (1-14): 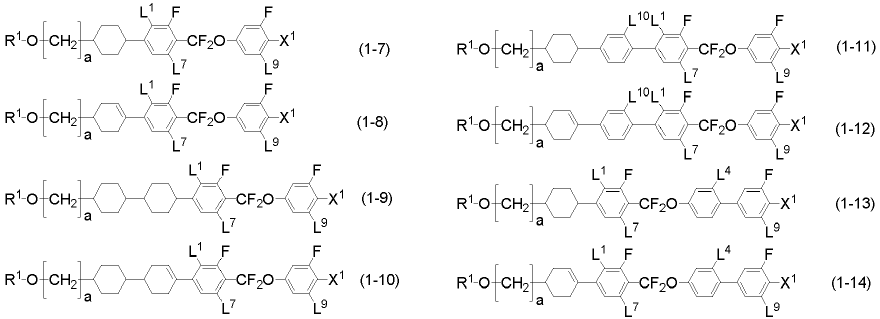 wherein, in formulas (1-7) to (1-14),
R¹ is alkyl having 1 to 12 carbons or alkenyl having 2 to 12 carbons;
L¹, L⁴, L⁷, L⁹ and L¹⁰ are independently hydrogen or fluorine;
X¹ is fluorine, -CF₃ or -OCF₃; and
a is 1 or 2.

7. The compound according to claim 1, represented by any one of formulas (1-15) to (1-18): 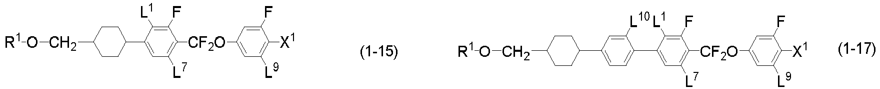 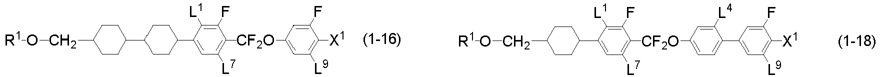 wherein, in formulas (1-15) to (1-18),
R¹ is alkyl having 1 to 12 carbons or alkenyl having 2 to 12 carbons;
L¹, L⁴, L⁷, L⁹ and L¹⁰ are independently hydrogen or fluorine; and
X¹ is fluorine, -CF₃ or -OCF₃.

8. A liquid crystal composition, containing at least one compound according to claim 1.

9. The liquid crystal composition according to claim 8, further containing at least one compound selected from the group of compounds represented by formulas (2) to (4): 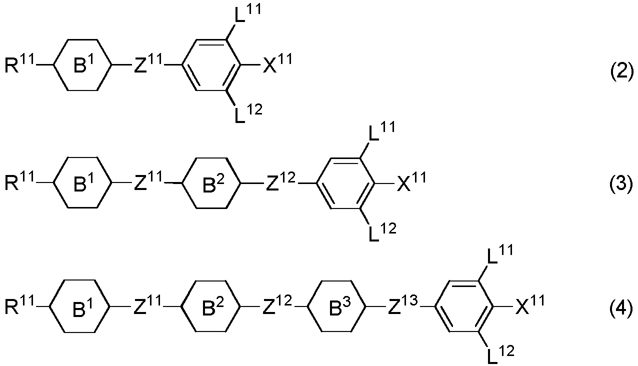 wherein, in formulas (2) to (4),
R¹¹ is alkyl having 1 to 10 carbons or alkenyl having 2 to 10 carbons, and in the R¹¹, at least one hydrogen may be replaced by fluorine, and in the groups, at least one piece of -CH₂- may be replaced by -O-, in which a case where two pieces of -O- are adjacent is excluded;
X¹¹ is fluorine, chlorine, -OCF₃, -OCH₂, -CF₃, -CHF₂, -CH₂F, -OCF₂CHF₂ or -OCF₂CHFCF₃;
ring B¹, ring B² and ring B³ are independently 1,4-cyclohexylene, 1,4-phenylene, 1,4-phenylene in which at least one hydrogen is replaced by fluorine, tetrahydropyran-2,5-diyl, 1,3-dioxane-2,5-diyl or pyrimidine-2,5-diyl;
Z¹¹, Z¹² and Z¹³ independently represent a single bond, -CH₂CH₂-, -CH=CH-, -C≡C-, -COO-, -CF₂O-, -OCF₂-, -CH₂O- or -(CH₂)₄-; and
L¹¹ and L¹² are independently hydrogen or fluorine, in which, when at least one of Z¹¹, Z¹² and Z¹³ is -CF₂O-, R¹¹ is alkyl having 1 to 10 carbons, alkenyl having 2 to 10 carbons, alkoxy having 1 to 9 carbons or alkenyloxy having 2 to 9 carbons, and in the groups, at least one hydrogen may be replaced by fluorine.

10. The liquid crystal composition according to claim 8, further containing at least one compound selected from the group of compounds represented by formula (5): 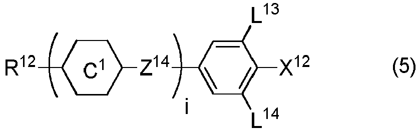 wherein, in formula (5),
R¹² is alkyl having 1 to 10 carbons or alkenyl having 2 to 10 carbons, and in the R¹², at least one hydrogen may be replaced by fluorine, and at least one piece of -CH₂- may be replaced by -O-, in which a case where two pieces of -O- are adjacent is excluded;
X¹² is -C≡N or -C≡C-CN;
ring C¹ is 1,4-cyclohexylene, 1,4-phenylene in which at least one hydrogen may be replaced by fluorine, tetrahydropyran-2,5-diyl, 1,3-dioxane-2,5-diyl or pyrimidine-2,5-diyl;
Z¹⁴ is a single bond, -CH₂CH₂-, -C≡C-, -COO-, -CF₂O-, -OCF₂- or -CH₂O-;
L¹³ and L¹⁴ are independently hydrogen or fluorine; and
i is 1, 2, 3 or 4.

11. The liquid crystal composition according to claim 8, further containing at least one compound selected from the group of compounds represented by formulas (6) to (12): 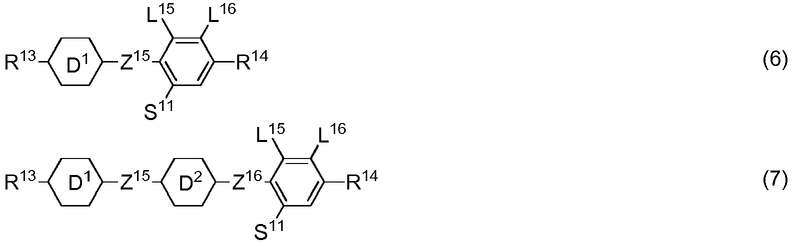 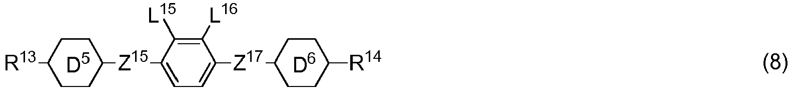 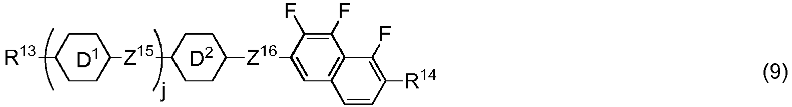 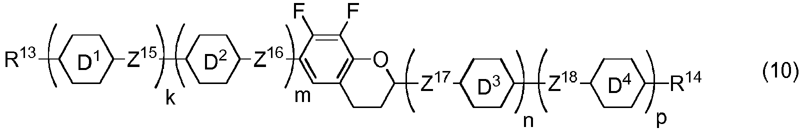 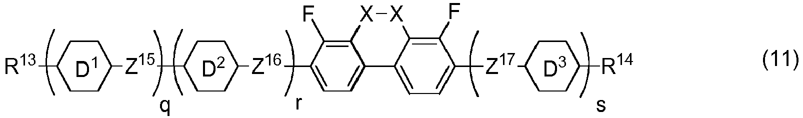 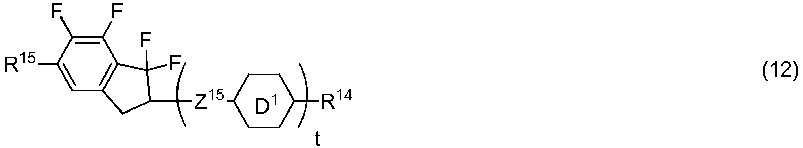 wherein, in formulas (6) to (12),
R¹³ and R¹⁴ are independently alkyl having 1 to 10 carbons or alkenyl having 2 to 10 carbons, and in the groups, at least one piece of -CH₂- may be replaced by -O-, in which a case where two pieces of -O- are adjacent is excluded, and at least one hydrogen may be replaced by fluorine;
R¹⁵ is hydrogen, fluorine, alkyl having 1 to 10 carbons or alkenyl having 2 to 10 carbons, and in the R¹⁵, at least one piece of -CH₂- may be replaced by -O-, in which a case where two pieces of -O- is adjacent is excluded, and at least one hydrogen may be replaced by fluorine;
S¹¹ is hydrogen or methyl;
X is -CF₂-, -O- or -CHF-;
ring D¹, ring D², ring D³ and ring D⁴ are independently 1,4-cyclohexylene, 1,4-cyclohexenylene, 1,4-phenylene in which at least one hydrogen may be replaced by fluorine, tetrahydropyran-2,5-diyl or decahydronaphthalene-2,6-diyl;
ring D⁵ and ring D⁶ are independently 1,4-cyclohexylene, 1,4-cyclohexenylene, 1,4-phenylene, tetrahydropyran-2,5-diyl or decahydronaphthalene-2,6-diyl;
Z¹⁵, Z¹⁶, Z¹⁷ and Z¹⁸ are independently a single bond, -CH₂CH₂-, -COO-, -CH₂O- or -OCF₂CH₂CH₂-;
L¹⁵ and L¹⁶ are independently fluorine or chlorine; and
j, k, m, n, p, q, r and s are independently 0 or 1, a sum of k, m, n and p is 1 or 2, a sum of q, r and s is 0, 1, 2 or 3 and t is 1, 2 or 3.

12. The liquid crystal composition according to claim 8, further containing at least one compound selected from the group of compounds represented by formulas (13) to (15): 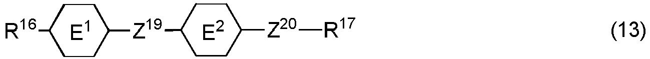 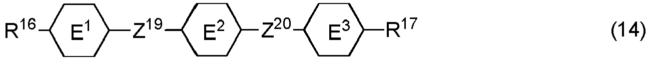 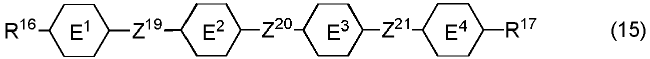 wherein, in formulas (13) to (15),
R¹⁶ and R¹⁷ are independently alkyl having 1 to 10 carbons or alkenyl having 2 to 10 carbons, and in the groups, at least one piece of -CH₂- may be replaced by -O-, in which a case where two pieces of -O- are adjacent is excluded, and in the groups, at least one hydrogen may be replaced by fluorine;
ring E¹, ring E², ring E³ and ring E⁴ are independently 1,4-cyclohexylene, 1,4-phenylene, 2-fluoro-1,4-phenylene, 2,5-difluoro-1,4-phenylene or pyrimidine-2,5-diyl; and
Z¹⁹, Z²⁰ and Z²¹ are independently a single bond, -CH₂CH₂-, -CH=CH-, -C≡C- or -COO-.

13. The liquid crystal composition according to claim 8, further containing at least one selected from the group of a polymerizable compound, an optically active compound, an antioxidant, an ultraviolet light absorber, a light stabilizer, a heat stabilizer and an antifoaming agent.

14. A liquid crystal display device, including the liquid crystal composition according to claim 8.

## Patentansprüche

1. Verbindung, die durch Formel (1) wiedergegeben ist: 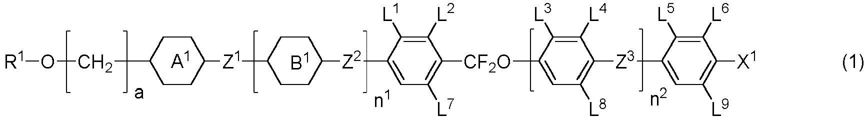 wobei in Formel (1)
R¹ Alkyl mit 1 bis 12 Kohlenstoffen ist und in dem R¹ mindestens ein -CH₂- durch -O-ersetzt sein kann, wobei ein Fall, in dem zwei -O- aneinandergrenzen, ausgeschlossen ist und mindestens ein -CH₂CH₂- durch -CH=CH- oder -C≡C- ersetzt sein kann und in den Gruppen mindestens ein Wasserstoff durch Halogen ersetzt sein kann;
Ring A¹ 1,4-Cyclohexylen oder 1,4-Cyclohexenylen ist;
Ring B¹ 1,4-Cyclohexylen, 1,4-Cyclohexenylen, 1,4-Phenylen oder 1,4-Phenylen, in dem mindestens ein Wasserstoff durch Halogen ersetzt ist, ist und in den Ringen mindestens ein Wasserstoff durch Halogen ersetzt sein kann;
Z¹, Z² und Z³ unabhängig eine Einfachbindung, -CH₂CH₂-, -C≡C-, -CH=CH-, -CF=CF-,-CF₂O-, -OCF₂-, -CH₂O- oder -OCH₂- sind;
L¹, L², L³, L⁴, L⁵, L⁶, L⁷, L⁸ und L⁹ unabhängig Wasserstoff oder Halogen sind;
X¹ Fluor, Chlor, -CF₃, -CHF₂, -CH₂F, -OCHF₂, -OCH₂F oder -OCF₃ ist;
a = 1, 2 oder 3 ist und
n¹ = 0 oder 1 ist, n² = 0 oder 1 ist und eine Summe aus n¹ und n² = 0 oder 1 ist.

2. Verbindung gemäß Anspruch 1, wobei in Formel (1) R¹ Alkyl mit 1 bis 12 Kohlenstoffen, Alkenyl mit 2 bis 12 Kohlenstoffen, Alkoxyalkyl mit 1 bis 11 Kohlenstoffen oder Alkenyloxyalkyl mit 2 bis 11 Kohlenstoffen ist.

3. Verbindung gemäß Anspruch 1, wobei in Formel (1) Z¹, Z² und Z³ unabhängig eine Einfachbindung, -CH₂CH₂-, -C≡C-, -CH=CH- oder -CF₂O- sind.

4. Verbindung gemäß Anspruch 1, die durch eine der Formeln (1-1) bis (1-3) wiedergegeben ist: 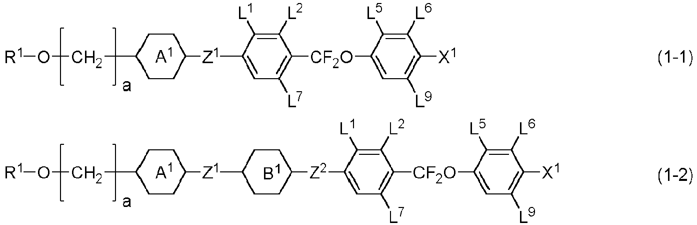 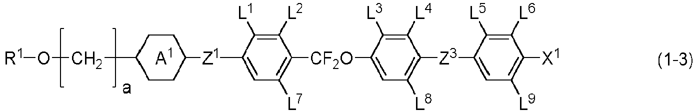 wobei in den Formeln (1-1) bis (1-3)
R¹ Alkyl mit 1 bis 12 Kohlenstoffen oder Alkenyl mit 2 bis 12 Kohlenstoffen ist;
Ring A¹ 1,4-Cyclohexylen oder 1,4-Cyclohexenylen ist;
Ring B¹ 1,4-Cyclohexylen, 1,4-Cyclohexenylen, 1,4-Phenylen oder 1,4-Phenylen, in dem mindestens ein Wasserstoff durch Halogen ersetzt ist, ist und mindestens ein Wasserstoff zur direkten Bindung an die Ringe durch Fluor ersetzt sein kann;
Z¹, Z² und Z³ unabhängig eine Einfachbindung, -CH₂CH₂-, -C≡C-, -CH=CH- oder -CF₂O-sind;
L¹, L², L³, L⁴, L⁵, L⁶, L⁷, L⁸ und L⁹ unabhängig Wasserstoff oder Fluor sind;
X¹ Fluor, -CF₃ oder -OCF₃ ist und
a = 1 oder 2 ist.

5. Verbindung gemäß Anspruch 1, die durch eine der Formeln (1-4) bis (1-6) wiedergegeben ist: 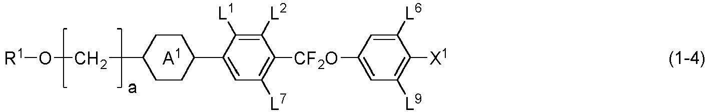 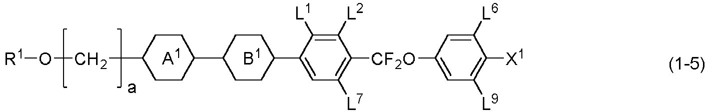 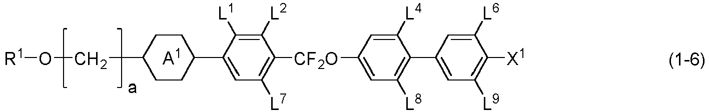 wobei in den Formeln (1-4) bis (1-6)
R¹ Alkyl mit 1 bis 12 Kohlenstoffen oder Alkenyl mit 2 bis 12 Kohlenstoffen ist;
Ring A¹ 1,4-Cyclohexylen oder 1,4-Cyclohexenylen ist;
Ring B¹ 1,4-Cyclohexylen, 1,4-Cyclohexenylen, 1,4-Phenylen, 2-Fluor-1,4-phenylen oder 2,6-Difluor-1,4-phenylen ist und mindestens ein direkt an die Ringe gebundener Wasserstoff durch Fluor ersetzt sein kann;
L¹, L², L⁴, L⁶, L⁷, L⁸ und L⁹ unabhängig Wasserstoff oder Fluor sind;
X¹ Fluor, -CF₃ oder -OCF₃ ist und
a = 1 oder 2 ist.

6. Verbindung gemäß Anspruch 1, die durch eine der Formeln (1-7) bis (1-14) wiedergegeben ist: 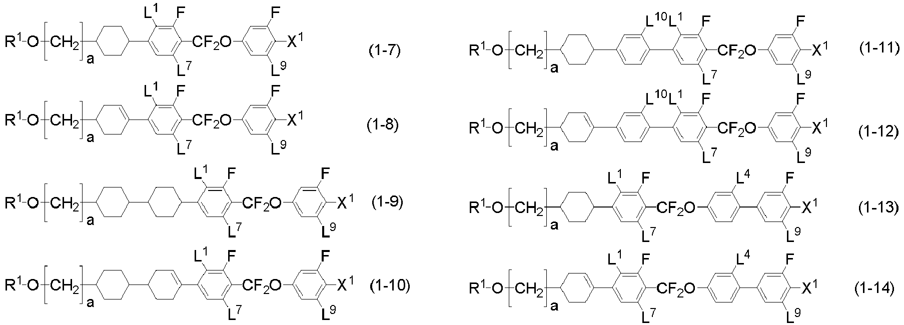 wobei in den Formeln (1-7) bis (1-14)
R¹ Alkyl mit 1 bis 12 Kohlenstoffen oder Alkenyl mit 2 bis 12 Kohlenstoffen ist;
L¹, L⁴, L⁷, L⁹ und L¹⁰ unabhängig Wasserstoff oder Fluor sind;
X¹ Fluor, -CF₃ oder -OCF₃ ist und
a = 1 oder 2 ist.

7. Verbindung gemäß Anspruch 1, die durch eine der Formeln (1-15) bis (1-18) wiedergegeben ist: 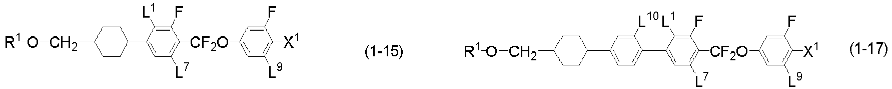 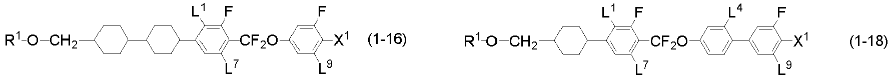 wobei in den Formeln (1-15) bis (1-18)
R¹ Alkyl mit 1 bis 12 Kohlenstoffen oder Alkenyl mit 2 bis 12 Kohlenstoffen ist;
L¹, L⁴, L⁷, L⁹ und L¹⁰ unabhängig Wasserstoff oder Fluor sind und
X¹ Fluor, -CF₃ oder -OCF₃ ist.

8. Flüssigkristallzusammensetzung, die mindestens eine Verbindung gemäß Anspruch 1 enthält.

9. Flüssigkristallzusammensetzung gemäß Anspruch 8, die ferner mindestens eine Verbindung enthält, welche aus der Gruppe von durch die Formeln (2) bis (4) wiedergegebenen Verbindungen ausgewählt ist: 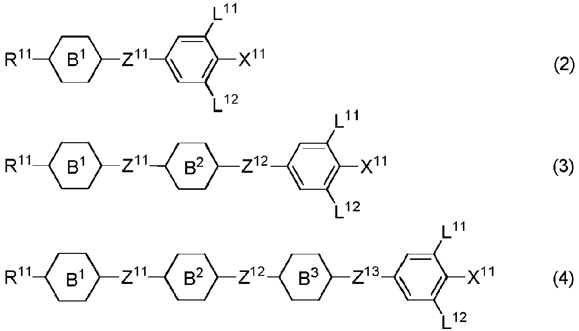 wobei in den Formeln (2) bis (4)
R¹¹ Alkyl mit 1 bis 10 Kohlenstoffen oder Alkenyl mit 2 bis 10 Kohlenstoffen ist und in dem R¹¹ mindestens ein Wasserstoff durch Fluor ersetzt sein kann und in den Gruppen mindestens ein -CH₂- durch -O- ersetzt sein kann, wobei ein Fall, in dem zwei -O-aneinandergrenzen, ausgeschlossen ist;
X¹¹ Fluor, Chlor, -OCF₃, -OCH₂, -CF₃, -CHF₂, -CH₂F, -OCF₂CHF₂ oder -OCF₂CHFCF₃ ist;
Ring B¹, Ring B² und Ring B³ unabhängig 1,4-Cyclohexylen, 1,4-Phenylen, 1,4-Phenylen, in dem mindestens ein Wasserstoff durch Fluor ersetzt ist, Tetrahydropyran-2,5-diyl, 1,3-Dioxan-2,5-diyl oder Pyrimidin-2,5-diyl sind;
Z¹¹, Z¹² und Z¹³ unabhängig eine Einfachbindung, -CH₂CH₂-, -CH=CH-, -C≡C-, -COO-,-CF₂O-, -OCF₂-, -CH₂O- oder -(CH₂)₄- wiedergeben und
L¹¹ und L¹² unabhängig Wasserstoff oder Fluor sind, wobei, wenn mindestens entweder Z¹¹, Z¹² oder Z¹³ -CF₂O- ist, R¹¹ Alkyl mit 1 bis 10 Kohlenstoffen, Alkenyl mit 2 bis 10 Kohlenstoffen, Alkoxy mit 1 bis 9 Kohlenstoffen oder Alkenyloxy mit 2 bis 9 Kohlenstoffen ist und in den Gruppen mindestens ein Wasserstoff durch Fluor ersetzt sein kann.

10. Flüssigkristallzusammensetzung gemäß Anspruch 8, die ferner mindestens eine Verbindung enthält, welche aus der Gruppe von durch Formel (5) wiedergegebenen Verbindungen ausgewählt ist: 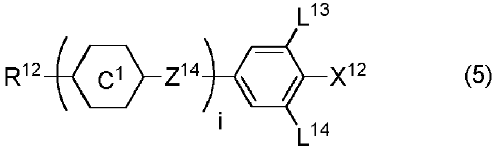 wobei in Formel (5)
R¹² Alkyl mit 1 bis 10 Kohlenstoffen oder Alkenyl mit 2 bis 10 Kohlenstoffen ist und in dem R¹² mindestens ein Wasserstoff durch Fluor ersetzt sein kann und mindestens ein-CH₂- durch -O- ersetzt sein kann, wobei ein Fall, in dem zwei -O- aneinandergrenzen, ausgeschlossen ist;
X¹²-C≡N oder -C≡C-CN ist;
Ring C¹ 1,4-Cyclohexylen, 1,4-Phenylen, in dem mindestens ein Wasserstoff durch Fluor ersetzt sein kann, Tetrahydropyran-2,5-diyl, 1,3-Dioxan-2,5-diyl oder Pyrimidin-2,5-diyl ist;
Z¹⁴ eine Einfachbindung, -CH₂CH₂-, -C≡C-, -COO-, -CF₂O-, -OCF₂-oder -CH₂O- ist;
L¹³ und L¹⁴ unabhängig Wasserstoff oder Fluor sind und
i = 1, 2, 3 oder 4 ist.

11. Flüssigkristallzusammensetzung gemäß Anspruch 8, die ferner mindestens eine Verbindung enthält, welche aus der Gruppe von durch die Formeln (6) bis (12) wiedergegebenen Verbindungen ausgewählt ist: 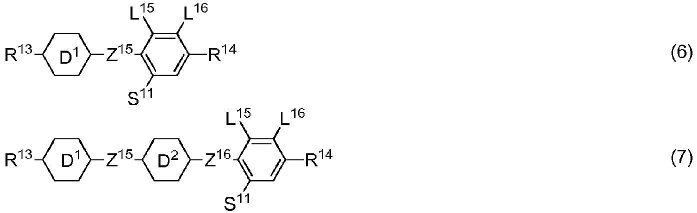 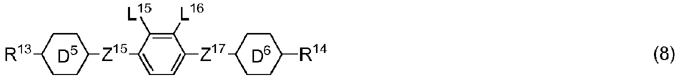 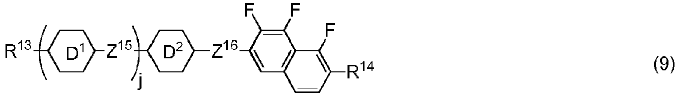 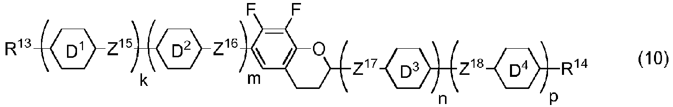 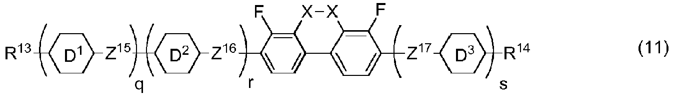 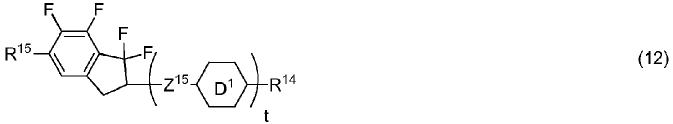 wobei in den Formeln (6) bis (12)
R¹³ und R¹⁴ unabhängig Alkyl mit 1 bis 10 Kohlenstoffen oder Alkenyl mit 2 bis 10 Kohlenstoffen sind und in den Gruppen mindestens ein -CH₂- durch -O- ersetzt sein kann, wobei ein Fall, in dem zwei -O- aneinandergrenzen, ausgeschlossen ist, und mindestens ein Wasserstoff durch Fluor ersetzt sein kann;
R¹⁵ Wasserstoff, Fluor, Alkyl mit 1 bis 10 Kohlenstoffen oder Alkenyl mit 2 bis 10 Kohlenstoffen ist und in dem R¹⁵ mindestens ein -CH₂- durch -O- ersetzt sein kann, wobei ein Fall, in dem zwei -O- aneinandergrenzen, ausgeschlossen ist, und mindestens ein Wasserstoff durch Fluor ersetzt sein kann;
S¹¹ Wasserstoff oder Methyl ist;
X -CF₂-, -O- oder -CHF- ist;
Ring D¹, Ring D², Ring D³ und Ring D⁴ unabhängig 1,4-Cyclohexylen, 1,4-Cyclohexenylen, 1,4-Phenylen, in dem mindestens ein Wasserstoff durch Fluor ersetzt sein kann, Tetrahydropyran-2,5-diyl oder Decahydronaphthalin-2,6-diyl sind;
Ring D⁵ und Ring D⁶ unabhängig 1,4-Cyclohexylen, 1,4-Cyclohexenylen, 1,4-Phenylen, Tetrahydropyran-2,5-diyl oder Decahydronaphthalin-2,6-diyl sind;
Z¹⁵, Z¹⁶, Z¹⁷ und Z¹⁸ unabhängig eine Einfachbindung, -CH₂CH₂-, -COO-, -CH₂O- oder-OCF₂CH₂CH₂- sind;
L¹⁵ und L¹⁶ unabhängig Fluor oder Chlor sind und
j, k, m, n, p, q, r und s unabhängig 0 oder 1 sind, eine Summe aus k, m, n und p = 1 oder 2 ist, eine Summe aus q, r und s = 0, 1, 2 oder 3 ist und t = 1, 2 oder 3 ist.

12. Flüssigkristallzusammensetzung gemäß Anspruch 8, die ferner mindestens eine Verbindung enthält, welche aus der Gruppe von durch die Formeln (13) bis (15) wiedergegebenen Verbindungen ausgewählt ist: 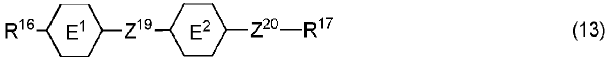 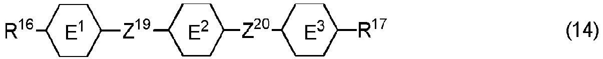 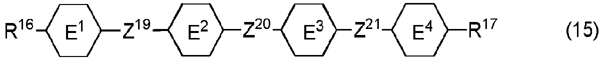 wobei in den Formeln (13) bis (15)
R¹⁶ und R¹⁷ unabhängig Alkyl mit 1 bis 10 Kohlenstoffen oder Alkenyl mit 2 bis 10 Kohlenstoffen sind und in den Gruppen mindestens ein -CH₂- durch -O- ersetzt sein kann, wobei ein Fall, in dem zwei -O- aneinandergrenzen, ausgeschlossen ist und in den Gruppen mindestens ein Wasserstoff durch Fluor ersetzt sein kann;
Ring E¹, Ring E², Ring E³ und Ring E⁴ unabhängig 1,4-Cyclohexylen, 1,4-Phenylen, 2-Fluor-1,4-phenylen, 2,5-Difluor-1,4-phenylen oder Pyrimidin-2,5-diyl sind und
Z¹⁹, Z²⁰ und Z²¹ unabhängig eine Einfachbindung, -CH₂CH₂-, -CH=CH-, -C≡C- oder -COO-sind.

13. Flüssigkristallzusammensetzung gemäß Anspruch 8, die ferner wahlweise mindestens eines aus der Gruppe aus einer polymerisierbaren Verbindung, einer optisch aktiven Verbindung, einem Antioxidationsmittel, einem Ultraviolettlicht-Absorptionsmittel, einem Lichtstabilisator, einem Wärmestabilisator und einem Antischaummittel enthält.

14. Flüssigkristallanzeigevorrichtung, die die Flüssigkristallzusammensetzung gemäß Anspruch 8 aufweist.

## Revendications

1. Composé représenté par la formule (1) : 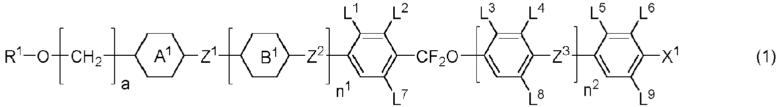 dans lequel, dans la formule (1),
R¹ est un alkyle ayant de 1 à 12 carbones et dans le R¹, au moins un élément -CH₂- peut être remplacé par -O-, dans lequel un cas où deux éléments -O- sont adjacents est exclus, et au moins un élément -CH₂CH₂- peut être remplacé par -CH=CH- ou -C≡C-, et dans les groupes, au moins un hydrogène peut être remplacé par un halogène ;
l'anneau A¹ est le 1,4-cyclohexylène ou le 1,4-cyclohexenylène ;
l'anneau B¹ est le 1,4-cyclohexylène, le 1,4-cyclohexenylène, le 1,4-phénylène ou le 1,4-phénylène dans lequel au moins un hydrogène est remplacé par un halogène et dans les anneaux, au moins un hydrogène peut être remplacé par un halogène ;
Z¹, Z² et Z³ sont de façon indépendante une liaison unique, -CH₂CH₂-, -C≡C-, -CH=CH-, -CF=CF-, -CF₂O-, -OCF₂-, -CH₂O- ou -OCH₂- ;
L¹, L², L³, L⁴, L⁵, L⁶, L⁷, L⁸ et L⁹ sont chacun de façon indépendante un hydrogène ou un halogène ;
X¹ est le fluor, le chlore, -CF₃, -CHF₂, -CH₂F, -OCHF₂,-OCH₂F ou -OCF₃ ;
a est 1, 2 ou 3 ; et
n¹ est 0 ou 1, n² est 0 ou 1, et une somme de n¹ et n² est 0 ou 1.

2. Composé selon la revendication 1, dans lequel, dans la formule (1), R¹ est un alkyle ayant de 1 à 12 carbones, un alkényle ayant de 2 à 12 carbones, un alkoxyalkyle ayant de 1 à 11 carbones ou un alkényloxyalkyle ayant de 2 à 11 carbones.

3. Composé selon la revendication 1, dans lequel, dans la formule (1), Z¹, Z² et Z³ sont de façon indépendante une liaison unique, -CH₂CH₂-, -C≡C-, -CH=CH- et -CF₂O-.

4. Composé selon la revendication 1, représenté par l'une quelconque des formules (1-1) à (1-3) : 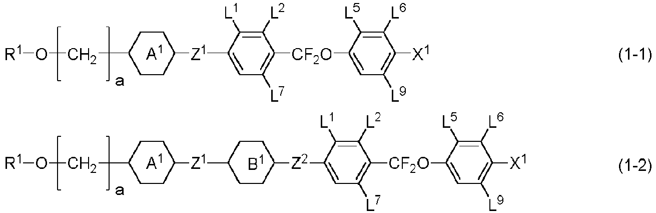 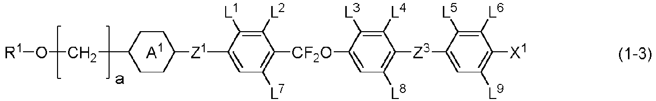 Dans lequel, dans les formules (1-1) à (1-3),
R¹ est un alkyle ayant de 1 à 12 carbones ou un alkényle ayant de 2 à 12 carbones ;
l'anneau A¹ est le 1,4-cyclohexyène ou le 1,4-cyclohexenylène ;
l'anneau B¹ est le 1,4-cyclohexylène, le 1,4-cyclohexenylène, le 1,4-phénylène ou le 1,4-phénylène dans lequel au moins un hydrogène est remplacé par un halogène, et au moins un hydrogène devant être directement lié aux anneaux peut être remplacé par le fluor ;
Z¹, Z² et Z³ sont de façon indépendante une liaison unique, -CH₂CH₂-, -C≡C-, -CH=CH- ou -CF₂O- ;
L¹, L², L³, L⁴, L⁵, L⁶, L⁷, L⁸ et L⁹ sont de façon indépendante l'hydrogène ou le fluor ;
X¹ est le fluor, -CF₃ ou -OCF₃ ; et
a est 1 ou 2.

5. Composé selon la revendication 1, représenté par l'une quelconque des formules (1-4) à (1-6) : 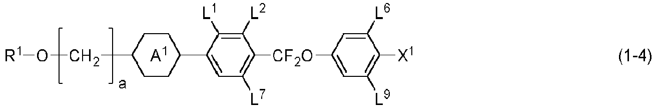 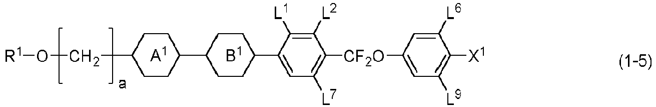 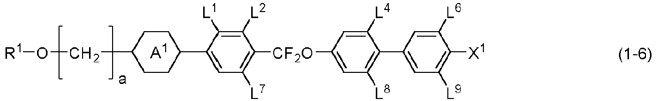 dans lequel, dans les formules (1-4) à (1-6),
R¹ est un alkyle ayant de 1 à 12 carbones ou un alkényle ayant de 2 à 12 carbones ;
l'anneau A¹ est le 1,4-cyclohexylène ou le 1,4-cyclohexenylène ;
l'anneau B¹ est le 1,4-cyclohexylène, le 1,4-cyclohexenylène, le 1,4-phénylène, le 2-fluoro-1,4-phénylène ou le 2,6-difluoro-1,4-phénylène et au moins un hydrogène directement lié aux anneaux peut être remplacé par le fluor ;
L¹, L², L⁴, L⁶, L⁷, L⁸ et L⁹ sont de façon indépendante l'hydrogène ou le fluor ;
X¹ est le fluor, -CF₃ ou -OCF₃ ; et
a est 1 ou 2.

6. Composé selon la revendication 1, représenté par l'une quelconque des formules (1-7) à (1-14) : 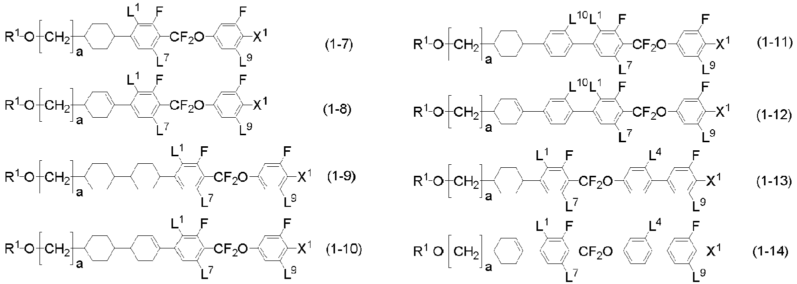 dans lequel, dans les formules (1-7) à (1-14),
R¹ est un alkyle ayant de 1 à 12 carbones ou un alkényle ayant de 2 à 12 carbones ;
L¹, L⁴, L⁷, L⁹ et L¹⁰ sont de façon indépendante l'hydrogène ou le fluor ;
X¹ est le fluor, -CF₃ ou -OCF₃ ; et
a est 1 ou 2.

7. Composé selon la revendication 1, représenté par l'une quelconque des formules (1-15) à (1-18) : 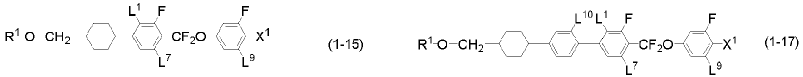 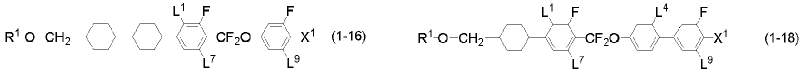 dans lequel, dans les formules (1-15) à (1-18),
R¹ est un alkyle ayant de 1 à 12 carbones ou un alkényle ayant de 2 à 12 carbones ;
L¹, L⁴, L⁷, L⁹ et L¹⁰ sont de façon indépendante l'hydrogène ou le fluor ; et
X¹ est le fluor, -CF₃ ou -OCF₃.

8. Composition à cristaux liquides, contenant au moins un composé selon la revendication 1.

9. Composition à cristaux liquides selon la revendication 8, contenant en outre au moins un composé sélectionné dans le groupe de composés représentés par les formules (2) à (4) : 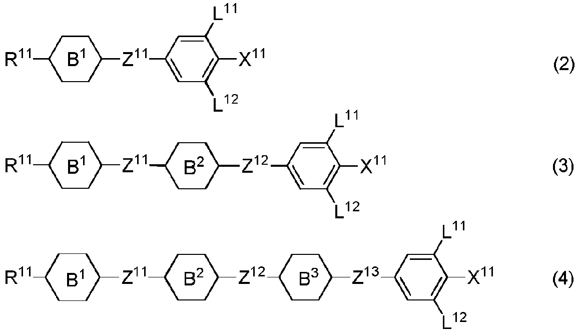 dans laquelle, dans les formules (2) à (4),
R¹¹ est un alkyle ayant de 1 à 10 carbones ou un alkényle ayant de 2 à 10 carbones, et dans le R¹¹, au moins un hydrogène peut être remplacé par le fluor, et dans les groupes, au moins un élément -CH₂- peut être remplacé par -O-, cas dans lequel deux éléments -O- ne peuvent être adjacents ;
X¹¹ est le fluor, le chlore, -OCF₃, -OCH₂, -CF₃, -CHF₂,-CH₂F, -OCF₂CHF₂ ou -OCF₂CHFCF₃ ;
l'anneau B¹, l'anneau B² et l'anneau B³ sont de façon indépendante le 1,4-cyclohexylène, le 1,4-phénylène, le 1,4-phénylène dans lequel au moins un hydrogène est remplacé par le fluor, le tétrahydropyrane-2,5-diyl, le 1,3-dioxane-2,5-diyl ou la pyrimidine-2,5-diyl ;
Z¹¹, Z¹² et Z¹³ représentent de façon indépendante une liaison unique, -CH₂CH₂-, -CH=CH-, -C≡C-, -COO-, -CF₂O-,-OCF₂-, -CH₂O- ou -(CH₂)₄- ; et
L¹¹ et L¹² sont de façon indépendante l'hydrogène ou le fluor, dans laquelle, lorsque l'un de Z¹¹, Z¹² et Z¹³ est-CF₂O-, R¹¹ est un alkyle ayant de 1 à 10 carbones, un alkényle ayant de 2 à 10 carbones, un alkoxy ayant de 1 à 9 carbones ou un alkényloxy ayant de 2 à 9 carbones et dans les groupes, au moins un hydrogène peut être remplacé par le fluor.

10. Composition à cristaux liquides selon la revendication 8, contenant en outre au moins un composé sélectionné dans le groupe de composés représentés par la formule (5) : 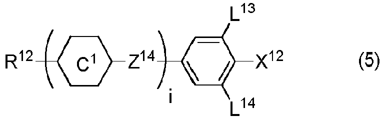 dans laquelle, dans la formule (5),
R¹² est un alkyle ayant de 1 à 10 carbones ou un alkényle ayant de 2 à 10 carbones et dans le R¹², au moins un hydrogène peut être remplacé par le fluor, et au moins un élément -CH₂-peut être remplacé par -O-, cas dans lequel deux éléments -O-ne peuvent être adjacents ;
X¹² est -C≡N ou -C≡C-CN ;
l'anneau C¹ est le 1,4-cyclohexylène, le 1,4-phénylène dans lequel au moins un hydrogène peut être remplacé par le fluor, le tétrahydropyrane-2,5-diyl, le 1,3-dioxane-2,5-diyl ou la pyrimidine-2,5-diyl ;
Z¹⁴ est une liaison unique, -CH₂CH₂-, -C≡C-, -COO-, -CF₂O-, -OCF₂- ou -CH₂O- ;
L¹³ et L¹⁴ sont de façon indépendante l'hydrogène ou le fluor ; et i est 1, 2, 3 ou 4.

11. Composition à cristaux liquides selon la revendication 8, contenant au moins un composé sélectionné dans le groupe de composés représentés par les formules (6) à (12) : 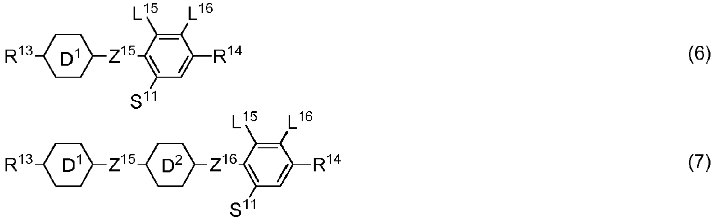 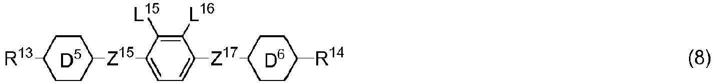 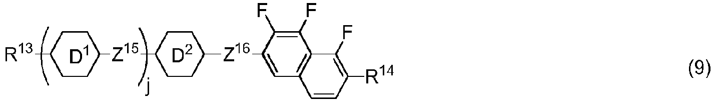 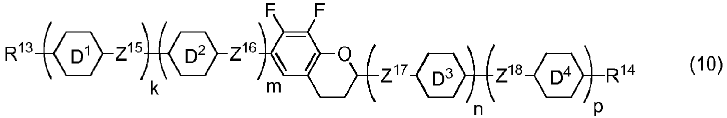 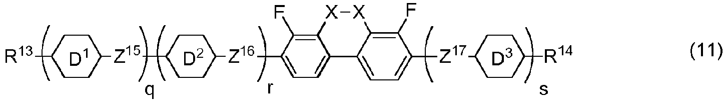 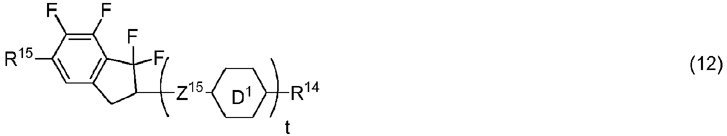 dans laquelle, dans les formules (6) à (12),
R¹³ et R¹⁴ sont de façon indépendante un alkyle ayant de 1 à 10 carbones ou un alkényle ayant de 2 à 10 carbones, et dans les groupes, au moins un élément -CH₂- peut être remplacé par -O-, cas dans lequel deux éléments -O- ne peuvent être adjacents, et au moins un hydrogène peut être remplacé par le fluor ;
R¹⁵ est l'hydrogène, le fluor, un alkyle ayant de 1 à 10 carbones ou un alkényle ayant de 2 à 10 carbones, et dans le R¹⁵, au moins un élément -CH₂- peut être remplacé par -O-, cas dans lequel deux éléments -O- ne peuvent être adjacents, et au moins un hydrogène peut être remplacé par le fluor ;
S¹¹ est l'hydrogène ou le méthyle ;
X est -CF₂-, -O- ou -CHF- ;
l'anneau D¹, l'anneau D², l'anneau D³ et l'anneau D⁴ sont de façon indépendante le 1,4-cyclohexylène, le 1,4-cyclohexenylène, le 1,4-phénylène dans lequel au moins un hydrogène peut être remplacé par le fluor, le tétrahydropyrane-2,5-diyl ou le décahydronaphtalène-2,6-diyl ;
l'anneau D⁵ et l'anneau D⁶ sont de façon indépendante le 1,4-cyclohexylène, le 1,4-cyclohexenylène, le 1,4-phénylène, la tétrahydropyrane-2,5-diyl ou le décahydronaphtalène-2,6-diyl ;
Z¹⁵, Z¹⁶, Z¹⁷ et Z¹⁸ sont de façon indépendante une liaison unique, -CH₂CH₂-, -COO-, -CH₂O- ou -OCF₂CH₂CH₂- ;
L¹⁵ et L¹⁶ sont de façon indépendante le fluor ou le chlore ; et
j, k, m, n, p, q, r et s sont de façon indépendante 0 ou 1, une somme de k, m, n et p est 1 ou 2, une somme de q, r et s est 0, 1, 2 ou 3 et t est 1, 2 ou 3.

12. Composition à cristaux liquides selon la revendication 8, contenant en outre au moins un composé sélectionné dans le groupe de composés représentés par les formules (13) à (15) : 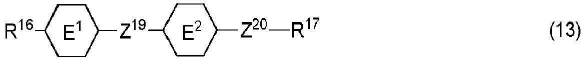 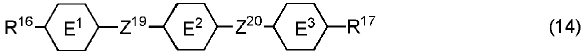 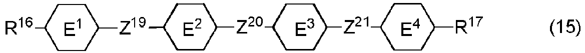 dans laquelle, dans les formules (13) à (15),
R¹⁶ et R¹⁷ sont de façon indépendante un alkyle ayant de 1 à 10 carbones ou un alkényle ayant de 2 à 10 carbones et dans les groupes, au moins un élément -CH₂- peut être remplacé par -O-, cas dans lequel deux éléments -O- ne peuvent être adjacents, et dans les groupes, au moins un hydrogène peut être remplacé par le fluor ;
l'anneau E¹, l'anneau E², l'anneau E³ et l'anneau E⁴ sont de façon indépendante le 1,4-cyclohexylène, le 1,4-phénylène, le 2-fluoro-1,4-phénylène, le 2,5-difluoro-1,4-phénylène ou la pyrimidine-2,5-diyl ; et
Z¹⁹, Z²⁰ et Z²¹ sont de façon indépendante une liaison unique, -CH₂CH₂-, -CH=CH-, -C≡C- ou -COO-.

13. Composition à cristaux liquides selon la revendication 8, contenant en outre au moins un composé sélectionné dans le groupe composé d'un composé polymérisable, un composé optiquement actif, un antioxydant, un absorbant de la lumière ultraviolette, un stabilisateur de lumière, un stabilisateur de chaleur et un agent antimoussant.

14. Dispositif d'affichage à cristaux liquides, incluant la composition à cristaux liquides selon la revendication 8.
